(19) Europäisches Patentamt
European Patent Office
Office européen des brevets

(11) **EP 2 645 154 B1**

(12) **EUROPÄISCHE PATENTSCHRIFT**

(45) Veröffentlichungstag und Bekanntmachung des Hinweises auf die Patenterteilung:
**02.03.2016 Patentblatt 2016/09**

(51) Int Cl.:
***G02C 7/02*** *(2006.01)* ***G02B 3/10*** *(2006.01)*

(21) Anmeldenummer: **13160400.1**

(22) Anmeldetag: **21.03.2013**

(54) **Verfahren zum Auslegen eines Brillenglases und Brillenglas**

Procedure for designing a spectacle lens and spectacle lens

Procédé de dimensionnement d'un verre de lunette et verre de lunette

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **29.03.2012 DE 102012102743**
**29.03.2012 US 201261617316 P**

(43) Veröffentlichungstag der Anmeldung:
**02.10.2013 Patentblatt 2013/40**

(73) Patentinhaber: **Carl Zeiss Vision International GmbH**
**73430 Aalen (DE)**

(72) Erfinder: **Kelch, Gerhard**
**73434 Aalen (DE)**

(74) Vertreter: **Witte, Weller & Partner Patentanwälte mbB**
**Postfach 10 54 62**
**70047 Stuttgart (DE)**

(56) Entgegenhaltungen:
**WO-A1-2012/042030 WO-A2-2008/039802**
**GB-A- 487 546**

**Beschreibung**

Die vorliegende Erfindung betrifft gemäß einem ersten Aspekt ein Verfahren zum Auslegen eines Brillenglases für einen Nutzer, wobei das Brillenglas ein erstes Linsenelement und zumindest ein zweites Linsenelement aufweist, wobei das erste Linsenelement eine Vorderfläche und eine einen ersten Rückflächenbereich und einen zweiten Rückflächenbereich aufweisende Rückfläche aufweist, wobei das zumindest eine zweite Linsenelement eine Vorderfläche und eine Rückfläche aufweist, wobei der zweite Rückflächenbereich des ersten Linsenelements und die Vorderfläche des zweiten Linsenelements aneinander anliegen, wobei eine Vorderfläche des Brillenglases von der Vorderfläche des ersten Linsenelements ausgebildet ist und eine Rückfläche des Brillenglases in einem Grundbereich von dem ersten Rückflächenbereich des ersten Linsenelements ausgebildet ist und in einem Achromatbereich von der Rückfläche des zumindest einen zweiten Linsenelements ausgebildet ist.

Des Weiteren betrifft die vorliegende Erfindung gemäß einem zweiten Aspekt ein Verfahren zum Herstellen eins Brillenglases, das das Verfahren zum Auslegen eines Brillenglases gemäß dem ersten Aspekt aufweist.

Gemäß einem dritten Aspekt betrifft die vorliegende Erfindung ein Computerprogrammprodukt mit Programmcode zum Durchführen des Verfahrens zum Auslegen eines Brillenglases gemäß dem ersten Aspekt der Erfindung.

Des Weiteren betrifft die vorliegende Erfindung gemäß einem vierten Aspekt ein Brillenglas mit einem ersten Linsenelement und zumindest einem zweiten Linsenelement, wobei das erste Linsenelement aus einem ersten Material und das zweite Linsenelement aus einem zweiten Material ausgebildet ist, wobei das erste Material und das zweite Material zumindest teilweise achromatisch zusammenwirken, wobei das erste Linsenelement eine Vorderfläche und eine einen ersten Rückflächenbereich und einen zweiten Rückflächenbereich aufweisende Rückfläche aufweist, wobei das zumindest eine zweite Linsenelement eine Vorderfläche und eine Rückfläche aufweist, wobei der zweite Rückflächenbereich des ersten Linsenelements und die Vorderfläche des zweiten Linsenelements aneinander anliegen, wobei eine Vorderfläche des Brillenglases von der Vorderfläche des ersten Linsenelements ausgebildet ist und eine Rückfläche des Brillenglases in einem Grundbereich von dem ersten Rückflächenbereich des ersten Linsenelements ausgebildet ist und in einem Achromatbereich von der Rückfläche des zumindest einen zweiten Linsenelements ausgebildet ist, wobei der erste Rückflächenbereich des ersten Linsenelements an zumindest einem ersten Übergangspunkt zwischen dem Grundbereich und dem Achromatbereich in einer ersten Querschnittsebene des Brillenglases eine erste Tangente aufweist, wobei die Rückfläche des zumindest einen zweiten Elements an dem zumindest einen ersten Übergangspunkt in der ersten Querschnittsebene eine zweite Tangente aufweist.

Des Weiteren betrifft die vorliegende Erfindung eine Brille mit einer Fassung und mindestens einem Brillenglas gemäß dem vierten Aspekt.

Es ist allgemein bekannt, dass ein Brillenglas aufgrund der Wellenlängenabhängigkeit des Brechungsindexes des optischen Materials, aus dem es gefertigt ist, Farbfehler hervorruft, wenn das Brillenglas aus nur einem Linsenelement gefertigt ist. Zu den Farbfehlern gehört der Farblängsfehler, der unterschiedliche Foki für unterschiedliche Wellenlängen des Lichts erzeugt. Dieser wird auch als Achsenabweichung oder longitudinale chromatische Aberration bezeichnet. Neben dem Farblängsfehler tritt als weiterer Farbfehler der Farbquerfehler auf, der sich durch Farbsäume bzw. Farbränder in der Bildebene, im Fall eines Brillenglases auf der Netzhaut des Auges, äußert, die der Brillenträger wahrnimmt und ab einer gewissen Stärke als störend empfindet. Der Farbquerfehler wird auch als Farbvergrößerungsfehler oder transversale chromatische Aberration bezeichnet.

Eine Abschätzung für die Breite des entstehenden Farbsaums bzw. der Farbquerfehler kann nach gängiger Fachliteratur, etwa Diepes / Blendowske, "Optik und Technik der Brille", Optische Fachveröffentlichung GmbH, Heidelberg, Deutschland, 2005, Kapitel 5.3, mit der Formel :

$$\Delta\delta_{chrom} = \frac{\delta_e}{\nu_e}$$

angegeben werden, wobei $\Delta\delta_{chrom}$ eine Breite des Farbsaums in $\frac{cm}{m}$ ist, die proportional zu einer prismatischen Wirkung $\delta_e$ an der untersuchten Stelle und zu dem Kehrwert der Abbezahl des untersuchten Materials ist. Dabei sind die prismatische Wirkung und die Abbezahl auf dieselbe Wellenlänge bezogen, in obiger Formel auf die e-Linie, d.h. eine Wellenlänge von 546,074 nm.

Bei Brillengläsern mit geringer Stärke macht sich der Farbquerfehler für den Brillenträger nicht störend bemerkbar. Allerdings nehmen die Farbfehler, insbesondere der Farbquerfehler, bei Brillengläsern mit zunehmender prismatischer Wirkung zu. Des Weiteren können Brillengläser, auch wenn das eingeschliffene Rezept keine prismatische Korrektion aufweist, dennoch Farbquerfehler aufgrund prismatischer Nebenwirkungen nach der Prentice-Regel bei großen Blickwinkeln aufweisen, egal ob die zu korrigierende Fehlsichtigkeit auf Kurzsichtigkeit oder Weitsichtigkeit beruht.

Heutzutage werden oft hochbrechende Materialien, insbesondere Kunststoffe oder hochbrechende Glassorten verwendet, um die Brillenglasdicke aus kosmetischen Gründen so dünn wie möglich zu halten. Aber gerade bei Materialien mit einem hohen Brechungsindex wird auch der Farbquerfehler deutlich stärker, weil allgemein mit zunehmendem Brechungsindex eine geringere Abbezahl einhergeht.

Daher ist es wünschenswert, den Farbquerfehler, der durch ein Brillenglas erzeugt wird, zumindest abzuschwächen.

Auf dem Gebiet der Objektive, beispielsweise für Kameras, ist es bekannt, Farbfehler durch sog. Achromaten zu korrigieren. Unter einem Achromaten wird in der Optik ein System aus zumindest zwei Linsen verstanden, die aus Materialien mit unterschiedlicher Abbezahl und/oder unterschiedlichem Brechungsindex und somit unterschiedlichem Dispersionsverhalten, bestehen. Von den beiden Linsen ist die eine eine Sammellinse, die üblicherweise aus einem Material höherer Abbezahl, beispielsweise Kronglas, gefertigt ist, und die andere Linse ist eine Zerstreuungslinse aus einem Material mit kleinerer Abbezahl und somit stärkerer Dispersion als die Sammellinse, wobei diese Linse beispielsweise aus Flintglas gefertigt ist.

Die beiden Linsen sind so geformt und an zueinander komplementären Flächen miteinander verbunden, dass der Farbfehler für zwei Wellenlängen so gut wie möglich aufgehoben ist. Die beiden Linsen wirken dann achromatisch zusammen.

Unter "zumindest teilweise achromatisch miteinander zusammenwirken" bzw. "achromatisch zusammenwirken" wird im Sinne der vorliegenden Erfindung verstanden, dass der Farbquerfehler oder die Farbfehler nicht unbedingt vollständig eliminiert wird bzw. werden, sondern zumindest abgeschwächt wird bzw. werden.

Die zuvor beschriebenen herkömmlichen Achromaten sind zur Verwendung als Brillengläser nicht geeignet. Da diese Achromaten nämlich aus zwei vollständigen Linsen zusammengesetzt sind, besitzen sie auch eine entsprechende Dicke und damit einhergehend ein zu hohes Gewicht.

Die in Druckschrift GB 487 546 A offenbarte Linse besteht aus zwei Linsenelementen, die im Wesentlichen den gleichen Brechungsindex aufweisen, von denen das eine Linsenelement aus Flintglas mit einem Brechungsindex von etwa 1,61 und einer reziproken relativen Dispersion von etwa 36 gefertigt ist. Das andere Linsenelement ist aus Barium-Kronglas mit einem Brechungsindex von etwa 1,61 und einer reziproken relativen Dispersion von etwa 50 gefertigt. Das zuerst genannte Linsenelement ist ein streuendes Linsenelement, und das an zweiter Stelle genannte Linsenelement ist ein sammelndes Linsenelement. Die beiden Linsenelemente sind an zueinander komplementären Flächen miteinander verbunden.

Die so hergestellte Linse weist eine Rückfläche, d.h. dem Auge des Trägers zugewandte Fläche auf, die vollständig durch das zerstreuende Linsenelement gebildet ist, während die Vorderfläche der Linse, d.h. die vom Auge des Trägers abgewandte Seite der Linse teilweise durch die Oberfläche der sammelnden Linse und in ihrem Randbereich durch die Oberfläche der streuenden Linse gebildet wird. Diese Linse leidet weiterhin unter dem Nachteil, dass sie aus zwei Linsenelementen besteht und somit relativ dick und von hohem Gewicht ist.

Mit der Verminderung von Farbfehlern von Brillengläsern befasst sich auch der Fachartikel: "Hybrid diffractive-refractive achromatic spectacle lenses", W. N. Charman, Ophthal. Physiol. Opt. 1994, Band 14, Seiten 389 bis 392. Dort wird betont, dass Achromaten, die eine Linse mit geringem Brechungsindex und hoher Abbe-Zahl und eine Linse mit einem hohen Brechungsindex und geringer Abbe-Zahl aufweisen, von denen die eine Linse zerstreuend und die andere sammelnd ist, als Brillengläser nicht praktikabel sind, da sie dem Wunsch nach geringer Dicke und geringem Gewicht von Brillengläsern zuwiderlaufen. Dort wird zur Behebung der Nachteile von Achromaten vorgeschlagen, eine refraktive Linse mit einem diffraktiven Element zu kombinieren, wobei die Kombination aus der refraktiven Linse und dem diffraktiven Element im Wesentlichen die gleiche Dicke und das gleiche Gewicht haben kann wie die refraktive Linse allein.

Ein Brillenglas, das aus einer refraktiven Linse und einem diffraktiven Element zusammengesetzt ist, ist jedoch hinsichtlich seiner Herstellung sehr aufwändig, da das diffraktive Element mit einer hohen Präzision hergestellt werden muss, um zu vermeiden, dass durch das diffraktive Element andere Abbildungsfehler induziert werden.

Der Erfindung liegt daher die Aufgabe zugrunde, ein verbessertes Verfahren zum Auslegen eines Brillenglases, ein verbessertes Verfahren zum Herstellen eines Brillenglases, ein verbessertes Brillenglas und eine verbesserte Brille anzugeben, das trotz seiner zumindest teilweisen achromatischen Wirkung eine möglichst geringe Dicke und ein möglichst geringes Gewicht aufweist und einem Nutzer bzw. Träger des Brillenglases ein möglichst störungsfreies und angenehmes Sehempfinden ermöglicht.

Gemäß einem ersten Aspekt der Erfindung wird daher vorgeschlagen, das eingangs genannte Verfahren durch die folgenden Schritte weiterzubilden:

- erstes Festlegen eines ersten Materials des ersten Linsenelements und eines zweiten Materials des zumindest einen zweiten Linsenelements,

- Ermitteln zumindest eines ersten Übergangspunktes zwischen dem Grundbereich und dem Achromatbereich auf der Rückfläche des Brillenglases, wobei eine erste Querschnittsebene des Brillenglases durch den zumindest einen ersten Übergangspunkt verläuft,

- erstes Bestimmen eines Keilrandwinkels zwischen der Rückfläche des zumindest einen zweiten Linsenelements und der Vorderfläche des zumindest einen zweiten Linsenelements an dem zumindest einen ersten Übergangspunkt in der ersten Querschnittsebene und Bestimmen eines Knickwinkels zwischen einer Tangente des ersten Rückflächenbereichs in der ersten Querschnittsebene an dem zumindest einen ersten Übergangspunkt
und einer Tangente der Rückfläche des zumindest einen zweiten Linsenelements in der ersten Querschnittsebene an dem zumindest einen ersten Übergangspunkt derart, dass für den Nutzer eine prismatische Wirkung des Brillenglases in dem Grundbereich an dem zumindest einen ersten Übergangspunkt einer prismatischen Wirkung des Brillenglases in dem Achromatbereich an dem zumindest einen ersten Übergangspunkt entspricht,

- zweites Festlegen eines vierten Krümmungsradius der Rückfläche des zumindest einen zweiten Linsenelements in der ersten Querschnittsebene an dem Übergangspunkt,

- zweites Bestimmen eines dritten Krümmungsradius der Vorderfläche des zumindest einen zweiten Linsenelements des zumindest einen zweiten Rückflächenbereichs des ersten Linsenelements in der ersten Querschnittsebene an dem Übergangspunkt derart, dass für einen Nutzer des Brillenglases eine sphärische Wirkung und eine astigmatische Wirkung des Brillenglases in dem Grundbereich an dem Übergangspunkt einer sphärischen Wirkung und einer astigmatische Wirkung des Brillenglases in dem Achromatbereich an dem Übergangspunkt entspricht.

Die im Rahmen der vorliegenden Anmeldung verwendete Terminologie entspricht soweit nicht anders angegeben den Definitionen der Norm DIN EN ISO 13666:1998-11 des DIN Deutschen Institut für Normung e.V.

Demnach bezeichnet ein "Brillenglas" ein Augenglas, das vor dem Auge, aber nicht in Kontakt mit dem Auge getragen wird, vgl. Kapitel 8.1.2 der Norm DIN EN ISO 13666. Im .Rahmen der vorliegenden Anmeldung wird des Weiteren unter dem Begriff "Brillenglas" ein fertiges Brillenglas gemäß Nr. 8.4.6 der Norm DIN EN ISO 13666 verstanden. Demnach handelt es sich um ein Brillenglas mit zwei fertig bearbeiteten optischen Flächen. Es kann sich um ein Brillenglas vor oder nach der Randbearbeitung handeln. Grundsätzlich werden die Brillengläser als sogenannte ungerandete Brillengläser bzw. rohkantige fertige Brillengläser von beispielsweise einem Großlabor an Augenoptik-Fachgeschäfte geliefert. Das ungerandete Brillenglas weist in der Regel eine kreisförmige oder elliptische Randform auf. Erst vor Ort in dem Augenoptik-Fachgeschäft werden die ungerandeten Brillengläser durch Randbearbeitung auf eine bestimmte Fassung angepasst und auf die endgültige Größe und Form gebracht.

Unter dem Begriff "optische Achse" wird eine Gerade verstanden, die auf beiden optischen Flächen eines Brillenglases senkrecht steht und entlang welcher Licht das Brillenglas unabgelenkt durchtritt, vgl. Nr. 4.8 der Norm DIN EN ISO 13666.

Unter einer "Meridianebene" wird gemäß 5.7.2 der DIN EN ISO 13666 jede Ebene verstanden, die die optische Achse eines Brillenglases enthält.

Unter dem Begriff "Abbezahl" wird die abbesche Zahl gemäß Nr. 4.7 der Norm DIN EN ISO 13666 verstanden. Diese kann beispielsweise durch den Ausdruck

$$V = \frac{n_e - 1}{n_{F'} - n_{C'}}$$

beschrieben, werden mit $n_e$ als der Brechzahl der grünen Quecksilber-e-Linie (Wellenlänge 546,07 nm), $n_{F'}$ der Brechzahl der blauen Cadmium-F'-Linie (Wellenlänge: 479,99 nm), und $n_{C'}$ der Brechzahl der roten Cadmium-C'-Linie (Wellenlänge: 643,85 nm).

Unter einer "Querschnittsebene" wird im Rahmen der vorliegenden Anmeldung ein Querschnitt durch das Brillenglas verstanden, der parallel zu einer vorgesehenen Hauptdurchblickrichtung eines Nutzers durch das Brillenglas liegt. Bei der Querschnittsebene kann es sich um eine Meridianebene handeln, wenn das Brillenglas eine optische Achse aufweist. Weist ein Brillenglas keine optische Achse auf, kann die Querschnittsebene den geometrischen Mittelpunkt gemäß Nr. 5.5 der Norm DIN EN ISO 13666 enthalten, nämlich den Schnittpunkt der horizontalen und vertikalen Mittellinie des Kastens, bezogen auf die Form des ungerandeten Brillenglases. Eine "geometrische Mittelachse" verläuft dann durch den geometrischen Mittelpunkt parallel zu einer vorgesehenen Hauptdurchblickrichtung durch das Brillenglas. Somit kann die Querschnittsebene den Durchblickpunkt nach Nr. 5.11 der Norm DIN EN ISO 13666, nämlich den Schnittpunkt der Fixierlinie mit der Rückfläche des Brillenglases enthalten.

Unter der "Fixierlinie" wird dabei nach Nr. 5.32 der Norm DIN EN ISO 13666 diejenige Linie verstanden, die die Mitte der Fovea mit der Mitte der Austrittspupille des Auges verbindet und deren Fortsetzung von der Mitte der Eintrittspupille vorwärts in den Objektraum reicht.

Unter einem "Hauptdurchblickpunkt" wird dabei im Rahmen der vorliegenden Anmeldung derjenige Punkt auf der Rückfläche des Brillenglases verstanden, in dem die Fixierlinie die Rückfläche des Brillenglases schneidet, wenn das Auge eine entspannte Lage einnimmt. Diese wird auch als "Primärstellung" nach Nr. 5.31 der Norm DIN EN ISO 13666 bezeichnet, nämlich eine Stellung des Auges relativ zum Kopf für den Fall, dass die Augen bei Blickrichtung geradeaus ein Objekt anblicken, das sich in Augenhöhe befindet.

Im Falle einer Dezentration gemäß Nr. 5.23 in der Norm DIN EN ISO 13666 des Brillenglases ist der geforderte Zentrierpunkt vom geometrischen Mittelpunkt nach Kastensystem in der Form des gerandeten Brillenglases verschieden, vergleiche Nr. 5.23 für "Dezentration" mit Nr. 5.20 für "Zentrierpunkt" in der Norm DIN EN ISO 13666. Insbesondere kann die Querschnittsebene dann den "Anpasspunkt" nach Nr. 5.24 der Norm DIN EN ISO 13666 aufweisen, nämlich den Punkt auf der Vorderfläche des Brillenglases oder des ungerandeten Brillenglases, der nach Angabe des Herstellers als Bezugspunkt für die Positionierung des Brillenglases vor dem Auge dienen soll. Die Lage des Anpasspunktes ist in der Regel mittels eines Signierzeichens in dem Brillenglas abgelegt und herauslesbar.

Die Begriffe "Vorderfläche" und "Rückfläche" im Rahmen der vorliegenden Anmeldung orientieren sich daran, auf welcher Fläche des ersten Linsenelements das zweite Linsenelement aufgebracht ist. Das zweite Linsenelement ist stets auf der Rückfläche des ersten Linsenelements aufgebracht. Somit ist eine dem zweiten Linsenelement abgewandte Fläche des ersten Linsenelements stets die Vorderfläche des ersten Linsenelements. Diejenige Fläche des zweiten Linsenelements, die an dem ersten Linsenelement anliegt, ist stets die Vorderfläche des zweiten Linsenelements. Die dem ersten Linsenelement abgewandte Seite des zweiten Linsenelements ist stets die Rückfläche des zweiten Linsenelements.

Daraus ergibt sich, dass die Begriffe "Vorderfläche" und "Rückfläche" im Rahmen der vorliegenden Anmeldung mit denen der Norm DIN EN ISO 13666 übereinstimmen können, aber nicht müssen. Unter dem Begriff "Vorderfläche" wird gemäß Nr. 5.8 der Norm DIN EN ISO 13666 die Fläche des Brillenglases verstanden, die bestimmungsgemäß in der Brille vom Auge abgewandt liegt. Unter dem Begriff "Rückfläche" wird gemäß Nr. 5.9 der Norm DIN EN ISO 13666 die Fläche eines Brillenglases verstanden, die bestimmungsgemäß in der Brille dem Auge zugewandt liegt. Die Begriffe der Anmeldung stimmen also mit denen der Norm DIN EN ISO 13666 überein, wenn letztlich das zweite Linsenelement augenseitig des ersten Linsenelements angeordnet sein soll. Soll das zweite Linsenelement auf der dem Auge abgewandten Seite angeordnet sein, ergibt sich gerade die umgekehrte Bedeutung. Die "Vorderfläche" im Rahmen der Anmeldung wäre dann die Rückfläche im Sinne der Norm DIN EN ISO 13666 und die "Rückfläche" im Rahmen der Anmeldung wäre dann die Vorderfläche im Sinne der Norm DIN EN ISO 13666.

Unter dem Begriff "Prismatische Wirkung" wird gemäß Nr. 10.9 der Norm DIN EN ISO 13666 zusammen die prismatische Ablenkung und die Basislage der prismatischen Ablenkung verstanden. Nach Nr. 10.8 ist unter "prismatische Ablenkung" die Richtungsänderung eines Lichtstrahls infolge von Brechung zu verstehen. Ist somit von einer prismatischen Wirkung in Bezug auf eine Querschnittsebene oder in eine Querschnittsebene die Rede, so wird darunter die prismatische Ablenkung in der entsprechenden Querschnittsebene verstanden. Die Basislage ist gemäß Nr. 10.7 der Norm DIN EN ISO 13666 definiert, sie kann beispielsweise in Polarkoordinaten nach dem TABO-Schema, dem dem Durchschnittsfachmann allgemein bekannten halbkreisförmigen Gradbogenschema, angegeben werden.

Unter dem Begriff "dioptrische Wirkung" ist die zusammengenommene fokussierende und die prismatische Wirkung eines Brillenglases zu verstehen, vergleiche Nr. 9.3 der Norm DIN EN ISO 13666.

Der Begriff "fokussierende Wirkung" beschreibt dabei die zusammengenommene sphärische und astigmatische Wirkung eines Brillenglases an einem bestimmten Punkt, vergleiche Nr. 9.2 in der Norm DIN EN ISO 13666. Die Begriffe "sphärische Wirkung" und "astigmatische Wirkung" beziehen sich dabei auf die in der Norm DIN EN ISO 13666 angegebenen Definitionen in den Nummern 11 und 12.

Unter "aneinander anliegen" wird verstanden, dass zwei Flächen miteinander verbunden sind bzw. nebeneinander angeordnet sind und dabei keinen Luftspalt zwischen sich ausbilden. Die beiden Flächen der aneinander anliegenden Linsenelemente sind somit formkomplementär zueinander ausgestaltet.

Unter dem Begriff "an einem Übergangspunkt" wird eine infinitesimal kleine Annäherung an den Übergangspunkt verstanden.

Unter dem "Übergangspunkt" wird derjenige Punkt verstanden, an dem eine Fläche des ersten Linsenelements und des zweiten Linsenelements aneinander anstoßen und somit aufeinander übergehen.

Unter einem "störenden Farbquerfehler" wird ein Grenzwert verstanden, der definiert werden kann über dem ein Farbquerfehler als störend definiert ist und somit zu beseitigen ist. Beispiele für einen solchen Grenzwert können 0,25 cm/m oder etwa 0,5 cm/m sein. Ab wann ein Farbquerfehler tatsächlich von einem Nutzer als störend empfunden wird, ist individuell verschieden. In der Regel wird ein störender Farbquerfehler als ein Farbquerfehler größer als 0,25 cm/m definiert.

Unter dem Begriff "für einen Nutzer" wird die Wirkung des Brillenglases für denjenigen Nutzer verstanden, für den das Brillenglas ausgelegt wird. Eine derartige Berechnung "für einen Nutzer" erfolgt somit basierend auf Nutzerdaten. Insbesondere bezeichnen diese Nutzerdaten eine Lage des angenommenen Augendrehpunkts relativ zu dem Brillenglas. Insbesondere wird die Lage des Augendrehpunkts als Abstand zu der Rückfläche des Brillenglases angegeben. Beispielsweise bei einem rotationssymmetrischen Brillenglas liegt der Augendrehpunkt in einem gewissen Abstand von der Rückfläche des Brillenglases auf dessen optischer Achse.

Bei "Nutzerdaten" kann es sich sowohl um individuelle Nutzerdaten handeln, es kann sich aber auch um Standard-Nutzerdaten handeln. Etwa kann beispielsweise ein Einstärke-Brillenglas mit einer bestimmten dioptrischen Wirkung für Standard-Nutzerdaten ausgelegt werden. Individuelle Nutzerdaten werden beispielsweise von einem Augenoptiker erfasst und an einen Brillenhersteller zur Berechnung eines Designs des Brillenglases übermittelt.

Unter dem Begriff "derart, dass für" bezüglich des Bestimmens bestimmter Wirkungen des Brillenglases für ein Nutzer werden die Wirkungen für einen durch den Augendrehpunkt verlaufenden Hauptstrahl des Nutzers verstanden. Auch eine Änderung des Farbquerfehlers wird für den Nutzer für einen durch den Augendrehpunkt verlaufenden Hauptstrahl des Nutzers zugrunde gelegt.

Unter einer "Normalenebene" wird vorliegend eine Ebene verstanden, die senkrecht auf der Querschnittsebene steht. Eine Normalenebene ist somit beispielsweise eine Ebene, in der auch das Kastenmaß des Brillenglases angegeben wird. Handelt es sich beispielsweise bei der Normalenebene um die X-Y-Ebene, dann könnte eine Querschnittsebene in der Y-Z-Ebene liegen.

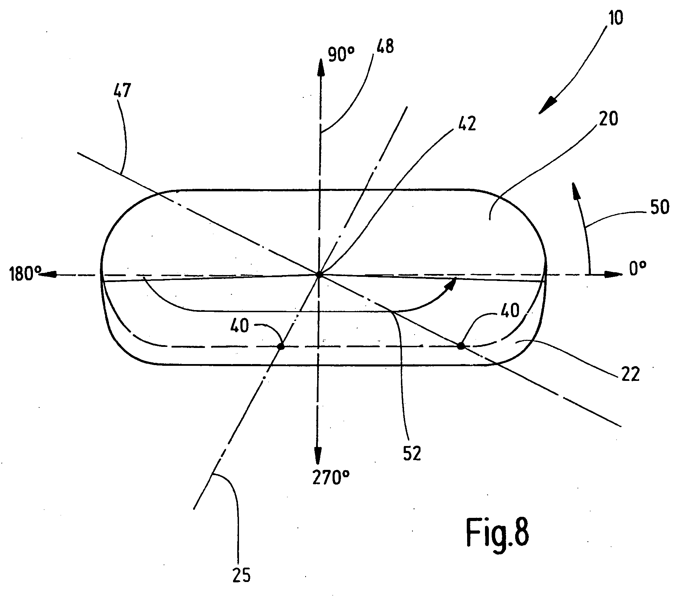

Ein "Achslagenbereich" bzw. eine "Achslage" bezüglich der Lage der Querschnittsebenen wird damit ähnlich zu dem TABO-Schema als eine Winkellage innerhalb der Normalenebene verstanden. Er wird insbesondere in der Figurenbeschreibung mit Blick auf die Fig. 8 erläutert.

Wie bereits voranstehend ausgeführt wurde, wird im Rahmen der vorliegenden Anmeldung unter "zumindest teilweise achromatisch miteinander zusammenwirken" bzw. "achromatisch zusammenwirken" verstanden, dass der Farbquerfehler oder die Farbfehler nicht unbedingt vollständig eliminiert wird bzw. werden, sondern zumindest abgeschwächt wird bzw. werden. Das erste Material des ersten Linsenelements und das zweite Material des zweiten Linsenelements weisen somit unterschiedliche Brechzahlen und/oder unterschiedliche Abbezahlen bei derselben Wellenlänge auf, so dass das erste Linsenelement und das zweite Linsenelement dann zumindest teilweise achromatisch zusammenwirken.

Die Rückfläche des Brillenglases weist erfindungsgemäß einen "Grundbereich" und einen "Achromatbereich" auf. Der "Grundbereich" ist dabei als derjenige Bereich der Rückfläche des Brillenglases definiert, der von dem ersten Rückflächenbereich des ersten Linsenelements gebildet wird. Der "Achromatbereich " ist als derjenige Bereich der Rückfläche definiert, der von der Rückfläche des zweiten Linsenelements gebildet wird. In dem Achromatbereich wirken somit das erste Linsenelement und das zweite Linsenelement zumindest teilweise achromatisch zusammen.

Unter einem "Grunddesign" eines des ersten Linsenelements werden im Rahmen der vorliegenden Anmeldung die das erste Linsenelement beschreibenden Daten mit Ausnahme des Verlaufs des zweiten Rückflächenbereichs verstanden. Das Grunddesign umfasst somit ein Material des ersten Linsenelements, die Daten des Verlaufs bzw. der Geometrie der Vorderfläche, die Daten des Verlaufs bzw. der Geometrie des ersten Rückflächenbereichs und die Mittendicke des ersten Linsenelements. Des Weiteren umfasst es die Neigung der Vorderfläche und des ersten Rückflächenbereichs relativ zueinander bzw. allgemeiner gesprochen die Lage des die Vorderfläche beschreibenden Koordinatensystem und des den ersten Rückflächenbereich beschreibenden Koordinatensystems relativ zueinander.

Der "Kasten" oder das "Kastensystem" ist ein System von Maßen und Definitionen, das auf einem Rechteck beruht, das durch die horizontalen und vertikalen Tangenten an die äußersten Kanten des Brillenglases oder Brillenglas-Halbfertigprodukts gebildet wird. Die "horizontale Mittellinie" ist die Linie, die gleich weit von beiden horizontalen Tangenten entfernt ist. Die "vertikale Mittellinie" ist die Linie, die gleich weit von beiden vertikalen Tangenten entfernt ist. Der Schnittpunkt der vertikalen Mittellinie und der horizontalen Mittellinie wird auch als "geometrischer Mittelpunkt" bezeichnet. Im Falle eines Kastens für ein gerandetes Brillenglas in einer Fassung wird der Schnittpunkt auch als "Mittelpunkt nach Kastensystem" bezeichnet. Entsprechende Definitionen finden sich unter Punkt 5. der Norm DIN EN ISO 13666. Eine weitergehende Normierung des Kastenmaßes findet sich in der Norm DIN EN ISO 8624. Die "Fassungsebene" einer Brille ist diejenige Ebene, die die vertikale Mittellinie des ersten bzw. linken Brillenglases und die vertikale Mittellinie des zweiten bzw. rechten Brillenglases enthält. Eine noch weitergehende Normierung des Kastensystems bzw. Kastenmaßes und der Fassungsebene findet sich auch in der Norm DIN 58208-1.9 erläutert.

Unter der Begrifflichkeit, dass die sphärische bzw. die astigmatische Wirkung in dem Grundbereich und dem Achromatbereich "einander entsprechen" wird verstanden, dass die Wirkungen innerhalb eines Toleranzbereichs von 0,1 dpt relativ zueinander liegen, insbesondere sind sie identisch. Beispielsweise kann eine sphärische Wirkung in dem Grundbereich an dem Übergangspunkt +2,0 dpt betragen. Bei einer sphärischen Wirkung in dem Achromatbereich an dem Übergangspunkt von mehr als +1,9 dpt und weniger als +2,1 dpt würden Wirkungen noch "einander entsprechen". Insbesondere sind die Wirkungen identisch, d.h. in dem vorstehend genannten Beispiel wären dann beide Wirkungen +2,0 dpt. Der Begriff "einander entsprechen" ist also als ein Toleranzbereich von weniger als 0,1 dpt Differenz zu verstehen.

Erfindungsgemäß wird somit vorgeschlagen, an die Rückfläche eines ersten Linsenelements ein zweites Linsenelement anzulegen und das Brillenglas aus diesen beiden Linsenelementen auszubilden. Die beiden Linsenelemente wirken dabei zumindest teilweise achromatisch zusammen. Dies bedeutet, dass das erste Linsenelement und das zumindest eine zweite Linsenelement aus verschiedenen Materialien mit unterschiedlichen Abbezahlen ausgebildet sind.

Für einen Nutzer des Brillenglases kann sich eine Wirkung des Brillenglases sprunghaft ändern, wenn er seine Blicklinie von dem ersten Linsenelement bzw. dem Grundbereich in den Achromatbereich mit dem zumindest einen zweiten Linsenelement wandern lässt. Grundsätzlich sind derartige Wirkungssprünge an einem Übergangspunkt bzw. an einer aus den Übergangspunkten zusammengesetzten Übergangslinie zwischen dem Grundbereich und dem Achromatbereich jedoch für einen Nutzer des Brillenglases störend.

Zwar kann durch das zumindest eine zweite Linsenelement in dem Achromatbereich ein Farbquerfehler deutlich reduziert werden, auf der anderen Seite treten dann jedoch diese eventuell als störend empfundenen Wirkungssprünge an der Überganslinie zwischen Grundbereich und Achromatbereich auf. Mittels des vorgeschlagenen erfindungsgemäßen Verfahrens wird es jedoch möglich, sämtliche Wirkungssprünge zwischen dem Grund- und Achromatbereich für einen Nutzer des Brillenglases zu beseitigen. Das Sehempfinden wird somit deutlich verbessert.

Dies wird insbesondere ermöglicht, indem die bei der herkömmlichen Auslegung von Brillenlinsen geforderte stetige Differenzierbarkeit der Rückfläche des Brillenglases aufgegeben wird. Erfindungsgemäß ist vorgesehen, dass eine Tangente des ersten Rückflächenbereichs des ersten Linsenelements in dem Grundbereich an dem Übergangspunkt in der ersten Querschnittsebene und eine Tangente der Rückfläche des zumindest einen zweiten Linsenelements in dem Achromatbereich an dem Übergangspunkt in der Querschnittsebene einander schneiden können. Mit anderen Worten weist die Rückfläche des Brillenglases dann in dem Übergangspunkt einen Knick auf.

Der Winkel zwischen den Tangenten wird auch als "Knickwinkel" bezeichnet. Überraschenderweise ermöglicht gerade dieser Knick auf der Rückfläche des Brillenglases zusätzliche Freiheitsgrade bei der Auslegung, die eine Auslegung derart ermöglichen, dass Wirkungssprünge in der prismatischen Wirkung, der sphärischen Wirkung als auch der astigmatischen Wirkung in dem Übergangspunkt für den Nutzer nicht vorhanden sind.

Das vorgeschlagene Verfahren ermöglicht es somit, ein Brillenglas bereitzustellen, das die Bereitstellung zumindest eines zweiten Linsenelements nur in Bereichen erfordert, in denen ermittelt wurde, dass der Farbquerfehler störend ist. Bei einem rotationssymmetrischen Brillenglas kann es sich hier beispielsweise um einen peripheren Bereich des Brillenglases handeln. Das erste und das zweite Linsenelement müssen somit nicht vollflächig einander bedecken. Die Rückfläche wird teilweise durch die Rückfläche des ersten Linsenelements gebildet, nämlich in Bereichen, in denen der Farbquerfehler für den Nutzer nicht störend ist In den anderen Bereichen ist auf der Rückfläche des ersten Linsenelements das zumindest eine zweite Linsenelement aufgebracht und in diesen Bereichen ist aufgrund des zumindest teilweisen achromatischen Zusammenwirkens des ersten und des zweiten Linsenelements der Farbquerfehler ebenfalls reduziert. Gleichzeitig wird das Gewicht des gesamten Brillenglases gegenüber einem "Vollachromaten", bei dem zwei Linsenelemente vollflächig miteinander verbunden sind, reduziert, da das zumindest eine zweite Linsenelement nur dort vorgesehen wird, wo es notwendig ist. Darüber hinaus kann durch die Aufgabe der Forderung nach einer stetigen Differenzierbarkeit der Rückfläche des Brillenglases in den Übergangspunkten bzw. auf der Übergangslinie zwischen dem Grundbereich und dem Achromatbereich sowohl ein prismatischer Wirkungssprung als auch ein Sprung in der sphärischen und der astigmatischen Wirkung vermieden werden. Auf diese Weise wird ein störungsfreies und angenehmes Sehempfinden ermöglicht.

Gemäß einem zweiten Aspekt der Erfindung wird des Weiteren ein Verfahren zum Herstellen eines Brillenglases vorgeschlagen, das die Schritte des Auslegens des Brillenglases gemäß dem ersten Aspekt der Erfindung aufweist und des Weiteren die Schritte des Fertigens des ersten Linsenelements, das Fertigen des zumindest einen zweiten Linsenelements und des Verbindens des ersten Linsenelements und des zumindest einen zweiten Linsenelements.

Auf diese Weise kann ein Brillenglas hergestellt werden, das die voranstehend beschriebenen Vorteile aufweist.

Gemäß einem dritten Aspekt der Erfindung wird des Weiteren ein Computerprogrammprodukt mit Programmcode vorgeschlagen, der dazu ausgelegt ist, ein Verfahren gemäß dem ersten Aspekt der Erfindung oder einer seiner Ausführungsformen auszuführen, wenn das Computerprogrammprodukt auf einer Datenverarbeitungseinrichtung ausgeführt wird.

Das Computerprogrammprodukt ermöglicht somit das voranstehend beschriebene Auslegen eines Brillenglases und weist daher dieselben Vorteile auf.

Gemäß einem vierten Aspekt der Erfindung wird vorgeschlagen, das eingangs genannte Brillenglas dadurch weiterzubilden, das in der ersten Querschnittsebene die erste Tangente und die zweite Tangente einander unter einem Knickwinkel schneiden, wobei ein Betrag des Knickwinkels kleiner als 90° ist.

Durch dieses konstruktive Merkmal wird es, wie voranstehend beschrieben wurde, ermöglicht, dass das Brillenglas für einen bestimmten Nutzer keinerlei Wirkungssprünge in dem Übergangspunkt bzw. an der Übergangslinie zwischen Grundbereich und Achromatbereich aufweist. Wie voranstehend ausgeführt wurde, ist die Rückfläche des Brillenglases somit nicht stetig differenzierbar. Mit anderen Worten weist die Rückfläche des Brillenglases in dem ersten Übergangspunkt einen Knick auf. Der Knickwinkel ist also größer als 0°.

Ein solches Brillenglas weist dann die voranstehend beschriebenen Vorteile auf, nämlich dass es trotz eines deutlich verringerten Farbquerfehlers mit relativ geringem Gewicht hergestellt werden kann und dem Nutzer darüber hinaus einen angenehmen Seheindruck vermittelt; da Wirkungssprünge zwischen Grundbereich und Achromatbereich nicht auftreten.

Gemäß einem fünften Aspekt der Erfindung wird eine Brille mit einer Fassung und einem ersten und einem zweiten Brillenglas vorgeschlagen, wobei das erste und/oder das zweite Brillenglas ein Brillenglas nach dem vierten Aspekt ist, wobei die Querschnittsebene oder jede Querschnittsebene des jeweiligen Brillenglases einen Mittelpunkt nach Kastensystem des jeweiligen Brillenglases enthält und normal zu einer Fassungsebene des Brille verläuft, wobei die Fassungsebene die vertikalen Mittellinien des Kastens des ersten und des zweiten Brillenglases enthält.

Die eingangs gestellte Aufgabe wird somit vollkommen gelöst.

In einer Ausführungsform des Verfahrens gemäß dem ersten Aspekt der Erfindung kann vorgesehen sein, dass das erste Material des ersten Linsenelements und das zweite Material des zumindest einen zweiten Linsenelements derart festgelegt werden, dass das erste Linsenelement und das zumindest eine zweite Linsenelement zumindest teilweise achromatisch zusammenwirken.

Es kann somit vorgesehen sein, dass das zumindest eine zweite Linsenelement auch in dem Fall, dass mehr als ein zweites Linsenelement vorgesehen ist, jeweils aus einem zweiten Material gebildet ist. Dieses wirkt dann zumindest teilweise achromatisch mit dem ersten Linsenelement zusammen. Dies bewirkt, dass das erste Material und das zweite Material unterschiedliche Abbezahlen aufweisen. Alternativ kann selbstverständlich auch vorgesehen sein, dass in dem Fall, dass mehr als ein zweites Linsenelement vorgesehen ist, die verschiedenen zweiten Linsenelemente jeweils unterschiedliche Materialien aufweisen. Auch dabei weist jedoch jedes zweite Linsenelement ein Material auf, das eine Abbezahl aufweist, die verschieden von der des ersten Materials des ersten Linsenelements ist.

In einer weiteren Ausführungsform des Verfahrens gemäß dem ersten Aspekt der Erfindung kann vorgesehen sein, dass der Schritt des ersten Festlegens das Festlegen eines Grunddesigns des ersten Linsenelements aufweist, wobei das Grunddesign zumindest die Vorderfläche des ersten Linsenelements und den ersten Rückflächenbereich des ersten Linsenelements aufweist.

Auf diese Weise kann zunächst das Aussehen des Brillenglases in dem Grundbereich bzw. das erste Linsenelement festgelegt werden. Für dieses Grunddesign lassen sich dann für den Nutzer die Farbquerfehler und damit die Lage der Übergangspunkte bzw. des Grundbereichs und des Achromatbereichs ermitteln. Beispielsweise kann das Grunddesign ein derart ausgelegtes und optimiertes Design sein, das eine vorgeschriebene Korrektion für den Nutzer umsetzt.

In einer weiteren Ausführungsform des Verfahrens gemäß dem ersten Aspekt der Erfindung kann vorgesehen sein, dass die Vorderfläche des ersten Linsenelements sphärisch ist und der Schritt des ersten Festlegens ein Festlegen eines ersten Radius der Vorderfläche des ersten Linsenelements aufweist.

Diese Ausführungsform ermöglicht eine geometrisch einfache Ausgestaltung der Vorderfläche des Brillenglases und des ersten Linsenelements. Des Weiteren ist eine Fertigung einer solchen sphärischen Vorderfläche mit einfachen Fertigungsmitteln möglich. Natürlich ist eine solche sphärische Vorderfläche des Brillenglases für sich genommen in der Art und Verteilung der Wirkungen über die Vorderfläche eingeschränkt. Durch eine entsprechende Ausgestaltung der Rückfläche des Brillenglases kann diese jedoch ergänzt werden.

Gemäß einer weiteren Ausführungsform des Verfahrens gemäß dem ersten Aspekt kann vorgesehen sein, dass der erste Rückflächenbereich des ersten Linsenelements in dem Grundbereich sphärisch ist und der Schritt des ersten Festlegens ein Festlegen eines zweiten Radius des ersten Rückflächenbereichs aufweist.

Abhängig von der von dem Brillenglas zu bewirkenden Korrektion für den Nutzer kann ein derartig ausgebildeter erster Rückflächenbereich bereits ausreichend sein. Ein derartiger ausgebildeter erster Rückflächenbereich ließe sich dann wiederum mit einfachen Mitteln fertigen. Insbesondere wenn sowohl die Vorderfläche des ersten Linsenelements als auch der erste Rückflächenbereich des ersten Linsenelements sphärisch sind, weist das erste Linsenelement dann eine optische Achse auf, die durch den Rotationssymmetriepunkt der Vorderflächen und den Rotationssymmetriepunkt des ersten Rückflächenbereichs verläuft.

In einer weiteren Ausführungsform des Verfahrens gemäß dem ersten Aspekt kann vorgesehen sein, dass in dem Schritt des ersten Bestimmens des Knickwinkels der Knickwinkel abhängig von dem ersten Material, dem zumindest einen zweiten Material, einer vorbestimmten Änderung des Farbquerfehlers für den Nutzer des Brillenglases in dem Übergangspunkt, der prismatischen Wirkung des ersten Linsenelements in der ersten Querschnittsebene in dem Grundbereich an dem Übergangspunkt, einem Neigungswinkel der Vorderfläche des ersten Linsenelements gegenüber einer Normalenebene der ersten Querschnittsebene in einem Durchstoßpunkt durch die Vorderfläche des ersten Linsenelements eines von einem Augendrehpunkt des Nutzers ausgehenden Hauptstrahls durch den zumindest einen ersten Übergangspunkt, und einem Neigungswinkel des ersten Rückflächenbereichs gegenüber der Normalenebene in dem zumindest einen ersten Übergangspunkt bestimmt wird.

Eine derartige Bestimmung des Knickwinkels kann auf einfache Weise ausgeführt werden und stellt die physikalischen Verhältnisse ausreichend genau dar, um ein zufriedenstellendes Ergebnis der Auslegung zu liefern. Eine Berechnung für einen Hauptstrahl des Auges des Nutzers, d.h. einen Strahl, der durch das Auge des Nutzers keine optische Ablenkung erfährt und durch einen Augendrehpunkt des Nutzers verläuft, der in den jeweiligen Nutzerdaten abgelegt ist, ermöglicht eine Auslegung des Brillenglases, die den erforderlichen Genauigkeitsanforderungen entspricht.

Die Auslegung des Brillenglases erfolgt dann anhand einer Mehrzahl von Hauptstrahlen, die für verschiedene Blickrichtungen des Auges errechnet werden. Die vorgeschlagene Bestimmung des Knickwinkels ermöglicht es, dass sich die Tangenten des Grundbereichs und des Achromatbereichs an dem Übergangspunkt in der Querschnittsebene schneiden. Die Forderung nach einer stetigen Differenzierbarkeit der Rückfläche des Brillenglases wird aufgegeben. Auf diese Weise ist es möglich, in dem Schritt des ersten Bestimmens die prismatische Wirkung des Achromatbereichs in der Querschnittsebene derart auszulegen, dass sie in dem Übergangspunkt der prismatischen Wirkung des Grundbereichs in der Querschnittsebene entspricht. Somit erhält man über die Höhe des Brillenglases einen kontinuierlichen Verlauf der prismatischen Wirkung ohne Sprungstellen. Verschwenkt der Nutzer das Auge bzw. eine Blickrichtung innerhalb der Querschnittsebene über die Höhe des Brillenglases, beispielsweise wenn er einen Gegenstand in einem peripheren Sichtfeld fixiert, tritt am Übergang von dem Grundbereich zu dem Achromatbereich keinerlei prismatischer Wirkungssprung auf, der für einen Nutzer irritierend wäre oder seinen Seheindruck stört.

In einer weiteren Ausführungsform des Verfahrens gemäß dem ersten Aspekt kann vorgesehen sein, dass der Knickwinkel zumindest näherungsweise mittels der Gleichung

$$KW = Kh - Kv + w1 - w2$$

bestimmt wird, wobei KW der Knickwinkel in Grad, Kh der Keilrandwinkel in Grad, Kv ein weiter Keilwinkel zwischen der Vorderfläche des ersten Linsenelements und der Vorderfläche des zumindest einen zweiten Linsenelements für einen von dem Augendrehpunkt des Nutzers ausgehenden Hauptstrahl in Grad, w1 der Neigungswinkel der Vorderfläche des ersten Linsenelements gegenüber einer Normalenebene der ersten Querschnittsebene in einem Durchstoßpunkt durch die Vorderfläche des ersten Linsenelements eines von dem Augendrehpunkt des Nutzers ausgehenden Hauptstrahls durch den zumindest einen ersten Übergangspunkt, und w2 der Neigungswinkel des ersten Rückflächenbereichs gegenüber der Normalenebene in dem zumindest einen ersten Übergangspunkt ist.

In voranstehend benannter Gleichung sind die Winkel Kh und Kv dabei ohne Beachtung ihres Vorzeichens, d.h. lediglich der Betrag des jeweiligen Winkels in Grad einzusetzen. Die Winkel w1 und w2 weisen ein Vorzeichen auf. Die w1 und w2 sind positiv, wenn sie von der X-Y-Ebene bzw. der Normalenebene in Richtung der positiven Z-Achse bzw. auf das Auge des Nutzers zu zeigen. Für den Knickwinkel KW ergibt sich dann der entsprechende Winkel in der Querschnittsebene. Ein positiver Knickwinkel KW bedeutet somit, dass die Rückfläche des Brillenglases an dem Übergangspunkt einen Knick zu dem Nutzer hin aufweist. Entsprechend anders herum ergibt sich für einen negativen Knickwinkel KW, dass die Rückfläche des Brillenglases in dem Übergangspunkt von dem Nutzer weg abknickt. Mit anderen Worten ist in einer Funktion z(y) in der Querschnittsebene der Rückfläche des Brillenglases die Steigung des Achromatbereichs an dem Übergangspunkt größer als die Steigung des Grundbereichs an dem Übergangspunkt, wenn der Knickwinkel KW positiv ist. Wird die Steigung über den Übergangspunkt kleiner ist der Knickwinkel KW negativ.

Auf diese Weise lässt sich bei der Auslegung eines Brillenglases der Knickwinkel bereits in relativ guter Näherung einfach bestimmen. Mittels dieses durch die voranstehend beschriebene Näherung ermittelten Knickwinkels kann bereits ein Brillenglas gefertigt werden. Darüber hinaus ist selbstverständlich möglich, die so gefundene Näherungslösung als Startwert für eine auf der Näherungslösung aufbauenden Optimierung zu verwenden. Eine auf derartigen, mittels einer voranstehend beschriebenen Näherungslösung gestarteten Optimierung führt schneller zu einem Ergebnis als eine auf anderen oder beliebigen Startwerten aufbauende Optimierung.

Eine voranstehend beschriebene Näherung kann somit die notwendigen Resourcen bei der elektronischen Datenverarbeitung einsparen und die Rechenzeit zum Auffinden der optimierten Lösung verkürzen.

In einer weiteren Ausführungsform der Erfindung gemäß einem ersten Aspekt kann vorgesehen sein, dass in dem Schritt des ersten Bestimmens des Keilrandwinkels der Keilrandwinkel abhängig von dem ersten Material, dem zumindest einen zweiten Material und der vorbestimmten Änderung des Farbquerfehlers des Brillenglases an dem Übergangspunkt bestimmt wird.

Auf diese Weise ist es möglich, nicht nur zu vermeiden, dass ein Sprung in der prismatischen Wirkung einen Übergangspunkt in der Querschnittsebene auftritt, es kann vielmehr durch die Freiheitsgrade sowohl des Knickwinkels als auch des Keilrandwinkels eine vorbestimmte Änderung des Farbquerfehlers an bzw. in dem Übergangspunkt erzielt werden. Auf diese Weise kann festgelegt werden, welche Verringerung der Farbquerfehler in dem Übergangspunkt erfährt. Gleichzeitig ermöglichen diese Freiheitsgrade es, die Verringerung des Farbquerfehlers in dem Übergangspunkt abhängig von der Lage des Übergangspunkts relativ zu einem Rand des Brillenglases und dem als störend festgesetzten Farbquerfehlergrenzwerts, lediglich auf eine Größe festzulegen, die gerade notwendig ist, damit ein Farbquerfehler des Brillenglases in einem möglichst großen Blickfeld nicht als störend empfunden wird. Auf diese Weise kann die Größe bzw. Dicke, d.h. die Erstreckung in Z-Richtung, des zumindest einen zweiten Linsenelements so gering wie nötig gehalten werden. Der Keilrandwinkel und der Knickwinkel stellen somit zwei Freiheitsgrade bei der Auslegung des Brillenglases zur Verfügung, die die Umsetzung einer vorbestimmten Änderung des Farbquerfehlers in dem Übergangspunkt ermöglichen und des Weiteren einen prismatischen Wirkungssprung in dem Übergangspunkt vermeiden.

In einer weiteren Ausführungsform des Verfahrens gemäß dem ersten Aspekt kann vorgesehen sein, dass der Keilrandwinkel zumindest näherungsweise mittels der Gleichung

$$Kh = 2 \cdot \arccos\left(\frac{nr - \cos\left(\frac{ah}{2}\right)}{\sqrt{1 + nr^2 - 2 \cdot nr \cdot \cos\left(\frac{ah}{2}\right)}}\right)$$

bestimmt wird, wobei Kh der Keilrandwinkel in Grad, nr die Brechzahl des zumindest einen zweiten Materials bei einer Berechnungswellenlänge und ah ein Ablenkwinkel in der Querschnittsebene ist, wobei der Ablenkwinkel zumindest näherungsweise mittels der Gleichungen

$$ah = \arctan\left(\frac{Ph}{100}\right) \quad \text{und} \quad Ph = \frac{\Delta \cdot nyg \cdot nyr}{nyg - nyr}$$

bestimmt wird, wobei Δ eine vorbestimmte Änderung des Farbquerfehlers des Brillenglases an dem Übergangspunkt ist, wobei nyg eine Abbezahl des ersten Linsenelements bei der Berechnungswellenlänge ist, und wobei nyr eine Abbezahl des zumindest einen zweiten Linsenelements bei einer Berechnungswellenlänge ist.

Erneut ermöglicht das voranstehend vorgeschlagene Vorgehen ein zumindest näherungsweises Bestimmen des Keilrandwinkels. Auf diese Weise ist es ebenfalls möglich, für den Keilrandwinkel eine Lösung zu finden, die bereits zur Fertigung des Brillenglases verwendet werden kann. Des Weiteren kann diese Lösung als Startwert einer anschließenden Optimierung des Brillenglases dienen. Eine derartige Optimierung kann dann schneller zum Ziel geführt werden, was Rechenzeit und Datenverarbeitungsresourcen ersparen kann.

In einer weiteren Ausführungsform der Erfindung gemäß dem ersten Aspekt kann vorgesehen sein, dass der weitere Keilwinkel zumindest näherungsweise mittels der Gleichung

$$Kv = 2 \cdot \arccos\left(\frac{ng - \cos\left(\frac{av}{2}\right)}{\sqrt{1 + ng^2 - 2 \cdot ng \cdot \cos\left(\frac{av}{2}\right)}}\right)$$

bestimmt wird, wobei Kv der weitere Keilwinkel in Grad, ng die Brechzahl des ersten Materials bei einer Berechnungswellenlänge und av ein weiterer Ablenkwinkel in der ersten Querschnittsebene ist, wobei der Ablenkwinkel zumindest näherungsweise mittels der Gleichungen

$$av = \arctan\left(\frac{Pv}{100}\right) \quad \text{und} \quad Pv = -\frac{\Delta \cdot nyg \cdot nyr}{nyg - nyr} + Pg$$

bestimmt wird, wobei eine vorbestimmte Änderung des Farbquerfehlers des Brillenglases an dem Übergangspunkt ist, wobei nyg eine Abbezähl des ersten Linsenelements bei einer Berechnungswellenlänge ist, wobei nyr eine Abbezahl des zumindest einen zweiten Linsenelements bei der Berechnungswellenlänge ist, und wobei Pg die prismatische Wirkung des ersten Linsenelements in der ersten Querschnittsebene in dem Grundbereich an dem Übergangspunkt ist.

Auf diese Weise ist es ebenfalls möglich, den weiteren Keilwinkel Kv während des Schritts des ersten Bestimmens zumindest näherungsweise zu bestimmen. Auf diese Weise ist es möglich, die Startbedingungen für eine mögliche darauffolgende weitere Optimierung des Brillenglases weiter der letztendlichen Lösung anzunähern und Rechenzeiten und Resourcen zur Berechnung zu schonen. Des Weiteren ist es selbstverständlich möglich, die mittels der voranstehend beschriebenen Formeln gefundene Lösung direkt zur Fertigung des Brillenglases zu verwenden.

Des Weiteren kann in einer Ausführungsform des Verfahrens gemäß dem ersten Aspekt vorgesehen sein, dass in dem Schritt des zumindest einen zweiten Bestimmens des dritten Krümmungsradius der dritte Krümmungsradius zumindest näherungsweise mittels der Gleichung

$$r3 = \frac{(ng - nr) \cdot r2 \cdot r4}{(1 - nr) \cdot r2 + (ng - 1) \cdot r4}$$

bestimmt wird, wobei r3 der dritte Krümmungsradius in mm, r2 der zweite Krümmungsradius in mm ist, und r4 der vierte Krümmungsradius in mm ist, wobei ng eine Brechzahl des ersten Materials bei einer Berechnungswellenlänge ist, und wobei nr eine Brechzahl des zumindest einen zweiten Materials bei der Berechnungswellenlänge ist.

Nach dem Schritt des ersten Bestimmens stehen dem Verfahren zum Auslegen des Brillenglases noch zwei Freiheitsgrade an dem Übergangspunkt, nämlich der dritte Krümmungsradius und der vierte Krümmungsradius zur Verfügung. Mit anderen Worten wird auf diese Weise eine zweite Ableitung der Vorderfläche und der Rückfläche des zweiten Linsenelements in infinitesimal kleiner Annäherung an den Übergangspunkt vorgegeben. Da die Rückfläche des Brillenglases durch die Rückfläche des zweiten Linsenelements in dem Achromatbereich ausgebildet wird, wird diese bei der Auslegung festgelegt. Abhängig von dem weiteren Verlauf der Rückfläche des zweiten Linsenelements kann ggf. die Festlegung des vierten Krümmungsradius an dem Übergangspunkt bereits den weiteren Verlauf der Rückfläche des zweiten Linsenelements bis an den Rand genau definieren. Dies wird im Folgenden noch erläutert. Somit kann mittels des Festlegens des vierten Krümmungsradius, beispielsweise bei einer sphärischen Rückfläche des zweiten Linsenelements bereits die Rückfläche des Brillenglases und damit eine Dicke des Brillenglases, insbesondere an einem Rand des Brillenglases, festgelegt werden. Mit dem dritten Krümmungsradius der Vorderfläche des zweiten Linsenelements bzw. des zweiten Rückflächenbereichs des ersten Linsenelements steht somit noch ein weiterer Freiheitsgrad zur Verfügung, der derart ausgewählt werden kann, dass die sphärische Wirkung und die astigmatische Wirkung des Achromatbereichs an dem Übergangspunkt derjenigen des Grundbereichs an dem Übergangspunkt entspricht. Auf diese Weise ist ein Verlauf der achromatischen Wirkung und der sphärischen Wirkung des Brillenglases über den Übergangspunkt kontinuierlich. Bei einem Verschwenken des Auges bzw. einer Blickrichtung des Auges über dem Übergangspunkt tritt kein Sprung in der sphärischen oder der astigmatischen Wirkung auf. Des Weiteren kann auch mittels des Festlegens des vierten Krümmungsradius und des Bestimmens des dritten Krümmungsradius ein Verlauf des Farbquerfehlers in dem Achromatbereich eingestellt werden, wenn der zweite Rückflächenbereich und/oder die Rückfläche des zweiten Linsenelements durch kreisförmige Teilquerschnitte, eine Torusfläche oder ein Polynom zweiter Ordnung gebildet sind.

Der Schritt des Festlegens des vierten Krümmungsradius und des anschließenden zweiten Bestimmens des dritten Krümmungsradius ermöglichen, wenn der zweite Rückflächenbereich und/oder die Rückfläche des zweiten Linsenelements durch kreisförmige Teilquerschnitte, eine Torusfläche oder ein Polynom zweiter Ordnung gebildet sind, somit zum einen, den Verlauf der Rückfläche des Brillenglases und den Verlauf des Farbquerfehlers über den Achromatbereich festzulegen und dann darauf aufbauend eine sphärische und eine astigmatische Wirkung des Achromatbereichs derart einzustellen, dass an dem Übergangspunkt kein Sprung in der sphärischen und der astigmatischen Wirkung auftritt.

In einer weiteren Ausführungsform des Verfahrens gemäß dem ersten Aspekt kann vorgesehen sein, dass zumindest die Schritte des ersten Bestimmens des Keilrandwinkels und des Knickwinkels und des zumindest einen zweiten Bestimmens des dritten Krümmungsradius in einer Mehrzahl von verschiedenen Querschnittsebenen und in jeder Querschnittsebene der Mehrzahl von Querschnittsebenen für zumindest einen Übergangspunkt durchgeführt werden.

Somit ist es durchaus möglich, nicht nur eine Querschnittsebene sondern eine Mehrzahl verschiedener Querschnittsebenen durch das Brillenglas zu legen und in jeder Querschnittsebene die Auslegungsschritte des Verfahrens durchzuführen. Beispielsweise kann vorgesehen sein, dass 360 jeweils um 1 Grad zueinander geneigte Querschnittsebenen um das Brillenglas gelegt werden und eine Optimierung in jeder der Ebene durchgeführt wird. Auf diese Weise kann eine Auslegung der Optimierung über den gesamten Umfang des Brillenglases erfolgen.

In einer weiteren Ausführungsform des Verfahrens gemäß dem ersten Aspekt kann vorgesehen sein, dass das Brillenglas rotationssymmetrisch zu einer optischen Achse des Brillenglases ist und die Schritte des ersten Bestimmens des Keilrandwinkels und des Knickwinkels und des Bestimmens des dritten Krümmungsradius in nur einer Querschnittsebene durchgeführt werden.

Im Fall, dass das Brillenglas rotationssymmetrisch zu einer optischen Achse des Brillenglases ausgebildet ist, versteht es sich, dass eine Optimierung des Brillenglases in nur einer Querschnittsebene ausreichend ist, um das gesamte Design des Brillenglases bzw. des ersten Linsenelements und des zumindest einen zweiten Linsenelements festzulegen. Auf diese Weise wird eine besonders einfache Auslegung eines Brillenglases bereitgestellt.

Insbesondere können eine Ausführungsform der Erfindung gemäß dem ersten Aspekt vorgesehen sein, dass die erste Querschnittsebene eine Meridianebene des Brillenglases ist. Weist das Brillenglas somit eine optische Achse auf, verläuft die ersten Querschnittsebene bzw. verlaufen die Querschnittsebenen jeweils derart, dass sie die optische Achse enthalten. Im Falle eines rotationssymmetrischen Brillenglases entspricht die optische Achse zudem der Achse der Rotationssymmetrie.

In einer weiteren Ausführungsform des Verfahrens gemäß dem ersten Aspekt kann vorgesehen sein, dass die Querschnittsebene den jeweiligen zumindest einen ersten Übergangspunkt, einen Augendrehpunkt des Nutzers und einen Nulldurchblickpunkt auf der Rückfläche des Brillenglases aufweist.

Auf diese Weise ist für das Verfahren zur Auslegung die Lage der Querschnittsebene unabhängig von einer Geometrie des Brillenglases definiert. Es wird des Weiteren sichergestellt, dass die Auslegung bzw. Optimierung des Brillenglases ausgehend von der entspannten Lage des Auges und der entsprechenden Nulldurchblicklinie für Auslenkungen der Fixierlinie ausgehend von dieser entspannten Lage durchgeführt werden.

In einer weiteren Ausführungsform des Verfahrens gemäß dem ersten Aspekt der Erfindung kann vorgesehen sein, dass die Vorderfläche des ersten Linsenelements und/oder der erste Rückflächenbereich des ersten Linsenelements sphärisch ist.

Des Weiteren kann in einer Ausführungsform des Verfahrens gemäß dem ersten Aspekt vorgesehen sein, dass die Vorderfläche des zumindest einen zweiten Linsenelements und/oder die Rückfläche des zumindest einen zweiten Linsenelements in der ersten Querschnittsebene eine konstante Krümmung aufweist. Wenn die Vorderfläche des zumindest einen zweiten Linsenelements eine konstante Krümmung aufweist, ergibt sich dadurch, dass der zweite Rückflächenbereich ebenfalls eine konstante Krümmung aufweist.

Wie bereits voranstehend ausgeführt wurde, können sphärische Teilflächen besonders einfach gefertigt werden. Durch die Auslegung sowohl des Keilwinkels als auch des Knickwinkels sowie des dritten Krümmungsradius und des vierten Krümmungsradius des Achromatbereichs an dem Übergangspunkt sind im Falle einer Ausgestaltung der Vorderfläche und/oder der Rückfläche des zumindest einen zweiten Linsenelements mit konstanter Krümmung in der Querschnittsebene die jeweiligen Flächen in ihrem weiteren Verlauf festgelegt. Eine Fläche bzw. Teilfläche, die in der Querschnittsebene eine konstante Krümmung aufweist, kann in der Querschnittsebene bspw. aus kreisförmigen Teilquerschnitten gebildet sein. Die entsprechende Fläche kann beispielsweise eine Torusfläche sein.

In einer weiteren Ausgestaltung des Verfahrens kann dabei vorgesehen sein, dass ein Krümmungsmittelpunkt in der ersten Querschnittsebene der Vorderfläche des zumindest einen zweiten Linsenelements und/oder der Rückfläche des zumindest einen zweiten Linsenelements außerhalb einer Symmetrieachse der Vorderfläche des zumindest einen zweiten Linsenelements bzw. der Rückfläche des zumindest einen zweiten Linsenelements liegt.

Der Krümmungsmittelpunkt der Vorderfläche bzw. der Rückfläche des zumindest einen zweiten Linsenelements liegt somit nicht zwingend auf einer optischen Achse oder einer Nulldurchblicklinie. Auf diese Weise wird das zweite Linsenelement ggf. durch torische Flächen begrenzt.

In einer weiteren Ausgestaltung des Verfahrens gemäß dem ersten Aspekt kann vorgesehen sein, dass die Vorderfläche des zumindest einen zweiten Linsenelements und/oder die Rückfläche des zumindest einen zweiten Linsenelements asphärisch ist. Dabei kann die Vorderfläche des zumindest einen zweiten Linsenelements und/oder die Rückfläche des zumindest einen zweiten Linsenelements rotationssymmetrisch zu einer optischen Achse des Brillenglases sein. Die Vorderfläche des zumindest einen zweiten Linsenelements und/oder die Rückfläche des zumindest einen zweiten Linsenelements kann jedoch auch nicht-rotationssymmetrisch sein.

Insbesondere kann vorgesehen sein, dass die Vorderfläche des zumindest einen zweiten Linsenelements und/oder die Rückfläche des zumindest einen zweiten Linsenelements in der Querschnittsebene durch ein Polynom zweiter oder höherer Ordnung beschrieben werden kann. Insbesondere kann beispielsweise ein Polynom in dritter oder vierter Ordnung vorgesehen sein. Ein Polynom dritter Ordnung kann beispielsweise in der Form $z(y) = Ay^3 + By^2 + Cy + D$ gebildet sein, wobei A, B, C und D Konstanten sind.

Beim Polynom zweiter Ordnung sind aufgrund der für den Übergangspunkt festgelegten Randedingungen hinsichtlich des Keilrandwinkels, des Knickwinkels sowie des dritten Krümmungsradius und des vierten Krümmungsradius keinerlei Freiheitsgrade für die Ausgestaltung des entsprechenden Polynoms zweiter Ordnung mehr vorhanden, so dass der Verlauf der Vorderfläche bzw. der Rückfläche des zweiten Linsenelements und damit auch der weitere Verlauf der Rückfläche des Brillenglases in der Querschnittsebene festgelegt ist. Bei einem Polynom dritter oder höherer Ordnung steht jedoch wiederum in einer Ordnung ein Freiheitsgrad zur Verfügung, mit dem der Verlauf der Rückfläche des Brillenglases bzw. der Rückfläche des zweiten Linsenelements und ggf. auch der Vorderfläche des zweiten Linsenelements beeinflusst werden kann. Erneut kann mittels dieses zusätzlichen Freiheitsgrades sowohl der Verlauf des Farbquerfehlers über die Höhe des Achromatbereichs als auch der Verlauf der sphärischen Wirkung als auch der astigmatischen Wirkung beeinflusst werden. Es kann aber beispielsweise auch eine Optimierung des Brillenglases dahingehend erfolgen, dass eine möglichst geringe Randdicke des Brillenglases erzielt wird.

In einer weiteren Ausführungsform der Erfindung gemäß dem ersten Aspekt kann vorgesehen sein, dass der Keilrandwinkel, der Knickwinkel und der dritte Krümmungsradius in den Schritten des Bestimmens näherungsweise bestimmt werden, wobei anschließend ein Schritt des Optimierens des Keilrandwinkels, des Knickwinkels und des dritten Krümmungsradius unter Verwendung eines Raytracing-Verfahrens durchgeführt wird. Darüber hinaus können selbstverständlich auch weitere Parameter der Vorderfläche und der Rückfläche des Brillenglases mittels des Raytracing-Verfahrens optimiert werden. Beispielsweise, wenn die Rückfläche des zweiten Linsenelements aus einem Polynom dritter oder höherer Ordnung ausgebildet wird, können die Koeffizienten des Polynoms ebenfalls mittels des Raytracing-Verfahrens optimiert werden.

Derartige Raytracing-Verfahren sind dem Durchschnittsfachmann grundsätzlich bekannt. Sie sind beispielsweise in "Robert R. Shannon, The Art and Science of Optical Design, Cambridge University Press, 1997" beschrieben.

Auf diese Weise ist es möglich, dass zumindest näherungsweise zunächst mittels der voranstehend beschriebenen Schritte des Auslegens ermittelte Design des Brillenglases weiter zu optimieren. Dabei kann der Schritt des Optimierens insbesondere aufgrund der zunächst zumindest näherungsweise gefundenen Lösungen deutlich schneller ausgeführt werden. Des Weiteren können so Resourcen einer hierzu verwendeten Datenverarbeitungseinrichtung eingespart werden.

In einer Ausführungsform des Verfahrens gemäß dem ersten Aspekt kann vorgesehen sein, dass das Ermitteln des zumindest einen Übergangspunkts basierend auf einem vorbestimmten Farbquerfehlergrenzwert für einen Farbquerfehler für den Nutzer erfolgt, wobei für den Nutzer der Farbquerfehler in dem zumindest einen ersten Übergangspunkt kleiner oder gleich dem Farbquerfehlergrenzwert ist. Insbesondere kann vorgesehen sein, dass der Farbquerfehler in dem zumindest einen ersten Übergangspunkt gleich dem Farbquerfehlergrenzwert ist.

Beispielsweise kann vorgesehen sein, dass der Farbquerfehlergrenzwert auf 0,25 cm/m festgelegt wird. Der Übergangspunkt in dem Querschnitt ist dann derart zu positionieren, dass in ihm der Farbquerfehlergrenzwert für den Nutzer nicht überschritten ist. Um das Volumen des zumindest einen zweiten Linsenelements möglichst gering zu halten, wird man den Übergangspunkt in der Regel genau auf einen Punkt legen, in dem der Farbquerfehlergrenzwert genau erreicht wird. Unter Umständen kann es jedoch vorteilhaft sein, etwa wenn die durch die Summe der Übergangspunkte bestimmte Übergangslinie zwischen dem Grundbereich und dem zumindest einen Achromatbereich geometrisch möglichst einfach ausgestaltet sein soll, etwa in Form eines Halbkreises, den Übergangspunkt in bestimmten Querschnitten in einen Punkt zu legen, in dem der Farbquerfehler geringer als der Farbquerfehlergrenzwert ist.

In einer weiteren Ausführungsform des Verfahrens gemäß dem ersten Aspekt kann vorgesehen sein, dass der zumindest eine erste Übergangspunkt festgelegt wird, indem eine Verteilung eines Farbquerfehlers für den Nutzer auf der Rückfläche des ersten Linsenelements ermittelt wird und der zumindest eine erste Übergangspunkt in einen Punkt auf der Rückfläche des ersten Linsenelements gesetzt wird, in dem der Farbquerfehler kleiner oder gleich einem vorbestimmten Farbquerfehlergrenzwert ist.

Insbesondere kann auf diese Weise vorgesehen sein, zunächst das Grunddesign des ersten Linsenelements festzulegen und für dieses den Verlauf des Farbquerfehlers für den Nutzer bzw. für von dem Augendrehpunkt des Nutzers ausgehende Hauptstrahlen in Durchtrittspunkten dieser Hauptstrahlen durch die Rückfläche des ersten Linsenelements zu ermitteln und dann entsprechende Übergangspunkte auf der Rückfläche zu setzen, in denen der Farbquerfehler kleiner oder gleich, insbesondere gleich, einem vorbestimmten Farbquerfehlergrenzwert ist. Aus der Summe bzw. durch Interpolation der Übergangspunkte ergeben sich dann Übergangslinien, die den Grundbereich von dem Achromatbereich abgrenzen. Dabei muss der Achromatbereich nicht zwingend eine zusammenhängende Fläche sein, er kann auch aus nicht miteinander verbundenen Teilflächen ausgebildet sein. Um den Verlauf der Übergangslinien bzw. Grenzlinien zwischen dem Grundbereich und dem Achromatbereich geometrisch einfach zu halten, können daher bestimmte Übergangspunkte auch auf Punkte auf der Rückfläche des ersten Linsenelements gesetzt werden, in denen der Farbquerfehler geringer als der Farbquerfehlergrenzwert ist.

Auf diese Weise erhält man dann an dem Grunddesign eines ersten Linsenelements den ersten Rückflächenbereich, der den Grundbereich und in dem Grundbereich die Rückfläche des Brillenglases ausbildet. Dann sind Vorder- und Rückfläche des zweiten Linsenelements bzw. die Grenzflächen des Achromatbereichs und basierend auf der Vorderfläche des zweiten Linsenelements die entsprechend komplementäre Ausgestaltung des zweiten Rückflächenbereichs des ersten Linsenelements zu bestimmen.

In einer weiteren Ausführungsform des Verfahrens gemäß dem ersten Aspekt kann vorgesehen sein, dass die Berechnungswellenlänge 546,074 nm ist und die sich die Abbezahl nach der Gleichung

$$V = \frac{n_e - 1}{n_{F'} - n_{C'}}$$

bestimmt, wobei V die Abbezahl, $n_e$ die Brechzahl des jeweiligen Materials bei der Berechnungswellenlänge, $n_{F'}$ die Brechzahl des jeweiligen Materials bei einer Wellenlänge von 479,9914 nm und $n_{C'}$ die Brechzahl des jeweiligen Materials bei einer Wellenlänge von 643,8469 nm ist.

Diese Berechnung der Abbezahl entspricht der neueren Konvention zur Bestimmung der Abbezahl, die als Bezugswellenlänge die e-Linie angibt. Selbstverständlich kann grundsätzlich auch eine andere Bezugswellenlänge als die e-Linie gewählt sein. Wichtig ist nur, dass die Berechnungen allesamt bezüglich derselben Bezugswellenlänge durchgeführt werden und dass das erste Material und das zweite Material unterschiedlicher Abbezahlen bei derselben Bezugswellenlänge aufweisen.

In einer Ausführungsform des Verfahrens gemäß dem ersten Aspekt kann vorgesehen sein, dass eine optische Achse oder eine Nulldurchblicklinie des Nutzers durch den Grundbereich verläuft.

In diesem Fall der Ausgestaltung wird der Grundbereich sich in etwa in der Mitte bzw. geometrischen Mitte des Brillenglases anordnen und sich um diese herum ausbreiten. In diesem Bereich treten die geringsten Blickwinkel auf und folglich sind auch in diesem Bereich die chromatischen Abberationen, so auch der Farbquerfehler, am geringsten.

In einer weiteren Ausführungsform kann vorgesehen sein, dass sich der Achromatbereich in der ersten Querschnittsebene von dem zumindest einen ersten Übergangspunkt aus bis zu einem Rand des Brillenglases erstreckt.

Wie voranstehend ausgeführt wurde, wird unter "Brillenglas" sowohl das ungerandete Brillenglas bzw. Halbfertigprodukt als auch das gerandete Brillenglas verstanden. Folglich kann es sich bei dem "Rand" sowohl um den Rand des ungerandeten Brillenglases als auch um den Rand des zugeschnittenen, gerandeten Brillenglases handeln.

In der Regel nehmen die chromatischen Abberationen, insbesondere auch der Farbquerfehler, mit zunehmendem Blickwinkel, d.h. in der Peripherie des Brillenglases zu. Somit bietet sich einer Erstreckung des Achromatbereichs ausgehend von dem Übergangspunkt bis hin zu dem Rand an, um eine zumindest teilweise achromatische Wirkung in diesem Bereich des Brillenglases zu erzielen.

In einer Ausführungsform des Verfahrens zum Herstellen gemäß dem zweiten Aspekt der Erfindung kann vorgesehen sein, dass der Schritt des Verbindens durchgeführt wird, indem das erste Linsenelement und das zumindest eine zweite Linsenelement verkittet werden.

Bei dem Verkitten werden benachbarte Flächen, im vorliegenden Fall der zweite Rückflächenbereich des ersten Linsenelements und die Vorderfläche des zweiten Linsenelements, mittels einer dünnen, durchsichtigen Kittschicht zusammengeklebt. Beispielsweise kann hierzu ein Kunstharz verwendet werden. Des Weiteren kann grundsätzlich vorgesehen sein, dass das erste Linsenelement und das zumindest eine zweite Linsenelement durch Ansprengen verbunden werden. Diese Fertigungsart wird auch als Anschieben bezeichnet. Hierbei werden die Oberflächen des ersten und zweiten Linsenelements durch molekulare Anziehungskräfte miteinander verbunden. Diese Fertigungstechniken wird dem Durchschnittsfachmann grundsätzlich bekannt.

Gemäß einer Ausführungsform des Brillenglases gemäß dem vierten Aspekt der Erfindung kann vorgesehen sein, dass das Brillenglas in der ersten Querschnittsebene zwei Übergangspunkte aufweist, wobei die jeweilige erste Tangente und die jeweilige zweite Tangente an jedem der zwei Übergangspunkte einander schneiden.

Grundsätzlich muss sich der Achromatbereich nicht vollumfänglich auf der Rückfläche des Brillenglases erstrecken. Es kann ausreichend sein, den Achromatbereich nur in einem bestimmten Winkelbereich vorzugeben. Daher kann in der Querschnittsebene grundsätzlich nur ein Übergangspunkt vorgesehen sein. Allerdings kann der Achromatbereich natürlich auch vollumfänglich vorgesehen sein, etwa wenn das Brillenglas rotationssymmetrisch ausgebildet ist. Dann weist das Brillenglas in der ersten Querschnittsebene bzw. in jeder der Querschnittsebenen jeweils zwei Übergangspunkte auf. Es gilt dann in jedem der Übergangspunkte in der jeweiligen Querschnittsebene, dass die Tangente des Grundbereichs, d.h. die erste Tangente, an den jeweiligen Übergangspunkt und die Tangente des Achromatbereichs, d.h. die zweite Tangente, an dem jeweiligen Übergangspunkt einander schneiden.

In einer weiteren Ausführungsform der Erfindung kann vorgesehen sein, dass die erste Tangente und die zweite Tangente einander an zumindest einem ersten Übergangspunkt in einem Achslagenbereich von mindestens 160° schneiden.

Wie bereits eingangs ausgeführt wurde, ist unter "Achslagenbereich" eine Lage der ersten Querschnittsebene und der weiteren Querschnittsebenen bezüglich eines Winkels relativ zu der üblicherweise als Y-Z-Ebene bezeichneten Ebene des Brillenglases zu verstehen. Die Gradangabe kann somit ähnlich der Gradangabe nach dem Durchschnittsfachmann bekannten TABO-Schema verstanden werden. Somit kann beispielsweise vorgesehen sein, dass der zumindest eine erste Übergangspunkt nur mit einem Achslagenbereich von 165° in einer unteren Hälfte des Brillenglases vorgesehen wird. Entsprechend ist dann beispielsweise das zweite Linsenelement auch nur in dieser unteren Hälfte des Brillenglases angeordnet. Alternativ, wenn der Achromatbereich sich von dem Übergangspunkt aus bis zu einem Rand des Brillenglases erstreckt, kann auch beispielsweise formuliert werden, dass sich der Achromatbereich über einen Bereich des Randes des Brillenglases bzw. Randbereiches von mindestens 120° erstreckt.

In einer weiteren Ausführungsform des Brillenglases gemäß dem vierten Aspekt der Erfindung kann vorgesehen sein, dass die jeweilige erste Tangente des ersten Rückflächenbereichs und die jeweilige zweite Tangente der Rückfläche des zumindest einen zweiten Linsenelements einander in jeder Querschnittsebene des Brillenglases schneiden.

Entsprechend ist in diesem Fall vorgesehen, dass sich der Achromatbereich vollumfänglich bzw. über 360° des Randes des Brillenglases erstreckt.

In diesem Fall wird ein geringer Farbquerfehlerwert ohne Wirkungssprünge beim Übergang von dem Grundbereich im Achromatbereich über den gesamtgerichteten Umfang des Brillenglases bereitgestellt.

In einer weiteren Ausführungsform des Brillenglases gemäß dem vierten Aspekt der Erfindung kann vorgesehen sein, dass das erste Linsenelement in dem Grundbereich und in dem Achromatbereich angeordnet ist, wobei eine Vorderfläche des Brillenglases aus einer Vorderfläche des ersten Linsenelements ausgebildet ist, wobei in dem Achromatbereich ein zweiter Rückflächenbereich des ersten Linsenelements und eine Vorderfläche des zumindest einen zweiten Linsenelements aneinander anliegen, und wobei die wobei die Vorderfläche und die Rückfläche des zumindest einen zweiten Linsenelements an dem zumindest einen ersten Übergangspunkt in der zumindest einen ersten Querschnittsebene zusammenlaufen und zwischen sich einen Keilrandwinkel ausbilden.

Auf diese Weise wird ein kompakter Aufbau des Brillenglases bereitgestellt. Die aneinander anliegende Vorderfläche des zweiten Linsenelements und der zweiten Rückfläche im Bereich des ersten Linsenelements vermeiden einen Luftspalt und ermöglichen eine Fertigung des Brillenglases beispielsweise mittels Verkittens oder Ansprengens.

In einer Ausführungsform des Brillenglases gemäß dem vierten Aspekt der Erfindung kann vorgesehen sein, dass die Vorderfläche des ersten Linsenelements und/oder der erste Rückflächenbereich des ersten Linsenelements sphärisch ist.

In einer weiteren Ausführungsform des Brillenglases gemäß dem vierten Aspekt der Erfindung kann vorgesehen sein, dass die Vorderfläche des zumindest einen zweiten Linsenelements und/oder die Rückfläche des zumindest einen zweiten Linsenelements in der ersten Querschnittsebene eine konstante Krümmung aufweist.

Wie bereits voranstehend für das Verfahren gemäß dem ersten Aspekt ausgeführt wurde, hat die Ausgestaltung der Flächen des zumindest einen zweiten Linsenelements mit einer konstanten Krümmung den Vorteil, dass diese mit relativ einfachen Mitteln gefertigt werden können.

In einer weiteren Ausführungsform des Brillenglases gemäß dem vierten Aspekt kann vorgesehen sein, dass ein Krümmungsmittelpunkt in der zumindest einen ersten Querschnittsebene der Vorderfläche des zumindest einen zweiten Linsenelements und/oder der Rückfläche des zumindest einen zweiten Linsenelements außerhalb einer Symmetrieachse der Vorderfläche des zumindest einen zweiten Linsenelements bzw. der Rückfläche des zumindest einen zweiten Linsenelements liegt.

Diese Ausgestaltung des Brillenglases ermöglicht die freie Wahl des Knickwinkels, einen Übergangspunkt zwischen der Rückfläche des zweiten Linsenelements und dem ersten Rückflächenbereich des ersten Linsenelements, wobei für die Rückfläche des zweiten Linsenelements eine Form mit konstanter Krümmung beibehalten werden kann. Insgesamt ergibt sich dann aufgrund der Lage des Krümmungsmittelpunkts außerhalb der Symmetrieachse eine torische Fläche für die Vorder- bzw. Rückfläche des zweiten Linsenelements.

In einer Ausführungsform des Brillenglases gemäß dem vierten Aspekt der Erfindung kann vorgesehen sein, dass die Vorderfläche des zumindest einen zweiten Linsenelements und/oder die Rückfläche des zumindest einen zweiten Linsenelements asphärisch, d.h. nicht sphärisch, ist.

Insbesondere kann die Vorderfläche des zumindest einen zweiten Linsenelements und/oder die Rückfläche des zumindest einen zweiten Linsenelements in der Querschnittsebene durch ein Polynom zweiter oder höherer Ordnung, insbesondere durch ein Polynom dritter oder vierter Ordnung, ausgebildet sein. Insbesondere kann die asphärische Vorderfläche des zumindest einen zweiten Linsenetements und/oder die asphärische Rückfläche des zumindest einen zweiten Linsenelements rotationssymmetrisch zu einer optischen Achse des Brillenglas sein oder nicht-rotationssymmetrisch sein.

Wie bereits voranstehend ausgeführt wurde, ermöglicht insbesondere die Ausbildung mittels eines Polynoms dritter oder höherer Ordnung mindestens einen weiteren Freiheitsgrad trotz der Vorgabe des Knickwinkels, des Keilrandwinkels, des dritten Krümmungsradius und des vierten Krümmungsradius, so dass beispielsweise die Randdicke des Brillenglases minimiert werden kann.

In einer weiteren Ausführungsform des Brillenglases gemäß dem vierten Aspekt kann vorgesehen sein, dass das Brillenglas rotationssymmetrisch zu einer optischen Achse ist.

In diesem Fall ergibt sich ein besonders einfacher geometrischer Aufbau des Brillenglases. Insbesondere im Falle einer durch ein Einstärkenglas zu bewirkenden Korrektion kann dieser einfache Aufbau ausreichend sein, um eine geforderte Rezeptwirkung für einen Nutzer bereitzustellen.

In einer weiteren Ausführungsform des Brillenglases gemäß dem vierten Aspekt kann vorgesehen sein, dass die erste Querschnittsebene oder jede Querschnittsebene eine Meridianebene des Brillenglases ist.

Weist das Brillenglas eine optische Achse auf, können somit die erste Querschnittsebene oder jede Querschnittsebene eine Meridianebene sein. Die Lage der Knicke auf der Rückseite des Brillenglases ist für relativ große Blickwinkel ausgehend von einer entspannten Lage des Auges eines vorgesehenen Nutzers, so dass insbesondere das Sehen in einem peripheren Randbereich des Brillenglases verbessert werden kann.

In einer weiteren Ausführungsform des Brillenglases gemäß dem vierten Aspekt der Erfindung kann vorgesehen sein, dass die Querschnittsebene oder jede Querschnittsebene eine geometrische Mittelachse des Brillenglases enthält.

Die "geometrische Mittelachse" verläuft dabei durch einen geometrischen Mittelpunkt zum Kastensystem des ungerandeten oder gerandeten Brillenglases. Häufig wird der geometrische Mittelpunkt in dem ungerandeten Brillenglas ausreichend sein. Bei nicht-rotationssymmetrischen Formen der vorgesehenen Fassung bzw. des gerandeten Brillenglases kann jedoch auch die vorangehende Auslegung und damit letztendlich die strukturelle Formgebung des Brillenglases sich an einem geometrischen Mittelpunkt des gerandeten Brillenglases orientieren.

Die geometrische Mittelachse erstreckt sich dann durch den geometrischen Mittelpunkt parallel zu einer Hauptdurchblickrichtung durch das Brillenglas. Die Hauptdurchblickrichtung ist insbesondere parallel zu einer Symmetrieachse der Vorderfläche des ersten Linsenelements, sofern die Vorderfläche des ersten Linsenelements rotationssymmetrisch ausgebildet ist.

In einer weiteren Ausgestaltung des Brillenglases gemäß dem vierten Aspekt kann vorgesehen sein, dass die erste Querschnittsebene oder jede Querschnittsebene derart durch das Brillenglas verläuft, dass sie das Brillenglas in einer Normalenebene senkrecht zu sich in zwei gleich große Flächen aufteilt.

Unter Umständen kann aufgrund der geometrischen Ausgestaltung der Vorderfläche und/oder der Rückfläche des Brillenglases bzw. des ersten Linsenelements und des zweiten Linsenelements eine Lage des geometrischen Mittelpunkts schwer zu ermitteln sein, oder aber eine optische Achse nicht vorhanden sein. Insofern kann eine mögliche Hauptdurchblicklinie, ausgehend von der eine Konstruktion des Brillenglases zur Vermeidung chromatischer Aberrationen an einem peripheren Sichtfeld geeignet ist, ebenfalls schwer ermittelbar sein. Die Anordnung der Querschnittsebenen kann dann erfolgen, indem sie das Brillenglas, d.h. das ungerandete oder das gerandete Brillenglas in einer Normalenebene, die senkrecht zu der Querschnittsebene verläuft, in zwei gleich große Flächen aufteilten. Die Normalebene ist somit die X-Y-Ebene des Brillenglases, in der auch das Kastenmaß festgelegt wird.

In einer weiteren Ausgestaltung kann eine Brille mit einer Fassung und einem ersten und einem zweiten Brillenglas bereitgestellt sein, wobei das erste und/oder das zweite Brillenglas ein Brillenglas gemäß dem vierten Aspekt der Erfindung oder einer seiner Ausgestaltungen ist, wobei die Querschnittsebene oder jede Querschnittsebene des jeweiligen Brillenglases einen geometrischen Mittelpunkt des jeweiligen Brillenglases enthält und normal zu einer Fassungsebene des Brille verläuft, wobei die Fassungsebene die vertikalen Mittellinien des Kastens des ersten und des zweiten Brillenglases enthält.

Auf diese Weise kann eine Definition der Querschnittsebene auch anhand der fertigen Brille erfolgen.

In einer weiteren Ausgestaltung des Brillenglases gemäß dem vierten Aspekt kann vorgesehen sein, dass die Vorderfläche des Linsenelements konvex ausgebildet ist und der erste Rückflächenbereich des ersten Linsenelements konkav ausgebildet ist.

Im Rahmen der vorliegenden Anmeldung erfolgt die Angabe der Begriffe "konvex" und "konkav" im Rahmen der üblichen Gebrauchsweise dieser Begriffe, nämlich bei einem Blick von außen auf die entsprechende Fläche des Brillenglases. Krümmt sich die Fläche bei einem Blick von außen auf das Brillenglas von dem Betrachter weg, ist die Fläche folglich konvex. Krümmt sich die Fläche zu dem Betrachter hin, ist sie folglich konkav.

Eine derartige Ausbildung des ersten Linsenelements als sogenannter Meniskus ermöglicht eine Möglichkeit der Korrektion entsprechend einer geforderten Rezeptwirkung und eine gleichzeitig einfache Fertigung.

In einer weiteren Ausgestaltung des Brillenglases gemäß dem vierten Aspekt kann vorgesehen sein, dass der zweite Rückflächenbereich des ersten Linsenelements konvex ausgebildet ist, wobei eine Vorderfläche des zumindest einen zweiten Linsenelements konkav und eine Rückfläche des zumindest einen zweiten Linsenelements konkav ausgebildet ist.

Auf diese Weise kann eine besonders einfache Möglichkeit des Fertigens des Brillenglases bereitgestellt sein. Insbesondere kann im Falle eines negativen Knickwinkels die Möglichkeit bereitgestellt werden, dass das erste Linsenelement und das zweite Linsenelement zunächst miteinander verbunden werden können. Erst dann ist ggf. die Rückfläche des zweiten Linsenelements zu schleifen.

Des Weiteren kann eine Ausführungsform des Brillenglases gemäß dem vierten Aspekt vorgesehen sein, dass der zweite Rückflächenbereich des ersten Linsenelements konkav ausgebildet ist, wobei eine Vorderfläche des zumindest einen zweiten Linsenelements konvex und eine Rückfläche des zumindest einen zweiten Linsenelements konkav ausgebildet ist.

Auch in diesem Fall kann insbesondere im Falle eines negativen Knickwinkels an dem Übergangspunkt in der Querschnittsebene eine besonders einfache Fertigung des Brillenglases erfolgen. Insbesondere kann auch hier die Rückfläche des zweiten Linsenelements erst dann bearbeitet werden, wenn das erste Linsenelement und das zweite Linsenelement bereits miteinander verbunden sind.

Wie bereits voranstehend ausgeführt wurde, kann in einer Ausführungsform des Brillenglases gemäß dem vierten Aspekt der Erfindung vorgesehen sein, dass die Vorderfläche des zumindest einen zweiten Linsenelements und der zweite Rückflächenbereich des ersten Linsenelements miteinander verkittet sind.

Alternativ kann beispielsweise auch vorgesehen sein, dass das erste Linsenelement und das zweite Linsenelement aneinander angesprengt sind.

In einer Ausführungsform des Brillenglases kann vorgesehen sein, dass eine optische Achse des Brillenglases oder eine geometrische Mittelachse des Brillenglases durch den Grundbereich verläuft.

In diesem Fall ist gewährleistet, dass der Achromatbereich sich in einem peripheren Bereich des Brillenglases erstreckt, in dem die chromatische Aberrationen grundsätzlich größer sind.

Des Weiteren kann eine Ausführungsform des Brillenglases gemäß dem vierten Aspekt vorgesehen sein, dass sich der Achromatbereich in der ersten Querschnittsebene von dem zumindest einen ersten Übergangspunkt aus bis zu einem Rand des Brillenglases erstreckt.

Auf diese Weise kann sichergestellt werden, dass in der Peripherie des Brillenglases eine zumindest teilweise achromatische Wirkung des Achromatbereichs sich bis zu dem Rand des Brillenglases erstreckt und damit an dem möglichen äußeren Rand eines peripheren Sichtfeldes eines Nutzers des Brillenglases der Farbquerfehler verringert ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:

Fig. 1          eine Draufsicht auf die Vorderfläche einer Ausführungsform eines Brillenglases,

Fig. 2          eine Ausführungsform eines Querschnitts des Brillenglases in Fig. 1 entlang einer Schnittlinie II-II,

Fig. 3          eine weitere mögliche Ausführungsform einer Querschnittsansicht des Brillenglases in Fig. 1 entlang einer Schnittlinie III-III in Fig. 1,

Fig. 4          noch eine weitere mögliche Ausführungsform eines Querschnitts des Brillenglases in Fig. 1 entlang einer Schnittlinie IV-IV in Fig. 1,

Fig. 5          zeigt eine weitere Ausführungsform eines Brillenglases mit einem Blick auf die Vorderfläche, wobei die in den Figuren 2, 3 und 4 dargestellten Querschnittsansichten auch in diesem Brillenglas Anwendung finden können,

Fig. 6          zeigt noch eine weitere Ausführungsform eines Brillenglases in einer Sicht auf die Vorderfläche, wobei beispielsweise der Querschnitt in Fig. 4 ein Querschnitt dieses Brillenglases sein kann,

Fig. 7          noch eine weitere Ausführungsform eines Brillenglases, wobei beispielsweise der Querschnitt in Fig. 4 einen oder mehrere Querschnitte dieses Ausführungsbeispiels zeigen kann,

Fig. 8          eine schematische Darstellung eines Brillenglases, das bereits gerandet ist, wobei ein Achslagenbereich dargestellt ist,

Fig. 9          eine Detailansicht IX in den Figuren 2, 3 und 4,

Fig. 10          ein schematisches Ablaufdiagramm einer Ausführungsform eines Verfahrens zum Auslegen eines Brillenglases und eines Verfahrens zum Herstellen eines Brillenglases,

Figuren 11a bis 11f     ein Vergleichsbeispiel eines lediglich aus einem ersten Linsenelement ausgebildeten Brillenglases und Darstellungen der Verläufe der relevanten Größen und Wirkungen über der Höhe des Brillenglases,

Figuren 12a bis 12f     ein Ausführungsbeispiel eines erfindungsgemäßen ausgebildeten Brillenglases, bei dem die Vorder- und die Rückfläche des zweiten Linsenelements in der Querschnittsebene eine konstante Krümmung aufweisen sowie die dazugehörigen relevanten Größen und Wirkungen im Verlauf über der Höhe des Brillenglases,

Figuren 13a bis 13f     eine weitere Ausführungsform eines erfindungsgemäßen Brillenglases, wobei die Vorder- und Rückfläche des zweiten Linsenelements mittels eines Polynoms dritter Ordnung gebildet sind sowie die dazugehörigen Größen und Wirkungen in ihrem Verlauf über der Höhe dieses Brillenglases, und

Figuren 14a und 14b     eine Vorderansicht und eine Draufsicht auf eine Ausführungsform einer Brille mit mindestens einem erfindungsgemäß ausgestalteten Brillenglas.

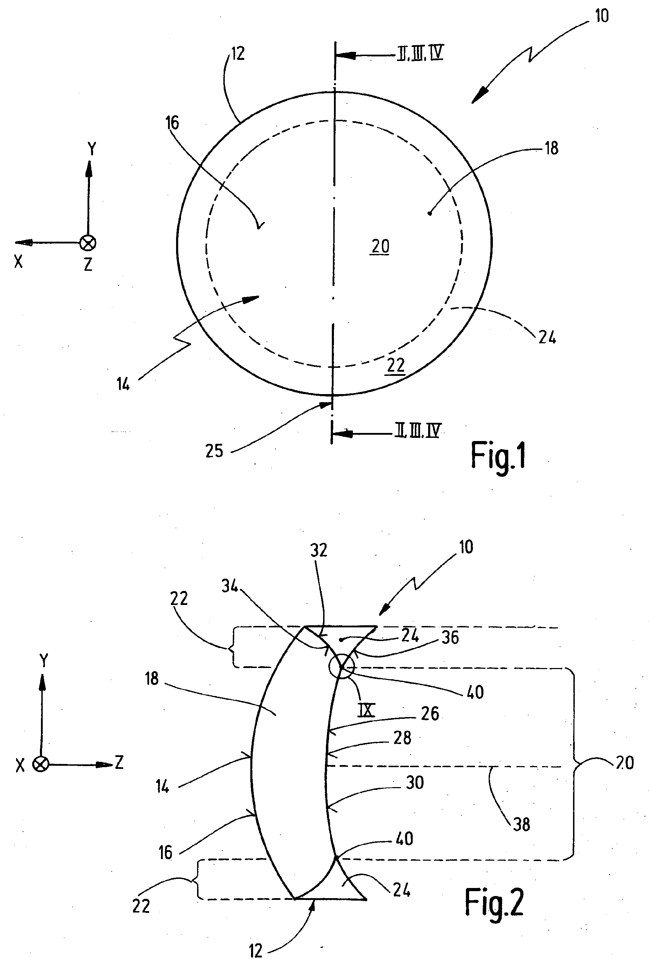

Die Fig. 1 zeigt eine Draufsicht auf eine Ausführungsform eines Brillenglases 10. In einem üblichen Koordinatensystem liegt diese Draufsicht in der X-Y-Ebene, die Z-Achse erstreckt sich in Richtung eines Nutzers des Brillenglases, d.h. in der in Fig. 1 dargestellten Ansicht in die Bildebene hinein.

Die Draufsicht erfolgt zumindest auf eine Vorderfläche 14 des Brillenglases. Die Vorderfläche 14 des Brillenglases wird von der Vorderfläche eines ersten Linsenelements 18 ausgebildet. Mit einer gestrichelten Linie ist schematisch angedeutet, dass eine Rückfläche (in der Fig. 1 auf der abgewandten Seite des Brillenglases) einen Grundbereich 20 und einen Achromatbereich 22 aufweist. In dem dargestellten Ausführungsbeispiel ist das Brillenglas 10 rotationssymmetrisch ausgebildet, so dass sich der Achromatbereich 22 vollumfänglich entlang der Peripherie des Brillenglases 10 um den Grundbereich 20 herum erstreckt. Der Achromatbereich 22 ist derjenige Bereich, in dem die Rückfläche des Brillenglases durch ein zweites Linsenelement 24 (somit in der Darstellung in Fig. 1 lediglich auf der abgewandten Seite des Brillenglases) angeordnet ist.

Ein Querschnitt 25 durch das Brillenglas ist mittels einer gestrichelten Linie angedeutet. In Fig. 2 ist diese Schnittdarstellung erläutert.

Fig. 2 zeigt eine Darstellung des Querschnitts entlang einer Schnittlinie II-II des Brillenglases in Fig. 1. In dieser Darstellung wird deutlich, dass das Brillenglas 10 das erste Linsenelement 18 und das zweite Linsenelement 24 aufweist. Das Brillenglas 10 weist eine Rückfläche 26 auf. Das erste Linsenelement 18 weist eine Rückfläche 28 auf. Die Rückfläche 28 des ersten Linsenelements 18 weist wiederum einen ersten Rückflächenbereich 30 und einen zweiten Rückflächenbereich 32 auf.

Der erste Rückflächenbereich 30 bildet einen Teil der Rückfläche 26 des Brillenglases 10. Dieser Bereich ist der Grundbereich 20.

Des Weiteren ist das zweite Linsenelement 24 vorgesehen. Das zweite Linsenelement 24 weist eine Vorderfläche 34 des zweiten Linsenelements 24 und eine Rückfläche 36 des zweiten Linsenelements 24 auf. Die Vorderfläche 34 des zweiten Linsenelements liegt an dem zweiten Rückflächenbereich 32 des ersten Linsenelements 18 an. Darunter ist zu verstehen, dass zwischen den Flächen kein Luftspalt gebildet ist. Die Flächen können beispielsweise miteinander verkittet oder miteinander versprengt sein.

Die Rückfläche 36 des zweiten Linsenelements 24 bildet einen weiteren Teil der Rückfläche 26 des Brillenglases 10 aus. Dieser weitere Bereich ist der Achromatbereich 22. Mit anderen Worten ist der Grundbereich 20 somit durch den ersten Rückflächenbereich 30 definiert. Der Achromatbereich 22 ist durch die Rückfläche 36 des zweiten optischen Elements 24 definiert.

In der in Fig. 2 dargestellten Querschnittsansicht weist das Brillenglas 10 eine optische Achse 38 auf. Eine entlang der optischen Achse 38 durch das Brillenglas 10 durchtretender Lichtstrahl wird nicht abgelenkt. Das in den Figuren 1 und 2 dargestellte Brillenglas 10 ist darüber hinaus rotationssymmetrisch zu der optischen Achse 38. Der Querschnitt 25 ist ein Meridianschnitt durch das Brillenglas 10. Dies ist jedoch nicht zwingend. Das Brillenglas 10 muss nicht rotationssymmetrisch zu der optischen Achse 38 sein. Des Weiteren können Ausführungsformen des Brillenglases 10 gar keine optische Achse 38 aufweisen.

Der erste Rückflächenbereich 30 und die Rückfläche des zweiten Elements 24 gehen in einem Übergangspunkt 40 auf der Rückfläche 26 des Brillenglases 10 ineinander über. Insbesondere ist der Übergangspunkt derart festgelegt worden, dass in ihm ein Farbquerfehler für einen Nutzer des Brillenglases 10 einen Farbquerfehlergrenzwert erreicht, der als für den Nutzer störend definiert wurde. Folglich schließt sich ab dem Übergangspunkt 40 hin zu einem Rand 12 des Brillenglases 10 der Achromatbereich 22 mit dem zweiten Linsenelement 24 an. Das zweite Linsenelement 24 weist ein zweites Material auf, dessen Abbezahl von einem ersten Material des ersten Linsenelements 18 verschieden ist. Auf diese Weise können das erste Linsenelement 18 und das zweite Linsenelement 24 achromatisch zusammenwirken. Der in Fig. 2 dargestellte Querschnitt weist aufgrund der Symmetrie des Brillenglases 10 zwei Übergangspunkte 40 auf. Dies ist jedoch grundsätzlich nicht zwingend. Es kann sich in dem Querschnitt 25 auch nur einen Übergangspunkt 40 finden.

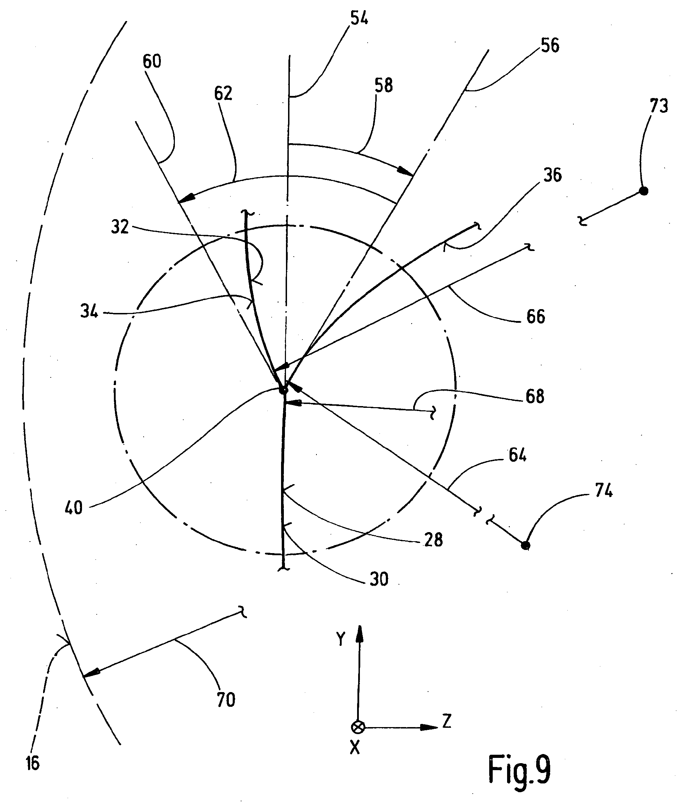

Die Teilansicht einer Umgebung des Übergangspunkts 40 ist in der Fig. 9 dargestellt und wird im Folgenden noch detailliert erläutert.

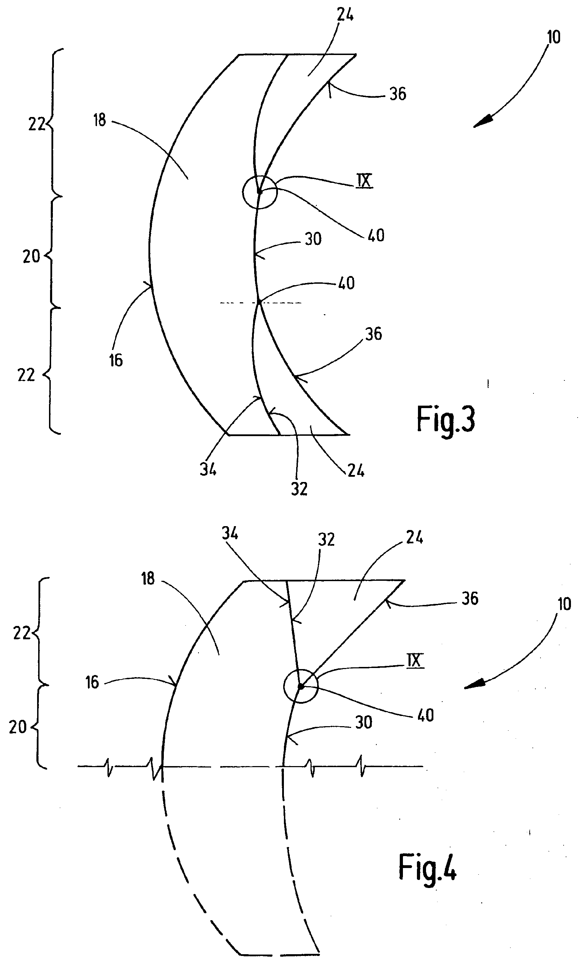

In der Fig. 3 ist ein weiterer möglicher Querschnitt 25 des Brillenglases 10 dargestellt. Gleiche Elemente sind mit gleichen Bezugszeichen gekennzeichnet und werden daher im Folgenden nicht erneut erläutert. Es wird im Folgenden lediglich auf die Unterschiede eingegangen.

Das in der Fig. 3 dargestellte Ausführungsbeispiel, unterscheidet sich von dem in Fig. 2 dargestellten Ausführungsbeispiel in der Ausgestaltung der Vorderfläche 34 und der Rückfläche 36 des zweiten Linsenelements 24. In der Ausführungsform in Fig. 2 ist die Vorderfläche 34 konkav ausgebildet und die Rückfläche 36 ebenfalls konkav ausgebildet. Demgegenüber ist jedoch in der Fig. 3 die Vorderfläche 34 des zweiten Linsenelements 24 konvex ausgebildet und die Rückfläche 36 des zweiten Linsenelements 24 konkav ausgebildet. Entsprechend komplementär ist der zweite Rückflächenbereich 32 konkav ausgebildet. Somit ergibt sich für den Querschnitt in Fig. 3, dass das Brillenglas 10 insgesamt als Meniskus ausgebildet ist, aber auch das zweite Linsenelement 24 als Meniskus ausgebildet ist. Der in der Fig. 3 dargestellte Querschnitt weist ebenfalls zwei Übergangspunkte 40 auf. Eine Umgebung der Übergangspunkte 40 ist dabei ebenfalls schematisch in der Fig. 9 dargestellt.

In der Fig. 4 ist schematisch eine weitere mögliche Ausführungsform des Querschnitts 25 des Brillenglases 10 dargestellt. Die gleichen Elemente sind wiederum mit gleichen Bezugzeichen gekennzeichnet und werden nicht erneut beschrieben. Im Folgenden wird lediglich auf die Unterschiede eingegangen.

Grundsätzlich ist es nicht zwingend notwendig, dass das Brillenglas 10 rotationssymmetrisch ausgestaltet ist. Somit kann es sein, dass das Brillenglas 10 in einem Querschnitt lediglich einen Übergangspunkt 40 aufweist. Die Ausgestaltung einer in gestrichelten Linie in Fig. 4 angedeuteten zweiten Hälfte des Querschnitts 25 ist somit grundsätzlich beliebig. Es kann sein, dass in dem lediglich gestrichelt angedeuteten unteren Teil des Querschnitts vollständig der Grundbereich 20 weiter ausgebildet ist, somit ist in diesem Teil des Querschnitts dann kein zweites Linsenelement 24 vorgesehen.

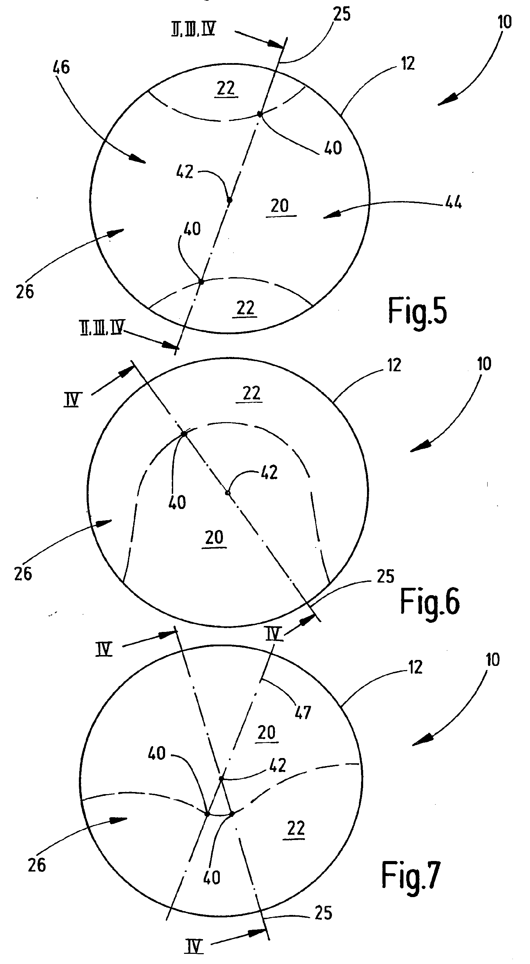

In der Fig. 5 ist eine weitere Ausführungsform eines Brillenglases 10 dargestellt. Der Querschnitt kann grundsätzlich gemäß einer der Ausführungsformen in den Figuren 2 bis 4 ausgebildet sein. Die Ansicht in Fig. 5 erfolgt ebenfalls auf die Vorderfläche des Brillenglases 10. Gleiche Elemente sind mit gleichen Bezugszeichen gekennzeichnet und werden im Folgenden nicht erneut erläutert. Es wird lediglich auf die Unterschiede eingegangen.

Wie in der Fig. 5 zu erkennen ist, ist das Brillenglas 10 in dieser Ausführungsform nicht rotationssymmetrisch ausgebildet. Der Achromatbereich ist lediglich in einem oberen und einem unteren Teil des Brillenglases 10 ausgebildet, d.h. er wirkt für Verschwenkungen der Blickrichtung während der Benutzung des Brillenglases 10 in der vertikalen Richtung. Es ist somit nicht zwingend notwendig, dass der Achromatbereich 22 ein zusammenhängender Teil der Rückfläche 26 des Brillenglases ist. Der Achromatbereich 22 kann auch aus mehreren Teilbereichen, wie in der Fig. 5 aus zwei Teilbereichen, ausgebildet sein. Auch in dieser Ausführungsform sind in der Querschnittsebene 25 zwei Übergangspunkte 40 vorgesehen.

Unter Umständen kann es der Fall sein, dass das Brillenglas 10, etwa das in Fig. 5 dargestellte Brillenglas 10, keine optische Achse 38 aufweist. Für die Lage des Querschnittsebene 25 kann somit eine geometrische Mittelachse definiert sein. Die geometrische Mittelachse verläuft durch den geometrischen Mittelpunkt des ungerandeten Brillenglases. In der Fig. 5 ist das Brillenglas 10 ungerandet, d.h. noch kreisförmig dargestellt. Der geometrische Mittelpunkt liegt dann im Kreismittelpunkt. Grundsätzlich kann jedoch auch der geometrische Mittelpunkt anhand des gerandeten Brillenglases 10 festgelegt sein. Die geometrische Mittelachse 42 verläuft dann parallel zu einer vorgesehenen Hauptdurchblickrichtung durch das Brillenglas 10 durch den geometrischen Mittelpunkt. Die Querschnittsebene 25 enthält dann die geometrische Mittelachse 42.

Als alternative Definition kann festgelegt sein, dass die Querschnittsebene 25 in der in der Fig. 5 dargestellten Draufsicht auf das Brillenglas eine Fläche in einer Normalenebene, die senkrecht auf der Querschnittsebene 25 steht, zwei gleich große Flächenanteile teilen. Beispielhaft ist in der Fig. 5 ein erster Flächenanteil 44 und ein zweiter Flächenanteil 46 gekennzeichnet. Im Falle eines ungerandeten, kreisförmigen Brillenglasrohlings erstreckt sich somit die Querschnittsebene 25 derart, dass sie den gesamten Durchmesser eines solchen ungerandeten Brillenglas-Halbprodukts schneidet.

Die Lage einer Querschnittsebene 25 zu definieren hängt somit von den Eigenschaften des Brillenglases ab. Im einfachsten Fall ist es das Brillenglas 10 rotationssymmetrisch, so dass die Querschnittsebene 25 eine Meridianebene des Brillenglases 10 ist, die die optische Achse 38 enthält. Im Falle eines nicht-rotationssymmetrischen Brillenglases 10 ergibt sich die einfachste Definition für das ungerandete Brillenglas 10, bei dem die Querschnittsebene 25 durch die geometrische Mittelachse 42 verläuft und diese enthält bzw. eine Fläche des Brillenglases 10 in einer Normalenebene senkrecht zu der Querschnittsebene 25 in zwei gleich große Flächenanteile 44, 46 teilt.

Soll die Lage der Querschnittsebene an dem gerandeten Brillenglas festgelegt werden bzw. ist eine Dezentration vorgesehen, so kann vorgesehen sein, dass eine Querschnittsebene eine von einem Augendrehpunkt ausgehender Hauptdurchblicklinie durch das Brillenglas enthält, wie im Folgenden noch erläutert werden wird.

In der Fig. 6 ist noch eine weitere mögliche Ausführungsform des Brillenglases 10 dargestellt. Bei dieser Ausführungsform kann der Querschnitt 25 beispielsweise wie in der Fig. 4 dargestellt, ausgebildet sein. In der dargestellten Ausführungsform erstreckt sich der Achromatbereich 22 nicht vollumfänglich über den gesamten Rand 12 des Brillenglases 10. Somit weist ein solches Brillenglas 10 Querschnittsebenen 25 auf, die lediglich einen Übergangspunkt 40 aufweisen.

In einer Fig. 7 ist noch eine weitere mögliche Ausführungsform eines Brillenglases 10 dargestellt. In diesem Fall ist lediglich in einem unteren Bereich des Brillenglases 10 der Achromatbereich 22 vorgesehen. Der restliche Teil des Brillenglases 10 ist der Grundbereich 20.

Eine Querschnittsebene 25 weist dann wiederum lediglich einen Übergangspunkt 40 auf. Selbstverständlich können des Weiteren weitere Querschnittsebenen 47 durch das Brillenglas gelegt sein, die ebenfalls zumindest einen Übergangspunkt 40 aufweisen. Beispielsweise die Querschnittsebene 25 kann dann wie in der Querschnittsansicht in der Fig. 4 dargestellt, ausgebildet sein.

In der Fig. 8 ist ein gerandetes Brillenglas 10 dargestellt. Das aus einem im Wesentlichen kreisförmigen Brillenglas-Halbprodukt bzw. ungerandeten Brillenglas gebildete gerandete Brillenglas 10 in der Fig. 8 weist dann eine im Wesentlichen rechteckige Form mit abgerundeten Kanten auf.

Die Darstellung in Fig. 8 wird dazu erläutert, wie im Rahmen der Anmeldung der Begriff "Achslagenwinkel" bzw. "Achslagenbereich" zu verstehen ist. In einem Kastenmaß des Brillenglases 10 in der Fig. 8 kann ein geometrischer Mittelpunkt des Brillenglases 10 gefunden werden. Bei einer vorgesehenen Hauptdurchblickrichtung durch das Brillenglas 10 verläuft dann die geometrische Mittelachse 42 durch das Brillenglas 10. Mögliche Querschnittsebenen 25, 47 enthalten dann diese geometrische Mittelachse 42. Ausgehend von dem geometrischen Mittelpunkt als Ursprung können dann ähnlich dem sogenannten TABO-Schema zur Bestimmung der Basislage einer prismatischen Wirkung mehrere Achsen 48 definiert werden und ein entsprechender Achslagenwinkel 50 angegeben werden. Ein sogenannter "Achslagenbereich" ist dann ein Bereich von Achslagenwinkeln 50. Ein Beispiel für einen Achslagenbereich 52 ist mit einem Pfeil gekennzeichnet und umfasst eine Ausdehnung von etwa 170°. Auf diese Weise ist es möglich, eine Ausdehnung des Achromatbereichs über den Umfang des Brillenglases zu beschreiben. Insbesondere kann daher vorgesehen sein, dass sich der Achromatbereich über einen Achslagenbereich von mindestens 160°, insbesondere mindestens 170°, insbesondere mindestens 180° erstreckt. In diesem Achslagenbereich 52 weist hier die Querschnittsebene 25, 47 zumindest einen Übergangspunkt 40 auf.

In der Fig. 9 ist eine Detailansicht IX in den Fig. 2, 3 und 4 dargestellt.

Gleiche Elemente sind wiederum mit gleichen Bezugszeichen gekennzeichnet und werden nicht erneut beschrieben.

An den Übergangspunkt 40 grenzen der erste Rückflächenbereich 30, die Vorderfläche 34 des zweiten Linsenelements 24 und die Rückfläche 36 des zweiten Linsenelements 24 an. Der erste Rückflächenbereich 30 weist an dem Übergangspunkt 40, d.h. infinitesimal klein an dem Übergangspunkt 40 angenähert, in der Querschnittsebene 25 eine Tangente 54 auf. Die Rückfläche 36 des zweiten Linsenelements 24 weist an dem Übergangspunkt 40 eine Tangente 56 auf. Die Tangente 54 und die Tangente 56 schneiden einander und schließen somit einen Knickwinkel 58 ein. Die Rückfläche 26 des Brillenglases 10 weist somit in dem Übergangspunkt 40 einen Knick auf. Die Rückfläche 26 des Brillenglases 10 ist somit in dem Übergangspunkt 40 nicht stetig differenzierbar. Die erste Ableitung der Flächenfunktion hat an dieser Stelle einen Sprung. Ein positiver Knickwinkel 58 bedeutet, dass die Rückfläche 36 des zweiten Linsenelements 24 in Richtung eines vorgesehenen Nutzers des Brillenglases 10 abknickt. Entsprechend bewirkt ein negativer Knickwinkel 58, dass die Rückfläche 36 des zweiten Linsenelements 24 relativ zu dem ersten Rückflächenbereich 30 von einem vorgesehenen Nutzer des Brillenglases 10 weg abknickt. In der Querschnittsebene 25 bzw. - in dem dargestellten Beispiel - in der Y-Z-Ebene ist somit ein Winkel von der Tangente 54 des ersten Rückflächenbereichs 30 auf die Tangente 56 der Rückfläche 36 des zweiten Linsenelements 24 positiv.

Eine Tangente der Vorderfläche 34 des zweiten Linsenelements 24 an dem Übergangspunkt 40 in der Querschnittsebene 25 ist mit einem Bezugszeichen 60 gekennzeichnet. Ein Winkel zwischen der Tangente 56 der Rückfläche 36 an dem Übergangspunkt 40 und der Tangente 60 der Vorderfläche 34 an dem Übergangspunkt 40 ist mit einem Bezugszeichen 62 gekennzeichnet und ist der sogenannte Keilrandwinkel 62. Dieser bezeichnet den Prismenkeil des zweiten Linsenelements 24 an dem Übergangspunkt 40. Ein vierter Krümmungsradius 64 der Rückfläche 36 des zweiten Linsenelements 24 an dem Übergangspunkt 40 ist mit einem Bezugszeichen 64 gekennzeichnet. Der entsprechende Krümmungsmittelpunkt des vierten Krümmungsradius 64 ist schematisch mit einem Bezugszeichen 74 gekennzeichnet.

Ein dritter Krümmungsradius 66 der Vorderfläche 34 des zweiten Linsenelements 24 an den Übergangspunkt 40 ist mit einem Bezugszeichen 66 gekennzeichnet. Der entsprechende Krümmungsmittelpunkt des dritten Krümmungsradius 66 ist schematisch mit dem Bezugszeichen 73 gekennzeichnet. Ein zweiter Krümmungsradius 68 der Rückfläche 28 des ersten Linsenelements 18 an dem Übergangspunkt 40 ist mit dem Bezugszeichen 68 gekennzeichnet.

Schematisch ist des Weiteren ein erster Krümmungsradius bzw. ein erster Radius 70 der Vorderfläche 16 des ersten Linsenelements 18 gekennzeichnet.

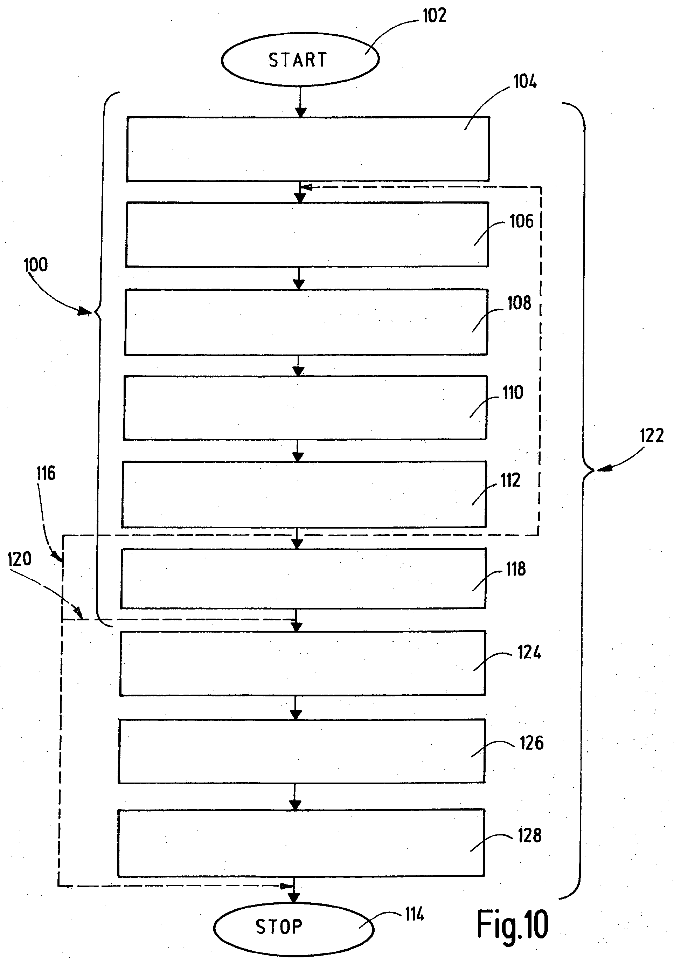

In der Fig. 10 ist ein schematisches Ablaufdiagramm eines Verfahrens 100 zum Auslegen des Brillenglases 10 dargestellt.

Das Verfahren beginnt mit einem Startschritt 102. Zunächst wird in einem Schritt 104 ein erstes Festlegen eines ersten Materials des ersten Linsenelements 18 und eines zweiten Materials des zweiten Linsenelements 24 durchgeführt. Insbesondere sind die Materialien derart zu wählen, dass die Abbezahlen des ersten Linsenelements und des zweiten Linsenelements voneinander verschieden sind, so dass diese zumindest teilweise achromatisch zusammenwirken können.

In einem Schritt des Ermittelns wird dann der zumindest eine Übergangspunkt 40 zwischen dem Grundbereich 20 und dem Achromatbereich 22 auf der Rückfläche 26 des Brillenglases 10 in einem ersten Querschnitt 25 des Brillenglases ermittelt. Dabei kann insbesondere vorgesehen sein, dass der zumindest eine erste Übergangspunkt 40 derart ermittelt wird, dass bei dem Übergang zumindest eines ersten Übergangspunkts 40 ein Farbquerfehler für den Nutzer des Brillenglases 10 geringer als ein vordefinierter Farbquerfehlergrenzwert ist oder gleich einem vordefinierten Farbquerfehlergrenzwert ist.

Ist auf diese Weise der zumindest eine erste Übergangspunkt 40 in der Querschnittsebene 25 festgelegt, folgt ein Schritt des ersten Bestimmens 108. Es versteht sich, dass bei einem rotationssymmetrischen Brillenglases 10 in jeder der Querschnittsebene 25 zwei Übergangspunkte 40 vorhanden sind. In dem Schritt des ersten Bestimmens 108 wird der Keilrandwinkel 62 bestimmt und es wird der Knickwinkel 58 bestimmt. Der Keilrandwinkel und der Knickwinkel werden derart bestimmt, dass eine prismatische Wirkung für den Nutzer des Brillenglases in dem Grundbereich 20 an dem Übergangspunkt 40 und in dem Achromatbereich 22 an dem Übergangspunkt 40 einander entsprechen. Es tritt somit kein Sprung in der prismatischen Wirkung an dem Übergangspunkt 40 auf. Des Weiteren kann durch die beiden Freiheitsgrade des Keilrandwinkels und des Knickwinkels festgelegt werden, durch welchen Sprung sich der Farbquerfehler in dem Übergangspunkt 40 ändert.

In einem Schritt eines zweiten Festlegens 110 wird dann der vierte Krümmungsradius 64 auf der Rückfläche 36 des zumindest einen zweiten Linsenelements 24 in der Querschnittsebene 25 an dem Übergangspunkt 40 festgelegt.

Darauf aufbauend wird dann in einem Schritt eines zweiten Bestimmens 112 der dritte Krümmungsradius 66 der Vorderfläche 34 des zumindest einen zweiten Linsenelements 24 in der Querschnittsebene 25 bestimmt. Dabei wird der dritte Krümmungsradius 66 derart bestimmt, dass eine sphärische Wirkung und eine astigmatische Wirkung des Brillenglases in dem Grundbereich an den Übergangspunkt 40 und eine sphärische Wirkung und eine astigmatische Wirkung des Brillenglases 10 in dem Achromatbereich 22 an dem Übergangspunkt 40 einander entsprechen. Somit tritt kein Sprung in der sphärischen Wirkung oder der astigmatischen Wirkung für einen Nutzer an einem Übergangspunkt 40 auf.

Anschließend an den Schritt 112 kann grundsätzlich vorgesehen sein, dass die Schritte 106, 108, 110 und 112 für eine weitere Querschnittsebene 47 wiederholt werden. Auf diese Weise kann das Brillenglas 10 für eine Vielzahl von Querschnittsebenen 25, 47 ausgelegt werden. Beispielsweise kann vorgesehen sein, mehrere, jeweils zueinander in einem bestimmten Winkel geneigte Querschnittsebenen vorzusehen, um das Brillenglas so vollständig auszulegen. Dabei ist es nicht zwingend, dass die Schritte 106, 108, 110 und 112 für jeden Querschnitt sukzessive durchgeführt werden, die Auslegung und/oder Optimierung kann auch parallel für alle Querschnittsebenen erfolgen.

Das Verfahren zum Auslegen 100 endet dann an einem Stoppschritt 114 entlang einem Abzweig 116.

Das Design des Brillenglases 10 bzw. des ersten Linsenelements 18 und des zweiten Linsenelements 24 ist nun vollständig. Die Verläufe der jeweiligen Vor- und Rückflächen wurden ermittelt, so dass das erste Linsenelement 18, das zweite Linsenelement 24 und damit das gesamte Brillenglas 10 gefertigt werden kann. Insofern weist ein Verfahren 122 zum Herstellen eines Brillenglases 10 das Verfahren 100 zum Auslegen des Brillenglases 10 auf.

In einem optionalen Schritt 118 kann im Anschluss an den Schritt 112 sich noch ein Schritt des Optimierens 118 des ausgelegten Brillenglases mittels eines Raytracing-Verfahrens anschließen. Das Verfahren 100 endet dann anschließend an den Schritt 118 in dem Stoppschritt 114 entlang des Abzweigs 120.

Anschließend an den Schritt des zweiten Bestimmens 112 oder den Schritt des Optimierens 118 liegt dann das Design des ersten Linsenelements 18 und des zweiten Linsenelements 24 fest. In einem Schritt 124 kann somit das erste Linsenelement gefertigt werden.

In einem Schritt 126 wird das zweite Linsenelement gefertigt. Die Schritte 124 und 126 können selbstverständlich auch parallel oder anders herum ausgeführt werden. Letztlich liegen dann in einem Schritt 128 das gefertigte erste Linsenelement und das gefertigte zweite Linsenelement vor. In dem Schritt 128 werden das erste Linsenelement 18 und das zweite Linsenelement 24 miteinander verbunden. Insbesondere können die Linsenelemente 18, 24 miteinander verkittet werden oder versprengt werden.

Das Verfahren zum Herstellen 122 endet dann ebenfalls in dem Stoppschritt 114.

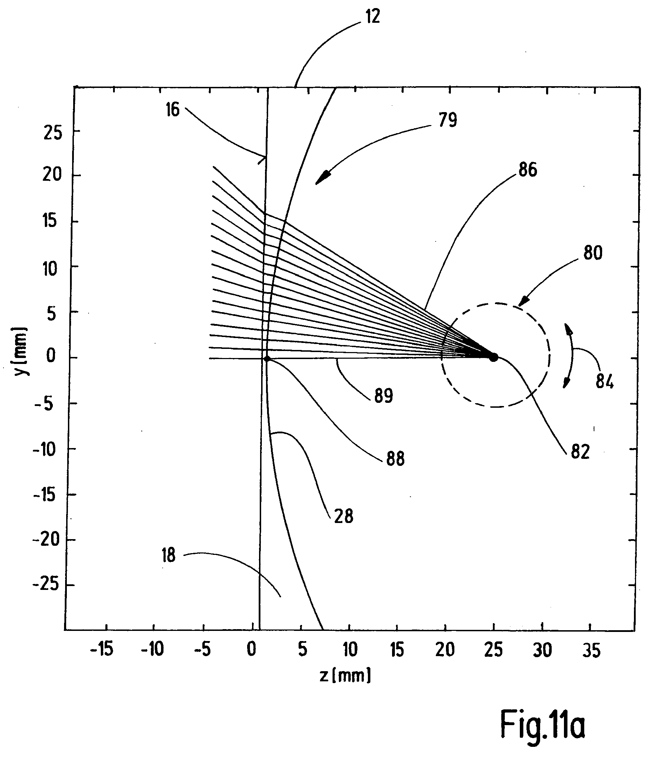

In Fig. 11a bis 11f ist ein Vergleichsbeispiel für ein herkömmliches Brillenglas ausgeführt, das lediglich aus einem einzigen, ersten Linsenelement 18 ausgebildet ist.

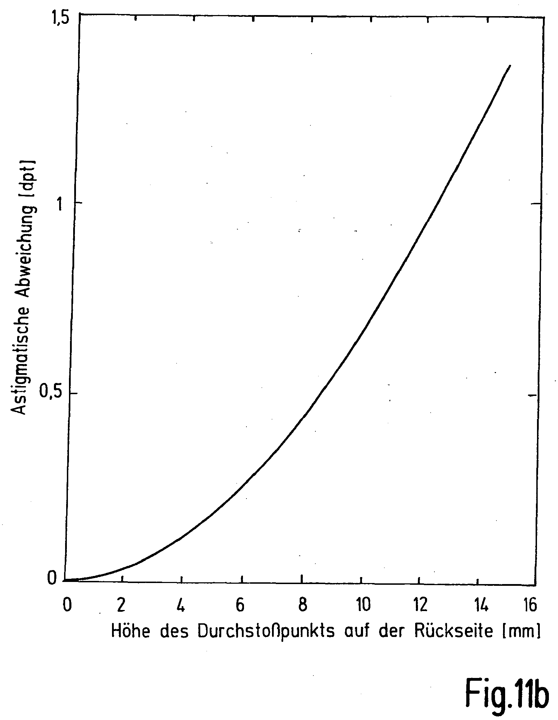

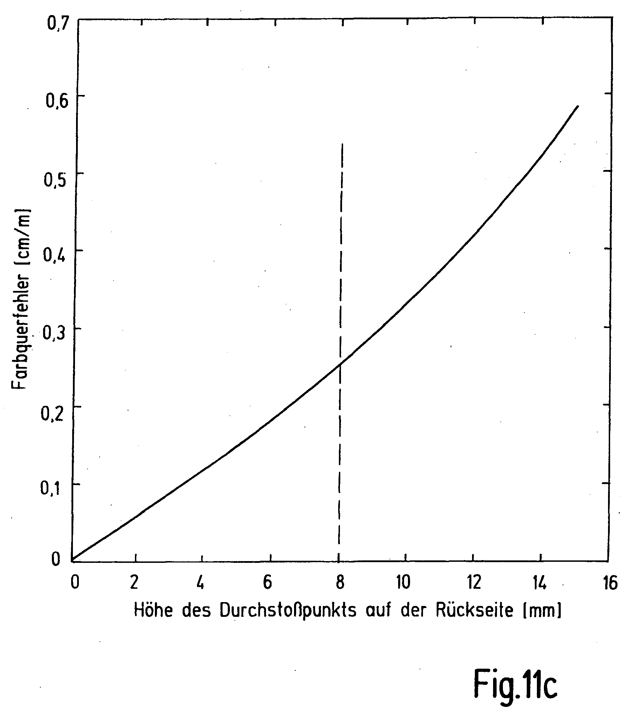

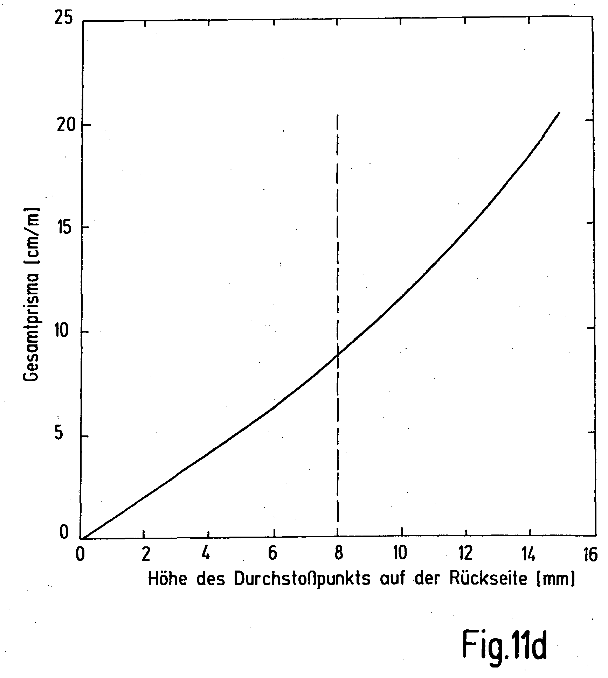

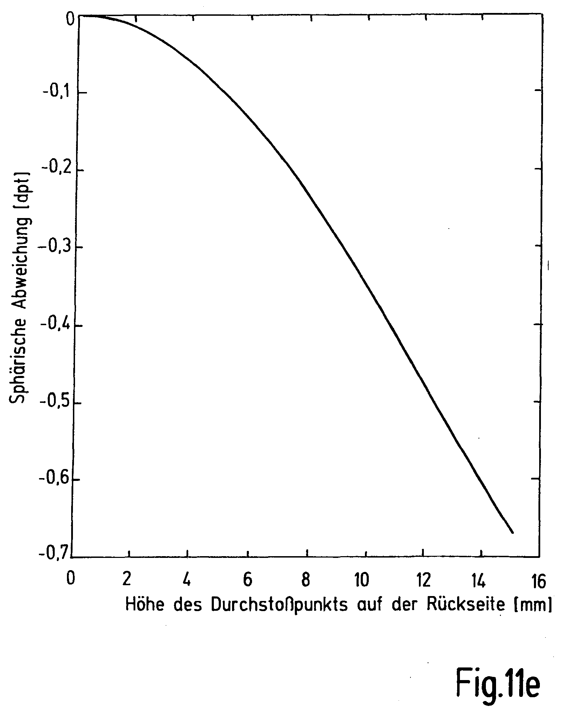

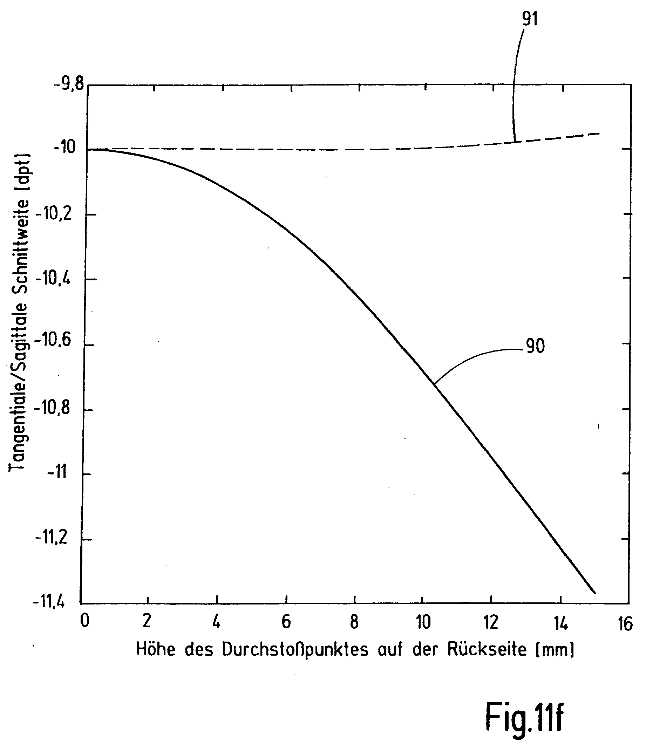

In der Fig. 11a ist ein Querschnitt eines solchen Brillenglases dargestellt. Ein solches, lediglich aus dem ersten Linsenelement 18 bestehendes Brillenglas kann ein Grunddesign 79 bilden, auf dem zunächst nach den Übergangspunkten 40 gesucht wird, bei denen ein paar Querfehler für einen Nutzer 80, dessen Auge schematisch mit gestrichelten Linien als Kreis in der Fig. 11 a eingezeichnet ist, untersucht werden. Der Nutzer 80 hat Nutzerdaten, die u.a. die Lage des Augendrehpunkts 82 angeben. Eine Untersuchung des Verlaufs eines Farbquerfehlers auf der Rückfläche 28 des ersten Linsenelements 18 im Rahmen der Ausdehnung erfolgt, indem von dem Augendrehpunkt 82 ausgehende Hauptstrahlen 86 des Auges des Nutzer 80 und den Verlauf durch das erste Linsenelement 18 bestimmt werden. Die verschiedenen Hauptstrahlen 86 geben dann verschiedene Drehwinkel bzw. Blickrichtungen 84 des Nutzers wieder. Eine entspannte Lage des Auges des Nutzers 80 hat als Hauptstrahl 86 eine Nulldurchblicklinie 89. Die Nulldurchblicklinie 89 schneidet die Rückfläche 28 des ersten Linsenelements 18 in einem Nulldurchblickpunkt 88.

Für das in den Fig. 11a bis 11f dargestellte Vergleichsbeispiel beträgt der Abstand des Augendrehpunkts 280 zu der Rückfläche 28 des ersten Elements 18 entlang der Nulldurchblicklinie 89 24 mm. Die Vorderfläche 16 des ersten Linsenelements 18 ist sphärisch und weist einen Radius von 807 mm auf. Die Rückfläche 28 ist ebenfalls sphärisch und weist einen Radius von 73, 364 mm auf. Das erste Linsenelement 18 ist aus einem Material mit einer Brechzahl von 1,807 und einer Abbezahl von 34,4 ausgebildet. Ein Hauptstrahl 86, der die Rückfläche 28 in einer Höhe Y = 8 mm schneidet, wird dann ein als störend vordefinierter Farbquerfehler von 0,25 cm/m erreicht.

In der Fig. 11b ist beim Verlauf der astigmatischen Abweichung des in Fig. 11a dargestellten Vergleichsbeispiels aufgetragen. In der Fig. 11c ist ein Verlauf des Farbquerfehlers über der Höhe des Durchstoßpunkts eines von dem Augendrehpunkt 82 ausgehenden Hauptstrahls 86 auf der Rückseite 28 des ersten Linsenelements 18 aufgetragen.

Wie zu erkennen ist, beträgt bei einer Höhe von 8 mm auf der Rückseite 28 der Farbquerfehler 0,25 cm pro m. Ist dies der als störend vordefinierte Farbquerfehlergrenzwert und ist festgelegt, dass der Übergangspunkt 40 in der Querschnittsebene dort liegt, wo der Farbquerfehler für den Nutzer 80 dem Farbquerfehlergrenzwert entspricht, so wird entsprechend eine Höhe von 8 mm auf der Rückseite 28 als Übergangspunkt 40 markiert. Zwischen dem Übergangspunkt 40 hin zu dem Rand 12 des Brillenglases ist somit der Achromatbereich 22 zu beschaffen, um den Farbquerfehler zu verringern.

Eine gesamtprismatische Wirkung in der Querschnittsebene, d.h. die insgesamt auftretende Strahlablenkung, ist in der Fig. 11d über der Höhe des Durchstoßpunktes des Hauptstrahls 86 auf der Rückseite des Brillenglases 28 aufgetragen.

In der Fig. 11e ist ein entsprechender Verlauf der sphärischen Abweichung aufgetragen. In der Fig. 11 sind eine tangentiale Schnittweite, d.h. eine Schnittweite in einer den Hauptstrahl 86 enthaltenden Meridianebene, und eine sagittale Schnittweite, d.h. eine Schnittweite in einer den Hauptstrahl 86 enthaltenden Ebene senkrecht zu der Meridianebene, wiederum abhängig von der Höhe des Durchstoßpunkts eines Hauptstrahls 86 auf der Rückseite 28 des Brillenglases 10 aufgetragen. Die tangentiale Schnittweite ist dabei durch die Linie 90, die sagittale Schnittweite durch die Linie 91 dargestellt.

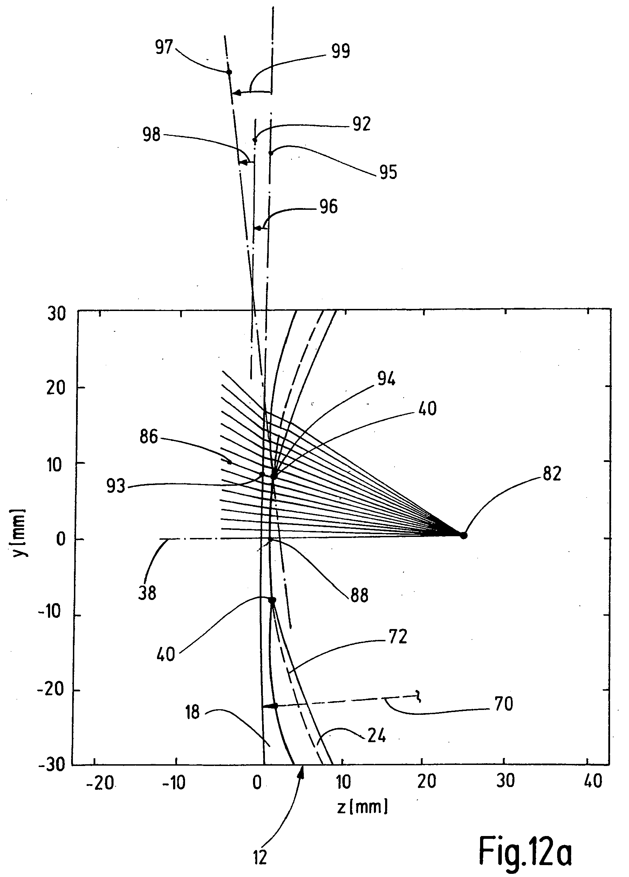

In der Fig. 12a ist ein erstes Beispiel eines erfindungsgemäß ausgelegten Brillenglases dargestellt. Dieses Brillenglas weist die folgenden Werte auf. Der Abstand des Augenmittelpunkts 82 von der Rückfläche 26 beträgt 24 mm. Der erste Radius beträgt 807 mm. Der zweite Radius beträgt 73,364 mm. Die Vorderfläche 16 des ersten Linsenelements 18 und der erste Rückflächenbereich 30 des ersten Linsenelements 18 sind sphärisch ausgebildet. Ein dritter Krümmungsradius an dem Übergangspunkt 40 beträgt 45,514 mm. Der vierte Krümmungsradius an dem Übergangspunkt 40 beträgt 150 mm. Das erste Linsenelement weist eine Brechzahl von 1,807 auf, die Abbezahl des ersten Linsenelements 18 beträgt 34,4. Das zweite Linsenelement weist eine Brechzahl von 1,525 auf. Die Abbezahl des zweiten Linsenelements 24 beträgt 58,3.

Das Brillenglas ist somit rotationssymmetrisch ausgebildet. An der Lage eines Übergangspunkts 40 liegt auf einer Höhe der Rückfläche 26 des Brillenglases 10 von 8 bzw. -8 mm ausgehend von der optischen Achse 38 des Brillenglases 10. Die Vorderfläche 34 und die Rückfläche 36 des zweiten Linsenelements 24 sind sphärisch ausgebildet. Ein jeweiliger Krümmungsmittelpunkt der Fläche liegt jedoch abseits der optischen Achse 38. So liegt der Krümmungsmittelpunkt des dritten Krümmungsradius bei den Koordinaten Y = 14,1 und Z = 46,541. Der Mittelpunkt des vierten Krümmungsradius liegt bei Y = -29,109 und Z = 146,775. Der Knickwinkel beträgt 8,063°. Der Keilrandwinkel beträgt 22,025°. Der Ursprung des in der Fig. 12a dargestellten Y-Z-Koordinatensystems liegt dabei im Schnittpunkt der optischen Achse mit der Vorderfläche 14 des Brillenglases 10.

In der Fig. 12a ist zudem schematisch eine Normalenebene 92 dargestellt. Diese verläuft senkrecht zu der Querschnittsebene 25, die in der dargestellten Ausführungsform in der Y-Z-Ebene liegt. Folglich liegt die Normalenebene 92 in der X-Y-Ebene, Der Hauptstrahl 86 ausgehend von dem Augendrehpunkt 82, der an bzw. in dem Übergangspunkt 40 durch die Rückfläche 26 des Brillenglases 10 stößt, durchstößt die Rückfläche 26 in den Durchstoßpunkt 94. Des Weiteren durchstößt er die Vorderfläche 14 des Brillenglases 10 in einem Durchstoßpunkt 93. Die Tangente der Vorderfläche 14 des Brillenglases 10 ist mit dem Bezugszeichen 95 gekennzeichnet. Der Winkel zu der Normalenebene 92 ist der Winkel W1 und ist mit dem Bezugszeichen 96 gekennzeichnet. Eine Tangente der Vorderfläche 34 des zweiten Linsenelements 24 ist mit dem Bezugszeichen 97 gekennzeichnet. Der Winkel gegenüber der Normalenebene 92 ist mit dem Bezugszeichen 98 gekennzeichnet. Zwischen den Tangenten 95 und 97 liegt der "weitere Keilwinkel", der mit dem Bezugszeichen 99 gekennzeichnet ist. Der Winkel 99 gibt somit den Keilwinkel für einen an dem Übergangspunkt 40 durch den Achromatbereich 22 verlaufenden Hauptstrahl 86 wieder.

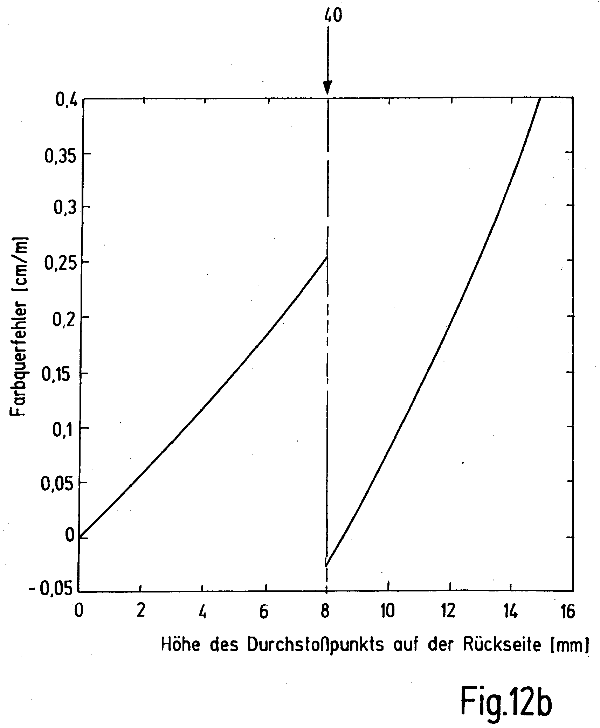

In der Fig. 12b ist zu erkennen, wie sich aufgrund der erfindungsgemäßen Auslegung der Verlauf des Farbquerfehlers über der Höhe des Brillenglases ändert. In den Übergangspunkt 40 tritt ein Sprung ein. Somit tritt ein störender Farbquerfehler von mehr als 0,25 cm/m erst ab einer Höhe von etwa 13 mm anstatt 8 mm auf.

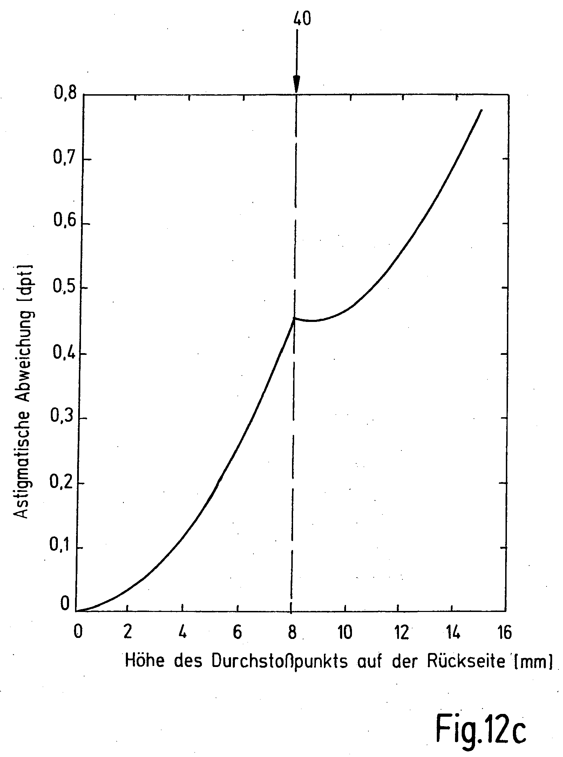

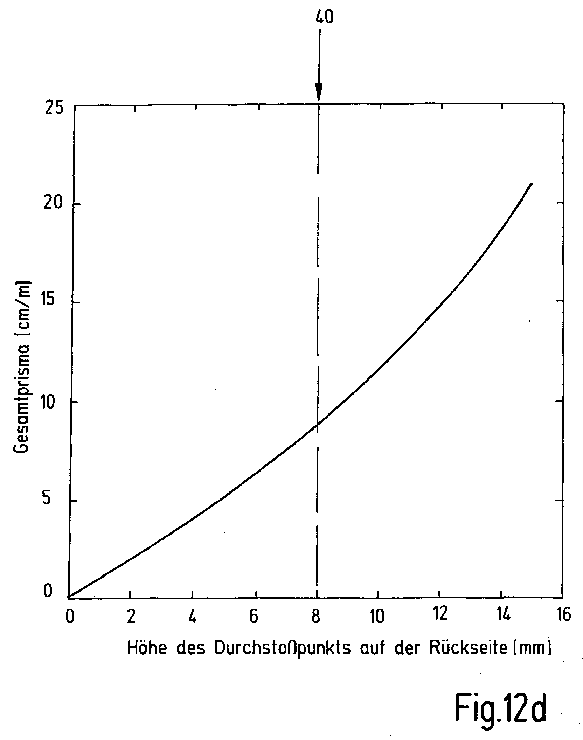

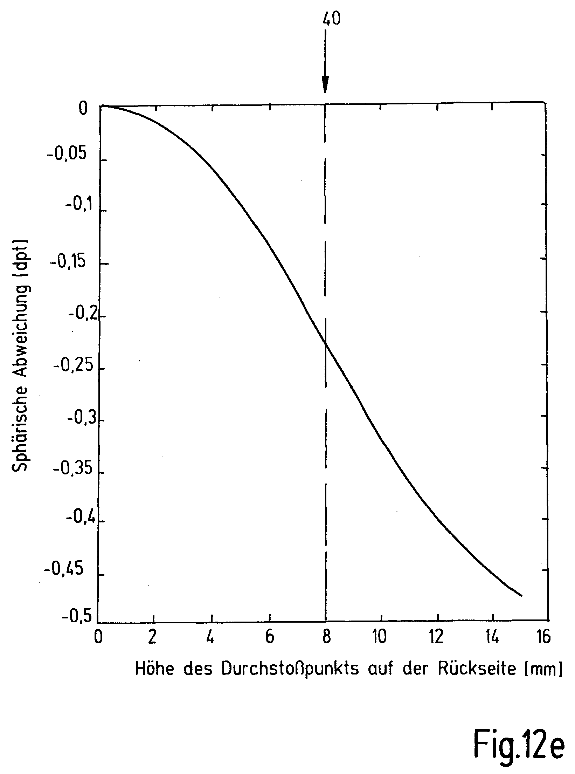

Wie in den Fig. 12c, 12d und 12e zu entnehmen ist, kann darüber hinaus erreicht werden, dass über die Höhe des Brillenglases kontinuierlich Verläufe der astigmatischen Abweichung, des Gesamtprismas und des sphärischen Abweichung erzielt werden können. An dem Übergangspunkt 40 können die Verläufe natürlich einen Knick aufweisen, sie weisen dort jedoch keinen Sprung auf. Insofern ergibt sich an jedem Übergangspunkt 40 kein störender Wirkungssprung.

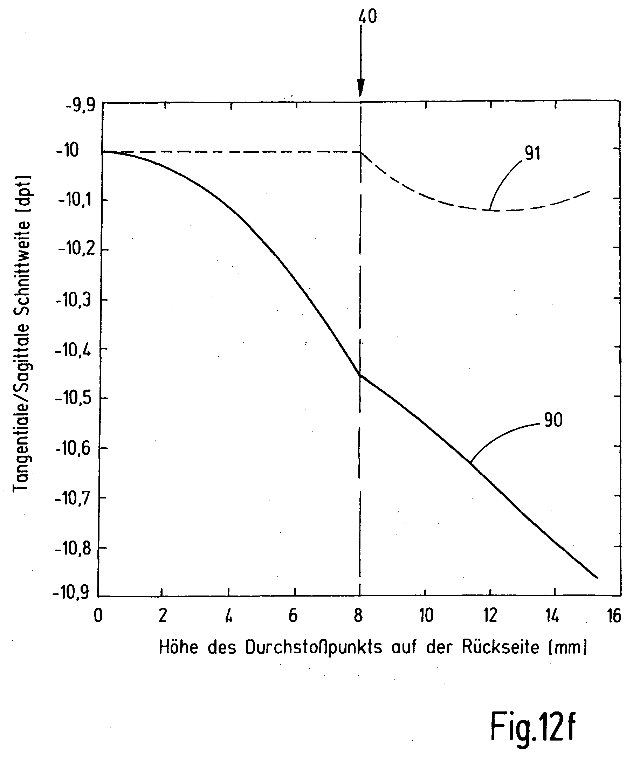

Die tangentiale und sagittale Schnittweite sind in der Fig. 12f aufgetragen. Die tangentiale Schnittweite ist dabei wiederum mit dem Bezugszeichen 90 gekennzeichnet. Die sagittale Schnittweite mit dem Bezugszeichen 91.

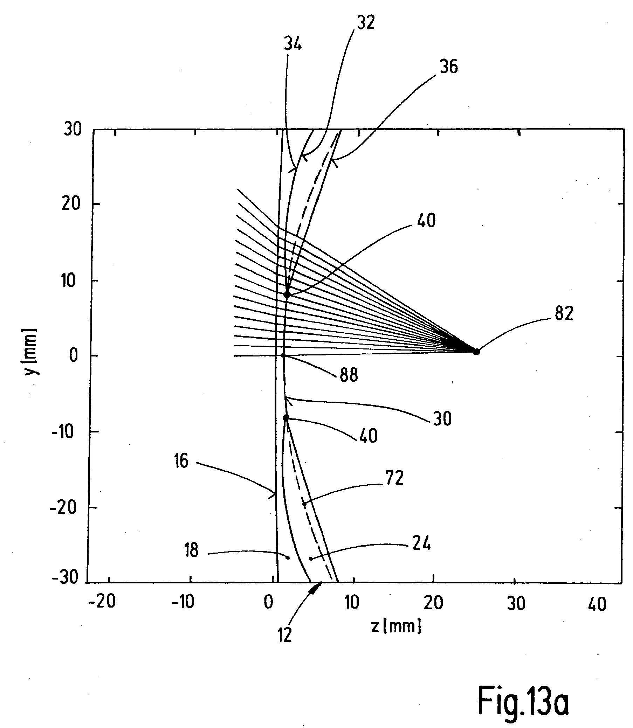

In der Fig. 13a ist noch ein weiteres Ausführungsbeispiel eines erfindungsgemäß ausgelegten bzw. erfindungsgemäßen Brillenglases dargestellt. Gleiche Elemente sind mit gleichen Bezugszeichen gekennzeichnet und werden nicht erneut erläutert. In diesem Ausführungsbeispiel sind die Vorderfläche 34 des zweiten Linsenelements 24 und die Rückfläche 36 des zweiten Linsenelements 24 als Polynome dritter Ordnung ausgebildet. Hierdurch ergibt sich ein zusätzlicher Freiheitsgrad, durch den eine Dicke des Randes 12 des Brillenglases in der in Fig. 13a dargestellten Ausführungsform gegenüber der in der Fig. 12a dargestellten Ausführungsform verringert werden kann.

In dem in der Fig. 13a dargestellten Ausführungsbeispiel beträgt der Abstand des Augendrehpunkts von der Rückfläche des Brillenglases 10 24 mm. Der erste Radius der sphärischen Vorderfläche 16 des ersten Linsenelements 18 beträgt 807 mm. Der zweite Radius des sphärischen ersten Rückflächenbereichs 30 beträgt 73,364 mm. Der dritte Krümmungsradius an dem Übergangspunkt 40 beträgt 45,514 mm. Der vierte Krümmungsradius an dem Übergangspunkt 40 beträgt 150 mm. Das erste Linsenelement 18 weist eine Brechzahl von 1,807 und eine Abbezahl von 34,4 auf. Das zweiten Linsenelement 24 weist eine Brechzahl von 1,807 und eine Abbezahl von 58,3 auf. Wie in dem in der Fig. 12a dargestellten Ausführungsbeispiel beträgt der Knickwinkel 8,063°. Der Keilrandwinkel beträgt ebenfalls wie in der Fig. 12a dargestellten Ausführungsbeispiel 22,025°. Die Übergangspunkte 40 liegen ebenfalls in einer Höhe von ± 8 mm auf der Rückfläche 26 des Brillenglases 10.

Ausgehend von einem Übergangspunkt 40 ist das Polynom Z ($\Delta$Y) gebildet durch 1,43748564 - 0,13523588 $\Delta$Y + 0,01128837 $\Delta Y^2$ + 0,00005 $\Delta Y^3$. Dieses Polynom bildet die Vorderfläche 34 des zweiten Linsenelements 24 aus. Für die Rückfläche 36 des zweiten Linsenelements 24 lässt sich ausgehend von einem Übergangspunkt 40 somit das entsprechende Polynom für die Flächen der Fig. 13a zu Z von $\Delta$Y = 1,43748564 + 0,25532965 $\Delta$Y + 0,00366456 $\Delta Y^2$ - 0,00009 $\Delta Y^3$.

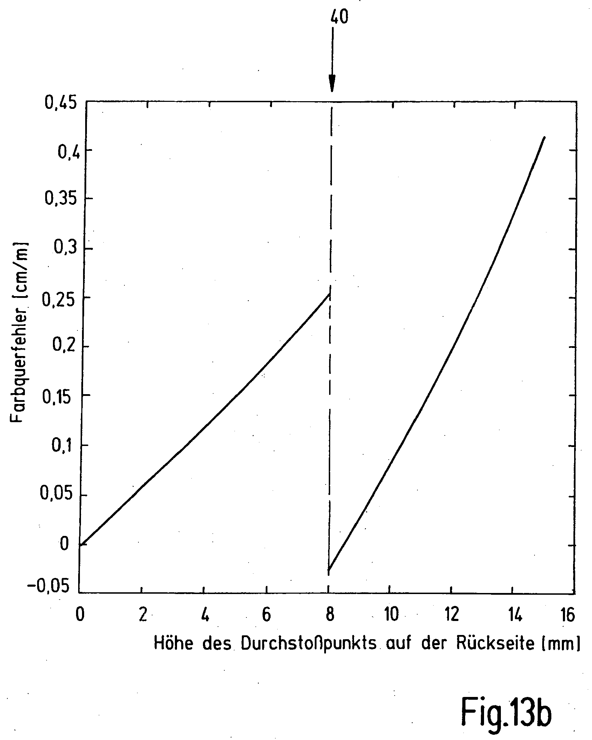

In der Fig. 13b ist wiederum der Verlauf des Farbquerfehlers über der Höhe des Durchstoßpunkts eines Hauptstrahls auf der Rückseite des Brillenglases 10 aufgetragen, wie zu erkennen ist, kann erneut in dem Übergangspunkt der Farbquerfehler sehr deutlich reduziert werden, so dass insgesamt diejenige Höhe des Brillenglases, ab der der Farbquerfehler für einen Nutzer störend wird, vergrößert werden kann.

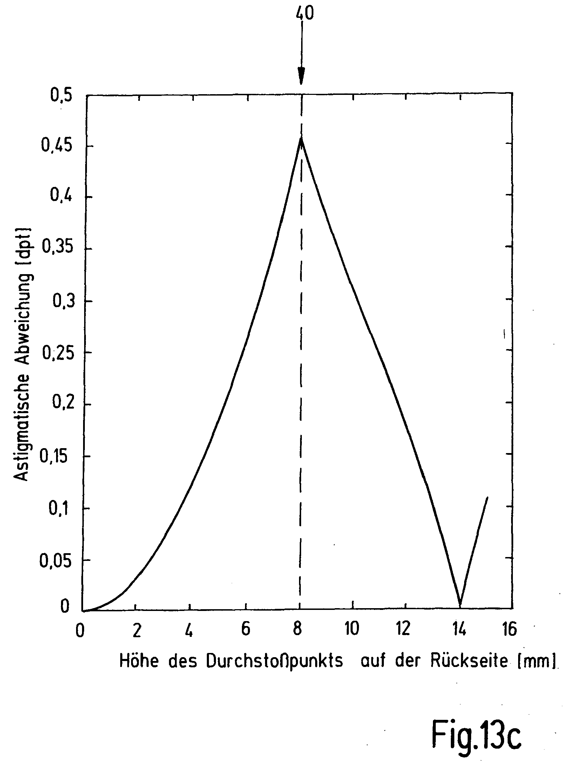

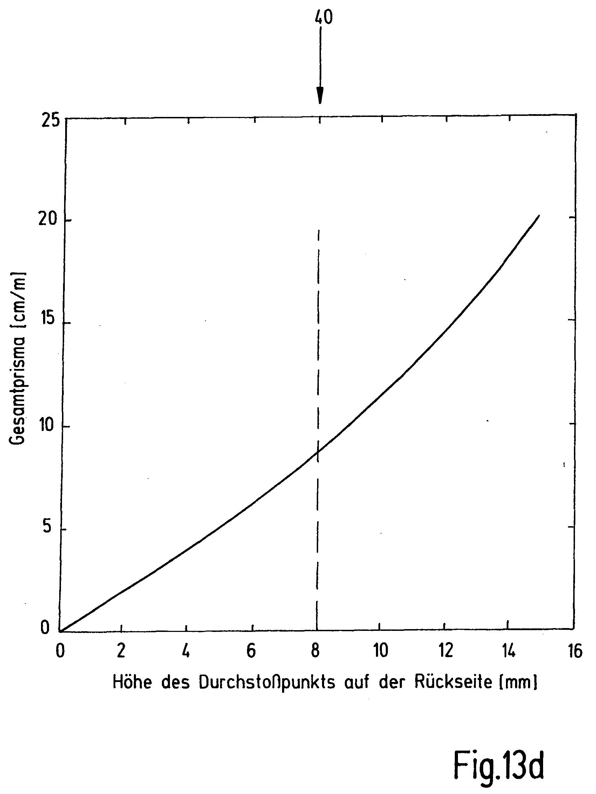

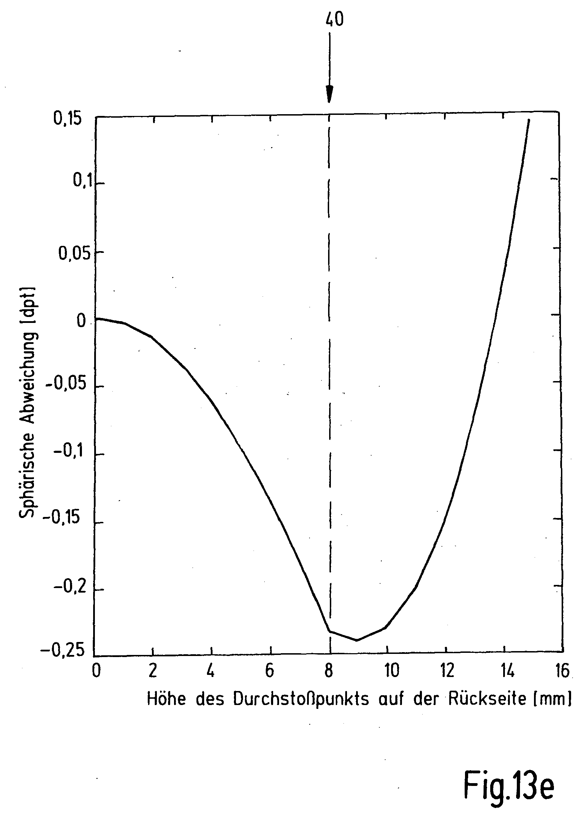

Die Fig. 13c, 13d und 13e zeigen wiederum, dass eine sphärische Wirkung, eine astigmatische Wirkung und eine gesamtprismatische Wirkung einen kontinuierlichen Verlauf über dem Übergangspunkt 40 aufweist. Ein Wirkungssprung an dem Übergangspunkt 40 wird somit vollständig vermieden.

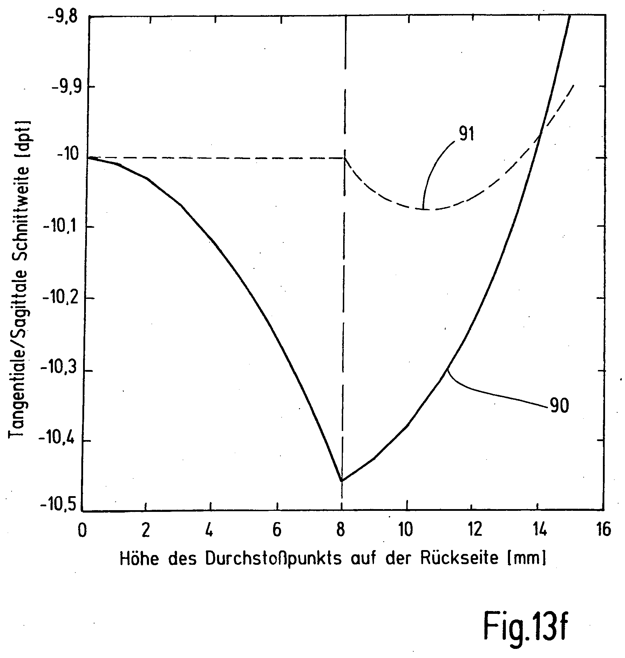

In der Fig. 13f sind wiederum die tangentiale bzw. sagittale Schnittweite aufgetragen. Die tangentiale Schnittweite ist dabei wiederum mit dem Bezugszeichen 90 gekennzeichnet. Die sagittale Schnittweite ist mit dem Bezugszeichen 91 gekennzeichnet.

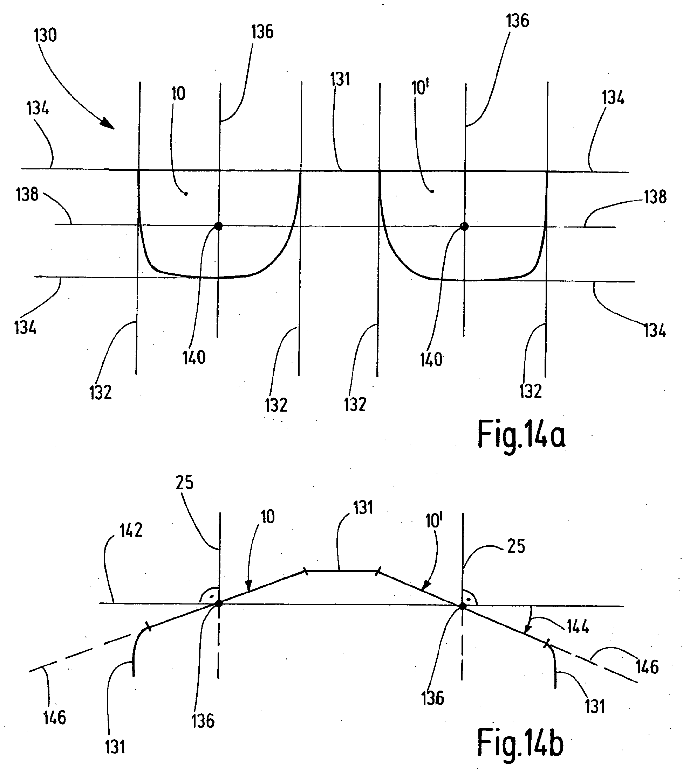

Die Figuren 14a und 14b zeigen eine Ausführungsform einer Brille 130. Die Brille 130 weist eine erstes Brillenglas 10 und ein zweites Brillenglas 10' auf. Das erste Brillenglas 10 und/oder das zweite Brillenglas 10' ist wie voranstehend beschrieben ausgebildet. Die Brillengläser 10, 10' sind in einer Fassung 131 angeordnet.

Für diese Brille wird ein Kastensystem bzw. Kastenmaß auf die dem Fachmann bekannte Weise definiert. Der Kasten jedes Brillenglases 10, 10' wird von vertikalen Tangenten 132 und horizontalen Tangenten des jeweiligen Brillenglases 10, 10' begrenzt. In gleichem Abstand zu jeder der horizontalen Tangenten 134 verläuft für jedes Brillenglas 10, 10' eine horizontale Mittellinie 138. In dem dargestellten Bespiel sind diese identisch. Dies muss jedoch nicht zwingend der Fall sein.

In gleichem Abstand zu jeder der vertikalen Tangenten 132 verläuft für jedes Brillenglas 10, 10' eine vertikale Mittellinie 136. Diejenige Ebene, die beide vertikalen Mittellinien enthält, ist eine Fassungsebene 142, wie in der Figur 14b deutlich ist. Die Fassungsebene 142 kann somit einen Fassungsscheibenwinkel 144 zu Scheibenebenen 146, 146' der Brillengläser 10, 10' aufweisen. Eine Querschnittsebene 25, 47 kann dann normal zu der Fassungsebene 142 verlaufen und enthält den jeweiligen Mittelpunkt (140) nach Kastenmaß.

Des Weiteren umfasst die vorliegende Erfindung Ausführungsformen gemäß der folgenden Sätze:

Satz 1. Verfahren (100) zum Auslegen eines Brillenglases (10) für einen Nutzer (80), wobei das Brillenglas (10) ein erstes Linsenelement (18) und zumindest ein zweites Linsenelement (24) aufweist, wobei das erste Linsenelement (18) eine Vorderfläche (16) und eine einen ersten Rückflächenbereich (30) und einen zweiten Rückflächenbereich (32) aufweisende Rückfläche (28) aufweist, wobei das zumindest eine zweite Linsenelement (24) eine Vorderfläche (34) und eine Rückfläche (36) aufweist, wobei der zweite Rückflächenbereich (32) des ersten Linsenelements (18) und die Vorderfläche (34) des zweiten Linsenelements (24) aneinander anliegen, wobei eine Vorderfläche (14) des Brillenglases (10) von der Vorderfläche (16) des ersten Linsenelements (18) ausgebildet ist und eine Rückfläche (26) des Brillenglases (10) in einem Grundbereich (20) von dem ersten Rückflächenbereich (30) des ersten Linsenelements (18) ausgebildet ist und in einem Achromatbereich (22) von der Rückfläche (36) des zumindest einen zweiten Linsenelements (24) ausgebildet ist, gekennzeichnet durch die folgenden Schritte:

- erstes Festlegen (104) eines ersten Materials des ersten Linsenelements (18) und eines zweiten Materials des zumindest einen zweiten Linsenelements (24),

- Ermitteln (106) zumindest eines ersten Übergangspunktes (40) zwischen dem Grundbereich (20) und dem Achromatbereich (22) auf der Rückfläche (26) des Brillenglases (10), wobei eine erste Querschnittsebene (25) des Brillenglases (10) durch den zumindest einen ersten Übergangspunkt (40) verläuft,

- erstes Bestimmen (108) eines Keilrandwinkels (62) zwischen der Rückfläche (36) des zumindest einen zweiten Linsenelements (24) und der Vorderfläche (34) des zumindest einen zweiten Linsenelements (24) an dem zumindest einen ersten Übergangspunkt (40) in der ersten Querschnittsebene (25) und Bestimmen eines Knickwinkels (58) zwischen einer Tangente (54) des ersten Rückflächenbereichs (30) in der ersten Querschnittsebene (25) an dem zumindest einen ersten Übergangspunkt (40) und einer Tangente (56) der Rückfläche (36) des zumindest einen zweiten Linsenelements (24) in der ersten Querschnittsebene (25) an dem zumindest einen ersten Übergangspunkt (40) derart, dass für den Nutzer (80) eine prismatische Wirkung des Brillenglases (10) in dem Grundbereich (20) an dem zumindest einen ersten Übergangspunkt (40) einer prismatischen Wirkung des Brillenglases (10) in dem Achromatbereich (22) an dem zumindest einen ersten Übergangspunkt (40) entspricht,

- zweites Festlegen (110) eines vierten Krümmungsradius (64) der Rückfläche (36) des zumindest einen zweiten Linsenelements (24) in der ersten Querschnittsebene (25) an dem Übergangspunkt (40),

- zweites Bestimmen (112) eines dritten Krümmungsradius (66) der Vorderfläche (34) des zumindest einen zweiten Linsenelements (24) des zumindest einen zweiten Rückflächenbereichs (32) des ersten Linsenelements (18) in der ersten Querschnittsebene (25) an dem Übergangspunkt (40) derart, dass für einen Nutzer (80) des Brillenglases (10) eine sphärische Wirkung und eine astigmatische Wirkung des Brillenglases (10) in dem Grundbereich (20) an dem Übergangspunkt (40) einer sphärischen Wirkung und einer astigmatische Wirkung des Brillenglases (10) in dem Achromatbereich (22) an dem Übergangspunkt (40) entspricht.

Satz 2. Verfahren nach Satz 1, dadurch gekennzeichnet, dass das erste Material des ersten Linsenelements (18) und das zweite Material des zumindest einen zweiten Linsenelements (24) derart festgelegt werden, dass das erste Linsenelement (18) und das zumindest eine zweite Linsenelement (24) zumindest teilweise achromatisch zusammenwirken.

Satz 3. Verfahren nach Satz 1 oder 2, dadurch gekennzeichnet, dass der Schritt des ersten Festlegens das Festlegen eines Grunddesigns (79) des ersten Linsenelements (18) aufweist, wobei das Grunddesign (79) zumindest die Vorderfläche (16) des ersten Linsenelements (18) und den ersten Rückflächenbereich (30) des ersten Linsenelements (18) aufweist.

Satz 4. Verfahren nach einem der Sätze 1 bis 3, dadurch gekennzeichnet, dass die Vorderfläche (16) des ersten Linsenelements (18) sphärisch ist und der Schritt des ersten Festlegens (104) ein Festlegen eines ersten Radius (70) der Vorderfläche (16) des ersten Linsenelements (18) aufweist.

Satz 5. Verfahren nach einem der Sätze 1 bis 4, dadurch gekennzeichnet, dass der erste Rückflächenbereich (30) des ersten Linsenelements (18) in dem Grundbereich (20) sphärisch ist und der Schritt des ersten Festlegens (104) ein Festlegen eines zweiten Radius (68) des ersten Rückflächenbereichs (30) aufweist.

Satz 6. Verfahren nach einem der Sätze 1 bis 5, dadurch gekennzeichnet, dass in dem Schritt des ersten Bestimmens (108) des Knickwinkels (58) der Knickwinkel (58) abhängig von dem ersten Material, dem zumindest einen zweiten Material, einer vorbestimmten Änderung des Farbquerfehlers für den Nutzer (80) des Brillenglases (10) in dem Übergangspunkt (40), der prismatischen Wirkung des ersten Linsenelements (18) in der ersten Querschnittsebene (25) in dem Grundbereich (20) an dem Übergangspunkt (40), einem Neigungswinkel (96) der Vorderfläche (16) des ersten Linsenelements (18) gegenüber einer Normalenebene (92) der ersten Querschnittsebene (25) in einem Durchstoßpunkt (93) durch die Vorderfläche (16) des ersten Linsenelements (18) eines von einem Augendrehpunkt (82) des Nutzers (80) ausgehenden Hauptstrahls (86) durch den zumindest einen ersten Übergangspunkt (40), und einem Neigungswinkel (98) des ersten Rückflächenbereichs (30) gegenüber der Normalenebene (92) in dem zumindest einen ersten Übergangspunkt (40) bestimmt wird.

Satz 7. Verfahren nach einem der Sätze 1 bis 6, dadurch gekennzeichnet, dass zumindest die Schritte des ersten Bestimmens (108) des Keilrandwinkels (62) und des Knickwinkels (58) und des zumindest einen zweiten Bestimmens (112) des dritten Krümmungsradius (66) in einer Mehrzahl von verschiedenen Querschnittsebenen (25, 47) und in jeder Querschnittsebene (25, 47) der Mehrzahl von Querschnittsebenen (25, 47) für zumindest einen Übergangspunkt (40) durchgeführt werden.

Satz 8. Verfahren nach einem der Sätze 1 bis 7, dadurch gekennzeichnet, dass das Brillenglas (10) rotationssymmetrisch zu einer optischen Achse (38) des Brillenglases (10) ist und die Schritte des ersten Bestimmens (108) des Keilrandwinkels (62) und des Knickwinkels (58) und des Bestimmens (112) des dritten Krümmungsradius (66) in nur einer Querschnittsebene (25) durchgeführt werden.

Satz 9. Verfahren nach einem der Sätze 1 bis 8, dadurch gekennzeichnet, dass wobei die erste Querschnittsebene (25) eine Meridianebene des Brillenglases (10) ist.

Satz 10. Verfahren nach einem der Sätze 1 bis 9, dadurch gekennzeichnet, dass die Querschnittsebene (25) den jeweiligen zumindest einen ersten Übergangspunkt (40), einen Augendrehpunkt (82) des Nutzers und einen Nulldurchblickpunkt (88) auf der Rückfläche (26) des Brillenglases (10) aufweist.

Satz 11. Verfahren nach einem der Sätze 1 bis 10, dadurch gekennzeichnet, dass die Vorderfläche (34) des zumindest einen zweiten Linsenelements (24) und/oder die Rückfläche (36) des zumindest einen zweiten Linsenelements (24) in der ersten Querschnittsebene (25) eine konstante Krümmung aufweist.

Satz 12. Verfahren nach einem der Sätze 1 bis 11, dadurch gekennzeichnet, dass ein Krümmungsmittelpunkt (37, 38) in der ersten Querschnittsebene (25) der Vorderfläche (34) des zumindest einen zweiten Linsenelements (24) und/oder der Rückfläche (36) des zumindest einen zweiten Linsenelements (24) außerhalb einer Symmetrieachse (38, 42) der Vorderfläche (34) des zumindest einen zweiten Linsenelements (24) bzw. der Rückfläche (36) des zumindest einen zweiten Linsenelements (24) liegt.

Satz 13. Verfahren nach einem der Sätze 1 bis 10, dadurch gekennzeichnet, dass die Vorderfläche (34) des zumindest einen zweiten Linsenelements (24) und/oder die Rückfläche (36) des zumindest einen zweiten Linsenelements (24) asphärisch ist.

Satz 14. Verfahren nach einem der Sätze 1 bis 13, dadurch gekennzeichnet, dass das Ermitteln (106) des zumindest einen Übergangspunkts (40) basierend auf einem vorbestimmten Farbquerfehlergrenzwert für einen Farbquerfehler für den Nutzer (80) erfolgt, wobei für den Nutzer (80) der Farbquerfehler in dem zumindest einen ersten Übergangspunkt (40) kleiner oder gleich dem Farbquerfehlergrenzwert ist.

Satz 15. Verfahren nach einem der Sätze 1 bis 14, dadurch gekennzeichnet, dass der zumindest eine erste Übergangspunkt (40) festgelegt wird, indem eine Verteilung eines Farbquerfehlers für den Nutzer (80) auf der Rückfläche (28) des ersten Linsenelements (18) ermittelt wird und der zumindest eine erste Übergangspunkt (40) in einen Punkt auf der Rückfläche (28) des ersten Linsenelements (18) gesetzt wird, in dem der Farbquerfehler kleiner oder gleich einem vorbestimmten Farbquerfehlergrenzwert ist.

Satz 6. Verfahren (122) zum Herstellen eines Brillenglases (10), mit den Schritten:

- Auslegen (100) des Brillenglases (10) nach einem Verfahren gemäß einem der Sätze 1 bis 15, und

- Fertigen (124) des ersten Linsenelements (18),

- Fertigen (126) des zumindest einen zweiten Linsenelements (24), und

- Verbinden (128) des ersten Linsenelements (18) und des zumindest einen zweiten Linsenelements (24).

Satz 17. Computerprogrammprodukt mit Programmcode, der dazu ausgelegt ist, ein Verfahren nach einem der Sätze 1 bis 16 auszuführen, wenn das Computerprogrammprodukt auf einer Datenverarbeitungseinrichtung ausgeführt wird.

Satz 18. Brillenglas (10) mit einem ersten Linsenelement (18) und einem zweiten Linsenelement (24), wobei das erste Linsenelement (18) aus einem ersten Material und das zweite Linsenelement (24) aus einem zweiten Material ausgebildet ist, wobei das erste Material und das zweite Material zumindest teilweise achromatisch zusammenwirken, wobei das erste Linsenelement (18) eine Vorderfläche (16) und eine einen ersten Rückflächenbereich (30) und einen zweiten Rückflächenbereich (32) aufweisende Rückfläche (28) aufweist, wobei das zumindest eine zweite Linsenelement (24) eine Vorderfläche (34) und eine Rückfläche (36) aufweist, wobei der zweite Rückflächenbereich (32) des ersten Linsenelements (18) und die Vorderfläche (34) des zweiten Linsenelements (24) aneinander anliegen, wobei eine Vorderfläche (14) des Brillenglases (10) von der Vorderfläche (16) des ersten Linsenelements (18) ausgebildet ist und eine Rückfläche (26) des Brillenglases (10) in einem Grundbereich (20) von dem ersten Rückflächenbereich (30) des ersten Linsenelements (18) ausgebildet ist und in einem Achromatbereich (22) von der Rückfläche (36) des zumindest einen zweiten Linsenelements (24) ausgebildet ist, wobei der erste Rückflächenbereich (30) des ersten Linsenelements (18) an zumindest einem ersten Übergangspunkt (40) zwischen dem Grundbereich (20) und dem Achromatbereich (22) in einer ersten Querschnittsebene (25) des Brillenglases (10) eine erste Tangente (54) aufweist, wobei die Rückfläche (36) des zumindest einen zweiten Elements (24) an dem zumindest einen ersten Übergangspunkt (40) in der ersten Querschnittsebene (25) eine zweite Tangente (56) aufweist, dadurch gekennzeichnet, dass in der ersten Querschnittsebene (25) die erste Tangente (54) und die zweite Tangente (56) einander unter einem Knickwinkel (58) schneiden, wobei ein Betrag des Knickwinkels (58) kleiner als 90° ist.

Satz 19. Brillenglas (10) nach Anspruch 18, dadurch gekennzeichnet, dass das Brillenglas (10) in der ersten Querschnittsebene (25) zwei Übergangspunkte (40) aufweist, wobei die jeweilige erste Tangente (54) des ersten Rückflächenbereichs (30) und die jeweilige zweite Tangente (56) der Rückfläche (36) des zumindest einen zweiten Linsenelements (24) an jedem der zwei Übergangspunkte (40) einander schneiden.

Satz 20. Brillenglas (10) nach Anspruch 18 oder 19, dadurch gekennzeichnet, dass die erste Tangente (54) und die zweite Tangente (56) einander an dem zumindest einen ersten Übergangspunkt (40) in einem Achslagenbereich von mehr als 160° schneiden.

Satz 21. Brillenglas (10) nach einem der Sätze 18 bis 20, dadurch gekennzeichnet, dass die jeweilige erste Tangente (54) und die jeweilige zweite Tangente (56) einander in jeder Querschnittsebene (25) des Brillenglases (10) schneiden.

Satz 22. Brillenglas (10) nach einem der Sätze 18 bis 21, dadurch gekennzeichnet, dass das erste Linsenelement (18) in dem Grundbereich (20) und in dem Achromatbereich (22) angeordnet ist, wobei eine Vorderfläche des Brillenglases (10) aus einer Vorderfläche (16) des ersten Linsenelements (18) ausgebildet ist, wobei in dem Achromatbereich (22) ein zweiter Rückflächenbereich (32) des ersten Linsenelements (18) und eine Vorderfläche (34) des zumindest einen zweiten Linsenelements (24) aneinander anliegen, und wobei die wobei die Vorderfläche und die Rückfläche (36) des zumindest einen zweiten Linsenelements (24) an dem zumindest einen ersten Übergangspunkt (40) in der zumindest einen ersten Querschnittsebene (25) zusammenlaufen und zwischen sich einen Keilrandwinkel (62) ausbilden.

Satz 23. Brillenglas (10) nach einem der Sätze 18 bis 22, dadurch gekennzeichnet, dass die Vorderfläche (34) des zumindest einen zweiten Linsenelements (24) und/oder die Rückfläche (36) des zumindest einen zweiten Linsenelements (24) in der ersten Querschnittsebene (25) eine konstante Krümmung aufweist.

Satz 24. Brillenglas (10) nach Anspruch 23, dadurch gekennzeichnet, dass ein Krümmungsmittelpunkt in der zumindest einen ersten Querschnittsebene (25) der Vorderfläche (34) des zumindest einen zweiten Linsenelements (24) außerhalb einer Symmetrieachse (38, 42) der Vorderfläche (34) des zumindest einen zweiten Linsenelements (24) liegt und/oder ein Krümmungsmittelpunkt in der zumindest einen ersten Querschnittsebene (25) der Rückfläche (36) des zumindest einen zweiten Linsenelements (24) außerhalb einer Symmetrieachse (38, 42) der Rückfläche (36) des zumindest einen zweiten Linsenelements (24) liegt.

Satz 25. Brillenglas (10) nach einem der Sätze 18 bis 22, dadurch gekennzeichnet, dass die Vorderfläche (34) des zumindest einen zweiten Linsenelements (24) und/oder die Rückfläche (36) des zumindest einen zweiten Linsenelements (24) asphärisch ist.

Satz 26. Brillenglas (10) nach einem der Sätze 18 bis 25, dadurch gekennzeichnet, dass das Brillenglas (10) rotationssymmetrisch zu einer optischen Achse (38) ist, wobei die erste Querschnittsebene (25) oder jede Querschnittsebene (25, 47) eine Meridianebene des Brillenglases (10) ist.

Satz 27. Brillenglas (10) nach einem der Sätze 18 bis 26, dadurch gekennzeichnet, dass die erste Querschnittsebene (25) oder jede Querschnittsebene (25, 47) derart durch das Brillenglas (10) verläuft, dass sie das Brillenglas (10) in einer Normalenebene (92) senkrecht zu sich in zwei gleich große Flächen (44, 46) aufteilt.

Satz 28. Brillenglas (10) nach einem der Sätze 18 bis 27, dadurch gekennzeichnet, dass sich der Achromatbereich (22) in der ersten Querschnittsebene (25) von dem zumindest einen ersten Übergangspunkt (40) aus bis zu einem Rand (12) des Brillenglases (10) erstreckt.

Satz 29. Brille (130) mit einer Fassung (131) und einem ersten und einem zweiten Brillenglas (10, 10'), dadurch gekennzeichnet, dass das erste und/oder das zweite Brillenglas (10, 10') ein Brillenglas nach einem der Sätze 18 bis 28 ist, wobei die Querschnittsebene (25) oder jede Querschnittsebene (25, 47) des jeweiligen Brillenglases (10, 10') einen Mittelpunkt (140) nach Kastensystem des jeweiligen Brillenglases (10, 10') enthält und normal zu einer Fassungsebene (142) der Brille (130) verläuft, wobei die Fassungsebene (142) die vertikalen Mittellinien (136) des Kastens des ersten und des zweiten Brillenglases (10, 10') enthält.

**Patentansprüche**

1. Computerimplementiertes Verfahren (100) zum Auslegen eines Brillenglases (10) für einen Nutzer (80), wobei das Brillenglas (10) ein erstes Linsenelement (18) und zumindest ein zweites Linsenelement (24) aufweist, wobei das erste Linsenelement (18) eine Vorderfläche (16) und eine einen ersten Rückflächenbereich (30) und einen zweiten Rückflächenbereich (32) aufweisende Rückfläche (28) aufweist, wobei das zumindest eine zweite Linsenelement (24) eine Vorderfläche (34) und eine Rückfläche (36) aufweist, wobei der zweite Rückflächenbereich (32) des ersten Linsenelements (18) und die Vorderfläche (34) des zweiten Linsenelements (24) aneinander anliegen, wobei eine Vorderfläche (14) des Brillenglases (10) von der Vorderfläche (16) des ersten Linsenelements (18) ausgebildet ist und eine Rückfläche (26) des Brillenglases (10) in einem Grundbereich (20) von dem ersten Rückflächenbereich (30) des ersten Linsenelements (18) ausgebildet ist und in einem Achromatbereich (22) von der Rückfläche (36) des zumindest einen zweiten Linsenelements (24) ausgebildet ist, **gekennzeichnet durch** die folgenden Schritte:

   - erstes Festlegen (104) eines ersten Materials des ersten Linsenelements (18) und eines zweiten Materials des zumindest einen zweiten Linsenelements (24),
   - Ermitteln (106) zumindest eines ersten Übergangspunktes (40) zwischen dem Grundbereich (20) und dem Achromatbereich (22) auf der Rückfläche (26) des Brillenglases (10), wobei eine erste Querschnittsebene (25) des Brillenglases (10) **durch** den zumindest einen ersten Übergangspunkt (40) verläuft,
   - erstes Bestimmen (108) eines Keilrandwinkels (62) zwischen der Rückfläche (36) des zumindest einen zweiten Linsenelements (24) und der Vorderfläche (34) des zumindest einen zweiten Linsenelements (24) an dem zumindest einen ersten Übergangspunkt (40) in der ersten Querschnittsebene (25) und Bestimmen eines Knickwinkels (58) zwischen einer Tangente (54) des ersten Rückflächenbereichs (30) in der ersten Querschnittsebene (25) an dem zumindest einen ersten Übergangspunkt (40) und einer Tangente (56) der Rückfläche (36) des zumindest einen zweiten Linsenelements (24) in der ersten Querschnittsebene (25) an dem zumindest einen ersten Übergangspunkt (40) derart, dass für den Nutzer (80) eine prismatische Wirkung des Brillenglases (10) in dem Grundbereich (20) an dem zumindest einen ersten Übergangspunkt (40) einer prismatischen Wirkung des Brillenglases (10) in dem Achromatbereich (22) an dem zumindest einen ersten Übergangspunkt (40) entspricht,

- zweites Festlegen (110) eines vierten Krümmungsradius (64) der Rückfläche (36) des zumindest einen zweiten Linsenelements (24) in der ersten Querschnittsebene (25) an dem Übergangspunkt (40),

- zweites Bestimmen (112) eines dritten Krümmungsradius (66) der Vorderfläche (34) des zumindest einen zweiten Linsenelements (24) des zumindest einen zweiten Rückflächenbereichs (32) des ersten Linsenelements (18) in der ersten Querschnittsebene (25) an dem Übergangspunkt (40) derart, dass für einen Nutzer (80) des Brillenglases (10) eine sphärische Wirkung und eine astigmatische Wirkung des Brillenglases (10) in dem Grundbereich (20) an dem Übergangspunkt (40) einer sphärischen Wirkung und einer astigmatische Wirkung des Brillenglases (10) in dem Achromatbereich (22) an dem Übergangspunkt (40) entspricht.

2. Computerimplementiertes Verfahren nach Anspruch 1, **dadurch gekennzeichnet, dass** die Vorderfläche (16) des ersten Linsenelements (18) sphärisch ist und der Schritt des ersten Festlegens (104) ein Festlegen eines ersten Radius (70) der Vorderfläche (16) des ersten Linsenelements (18) aufweist.

3. Computerimplementiertes Verfahren nach Anspruch 1 oder 2, **dadurch gekennzeichnet, dass** der erste Rückflächenbereich (30) des ersten Linsenelements (18) in dem Grundbereich (20) sphärisch ist und der Schritt des ersten Festlegens (104) ein Festlegen eines zweiten Radius (68) des ersten Rückflächenbereichs (30) aufweist.

4. Computerimplementiertes Verfahren nach einem der Ansprüche 1 bis 3, **dadurch gekennzeichnet, dass** in dem Schritt des ersten Bestimmens (108) des Knickwinkels (58) der Knickwinkel (58) abhängig von dem ersten Material, dem zumindest einen zweiten Material, einer vorbestimmten Änderung des Farbquerfehlers für den Nutzer (80) des Brillenglases (10) in dem Übergangspunkt (40), der prismatischen Wirkung des ersten Linsenelements (18) in der ersten Querschnittsebene (25) in dem Grundbereich (20) an dem Übergangspunkt (40), einem Neigungswinkel (96) der Vorderfläche (16) des ersten Linsenelements (18) gegenüber einer Normalenebene (92) der ersten Querschnittsebene (25) in einem Durchstoßpunkt (93) durch die Vorderfläche (16) des ersten Linsenelements (18) eines von einem Augendrehpunkt (82) des Nutzers (80) ausgehenden Hauptstrahls (86) durch den zumindest einen ersten Übergangspunkt (40), und einem Neigungswinkel (98) des ersten Rückflächenbereichs (30) gegenüber der Normalenebene (92) in dem zumindest einen ersten Übergangspunkt (40) bestimmt wird.

5. Computerimplementiertes Verfahren nach einem der Ansprüche 1 bis 4, **dadurch gekennzeichnet, dass** zumindest die Schritte des ersten Bestimmens (108) des Keilrandwinkels (62) und des Knickwinkels (58) und des zumindest einen zweiten Bestimmens (112) des dritten Krümmungsradius (66) in einer Mehrzahl von verschiedenen Querschnittsebenen (25, 47) und in jeder Querschnittsebene (25, 47) der Mehrzahl von Querschnittsebenen (25, 47) für zumindest einen Übergangspunkt (40) durchgeführt werden.

6. Computerimplementiertes Verfahren nach einem der Ansprüche 1 bis 5, **dadurch gekennzeichnet, dass** das Brillenglas (10) rotationssymmetrisch zu einer optischen Achse (38) des Brillenglases (10) ist und die Schritte des ersten Bestimmens (108) des Keilrandwinkels (62) und des Knickwinkels (58) und des Bestimmens (112) des dritten Krümmungsradius (66) in nur einer Querschnittsebene (25) durchgeführt werden.

7. Computerimplementiertes Verfahren nach einem der Ansprüche 1 bis 6, **dadurch gekennzeichnet, dass** die Querschnittsebene (25) den jeweiligen zumindest einen ersten Übergangspunkt (40), einen Augendrehpunkt (82) des Nutzers und einen Nulldurchblickpunkt (88) auf der Rückfläche (26) des Brillenglases (10) aufweist.

8. Computerimplementiertes Verfahren nach einem der Ansprüche 1 bis 7, **dadurch gekennzeichnet, dass** ein Krümmungsmittelpunkt (37, 38) in der ersten Querschnittsebene (25) der Vorderfläche (34) des zumindest einen zweiten Linsenelements (24) und/oder der Rückfläche (36) des zumindest einen zweiten Linsenelements (24) außerhalb einer Symmetrieachse (38, 42) der Vorderfläche (34) des zumindest einen zweiten Linsenelements (24) bzw. der Rückfläche (36) des zumindest einen zweiten Linsenelements (24) liegt

9. Computerimplementiertes Verfahren nach einem der Ansprüche 1 bis 8, **dadurch gekennzeichnet, dass** der zumindest eine erste Übergangspunkt (40) festgelegt wird, indem eine Verteilung eines Farbquerfehlers für den Nutzer (80) auf der Rückfläche (28) des ersten Linsenelements (18) ermittelt wird und der zumindest eine erste Übergangspunkt (40) in einen Punkt auf der Rückfläche (28) des ersten Linsenelements (18) gesetzt wird, in dem der Farbquerfehler kleiner oder gleich einem vorbestimmten Farbquerfehlergrenzwert ist.

10. Verfahren (122) zum Herstellen eines Brillenglases (10), mit den Schritten:

- Auslegen (100) des Brillenglases (10) nach einem Verfahren zum Auslegen eines Brillenglases (10) für einen Nutzer (80), wobei das Brillenglas (10) ein erstes Linsenelement (18) und zumindest ein zweites Linsenelement (24) aufweist, wobei das erste Linsenelement (18) eine Vorderfläche (16) und eine einen ersten Rückflächenbereich (30) und einen zweiten Rückflächenbereich (32) aufweisende Rückfläche (28) aufweist, wobei das zumindest eine zweite Linsenelement (24) eine Vorderfläche (34) und eine Rückfläche (36) aufweist, wobei der zweite Rückflächenbereich (32) des ersten Linsenelements (18) und die Vorderfläche (34) des zweiten Linsenelements (24) aneinander anliegen, wobei eine Vorderfläche (14) des Brillenglases (10) von der Vorderfläche (16) des ersten Linsenelements (18) ausgebildet ist und eine Rückfläche (26) des Brillenglases (10) in einem Grundbereich (20) von dem ersten Rückflächenbereich (30) des ersten Linsenelements (18) ausgebildet ist und in einem Achromatbereich (22) von der Rückfläche (36) des zumindest einen zweiten Linsenelements (24) ausgebildet ist, mit folgenden Schritten:

• erstes Festlegen (104) eines ersten Materials des ersten Linsenelements (18) und eines zweiten Materials des zumindest einen zweiten Linsenelements (24),
• Ermitteln (106) zumindest eines ersten Übergangspunktes (40) zwischen dem Grundbereich (20) und dem Achromatbereich (22) auf der Rückfläche (26) des Brillenglases (10), wobei eine erste Querschnittsebene (25) des Brillenglases (10) durch den zumindest einen ersten Übergangspunkt (40) verläuft,
• erstes Bestimmen (108) eines Keilrandwinkels (62) zwischen der Rückfläche (36) des zumindest einen zweiten Linsenelements (24) und der Vorderfläche (34) des zumindest einen zweiten Linsenelements (24) an dem zumindest einen ersten Übergangspunkt (40) in der ersten Querschnittsebene (25) und Bestimmen eines Knickwinkels (58) zwischen einer Tangente (54) des ersten Rückflächenbereichs (30) in der ersten Querschnittsebene (25) an dem zumindest einen ersten Obergangspunkt (40) und einer Tangente (56) der Rückfläche (36) des zumindest einen zweiten Linsenelements (24) in der ersten Querschnittsebene (25) an dem zumindest einen ersten Übergangspunkt (40) derart, dass für den Nutzer (80) eine prismatische Wirkung des Brillenglases (10) in dem Grundbereich (20) an dem zumindest einen ersten Übergangspunkt (40) einer prismatischen Wirkung des Brillenglases (10) in dem Achromatbereich (22) an dem zumindest einen ersten Übergangspunkt (40) entspricht,
• zweites Festlegen (110) eines vierten Krümmungsradius (64) der Rückfläche (36) des zumindest einen zweiten Linsenelements (24) in der ersten Querschnittsebene (25) an dem Übergangspunkt (40),
• zweites Bestimmen (112) eines dritten Krümmungsradius (66) der Vorderfläche (34) des zumindest einen zweiten Linsenelements (24) des zumindest einen zweiten Rückflächenbereichs (32) des ersten Linsenelements (18) in der ersten Querschnittsebene (25) an dem Übergangspunkt (40) derart, dass für einen Nutzer (80) des Brillenglases (10) eine sphärische Wirkung und eine astigmatische Wirkung des Brillenglases (10) in dem Grundbereich (20) an dem Übergangspunkt (40) einer sphärischen Wirkung und einer astigmatische Wirkung des Brillenglases (10) in dem Achromatbereich (22) an dem Übergangspunkt (40) entspricht, und

- Fertigen (124) des ersten Linsenelements (18),
- Fertigen (126) des zumindest einen zweiten Linsenelements (24), und
- Verbinden (128) des ersten Linsenelements (18) und des zumindest einen zweiten Linsenelements (24).

11. Computerprogrammprodukt mit Programmcode, der dazu ausgelegt ist, ein Verfahren zum Auslegen eines Brillenglases (10) für einen Nutzer (80), wobei das Brillenglas (10) ein erstes Linsenelement (18) und zumindest ein zweites Linsenelement (24) aufweist, wobei das erste Linsenelement (18) eine Vorderfläche (16) und eine einen ersten Rückflächenbereich (30) und einen zweiten Rückflächenbereich (32) aufweisende Rückfläche (28) aufweist, wobei das zumindest eine zweite Linsenelement (24) eine Vorderfläche (34) und eine Rückfläche (36) aufweist, wobei der zweite Rückflächenbereich (32) des ersten Linsenelements (18) und die Vorderfläche (34) des zweiten Linsenelements (24) aneinander anliegen, wobei eine Vorderfläche (14) des Brillenglases (10) von der Vorderfläche (16) des ersten Linsenelements (18) ausgebildet ist und eine Rückfläche (26) des Brillenglases (10) in einem Grundbereich (20) von dem ersten Rückflächenbereich (30) des ersten Linsenelements (18) ausgebildet ist und in einem Achromatbereich (22) von der Rückfläche (36) des zumindest einen zweiten Linsenelements (24) ausgebildet ist, mit folgenden Schritten:

- erstes Festlegen (104) eines ersten Materials des ersten Linsenelements (18) und eines zweiten Materials des zumindest einen zweiten Linsenelements (24),
- Ermitteln (106) zumindest eines ersten Übergangspunktes (40) zwischen dem Grundbereich (20) und dem Achromatbereich (22) auf der Rückfläche (26) des Brillenglases (10), wobei eine erste Querschnittsebene (25) des Brillenglases (10) durch den zumindest einen ersten Übergangspunkt (40) verläuft,
- erstes Bestimmen (108) eines Keilrandwinkels (62) zwischen der Rückfläche (36) des zumindest einen zweiten Linsenelements (24) und der Vorderfläche (34) des zumindest einen zweiten Linsenelements (24) an dem zumindest einen ersten Übergangspunkt (40) in der ersten Querschnittsebene (25) und Bestimmen eines Knickwinkels (58) zwischen einer Tangente (54) des ersten Rückflächenbereichs (30) in der ersten Querschnittsebene (25) an dem zumindest einen ersten Übergangspunkt (40) und einer Tangente (56) der Rückfläche (36) des zumindest einen zweiten Linsenelements (24) in der ersten Querschnittsebene (25) an dem zumindest einen ersten Übergangspunkt (40) derart, dass für den Nutzer (80) eine prismatische Wirkung des Brillenglases (10) in dem Grundbereich (20) an dem zumindest einen ersten Übergangspunkt (40) einer prismatischen Wirkung des Brillenglases (10) in dem Achromatbereich (22) an dem zumindest einen ersten Übergangspunkt (40) entspricht,
- zweites Festlegen (110) eines vierten Krümmungsradius (64) der Rückfläche (36) des zumindest einen zweiten Linsenelements (24) in der ersten Querschnittsebene (25) an dem Übergangspunkt (40),
- zweites Bestimmen (112) eines dritten Krümmungsradius (66) der Vorderfläche (34) des zumindest einen zweiten Linsenelements (24) des zumindest einen zweiten Rückflächenbereichs (32) des ersten Linsenelements (18) in der ersten Querschnittsebene (25) an dem Übergangspunkt (40) derart, dass für einen Nutzer (80) des Brillenglases (10) eine sphärische Wirkung und eine astigmatische Wirkung des Brillenglases (10) in dem Grundbereich (20) an dem Übergangspunkt (40) einer sphärischen Wirkung und einer astigmatische Wirkung des Brillenglases (10) in dem Achromatbereich (22) an dem Übergangspunkt (40) entspricht;

auszuführen, wenn das Computerprogrammprodukt auf einer Datenverarbeitungseinrichtung ausgeführt wird.

12. Brillenglas (10) mit einem ersten Linsenelement (18) und einem zweiten Linsenelement (24), wobei das erste Linsenelement (18) aus einem ersten Material und das zweite Linsenelement (24) aus einem zweiten Material ausgebildet ist wobei das erste Material und das zweite Material zumindest teilweise achromatisch zusammenwirken, wobei das erste Linsenelement (18) eine Vorderfläche (16) und eine einen ersten Rückflächenbereich (30) und einen zweiten Rückflächenbereich (32) aufweisende Rückfläche (28) aufweist, wobei das zumindest eine zweite Linsenelement (24) eine Vorderfläche (34) und eine Rückfläche (36) aufweist, wobei der zweite Rückflächenbereich (32) des ersten Linsenelements (18) und die Vorderfläche (34) des zweiten Linsenelements (24) aneinander anliegen, wobei eine Vorderfläche (14) des Brillenglases (10) von der Vorderfläche (16) des ersten Linsenelements (18) ausgebildet ist und eine Rückfläche (26) des Brillenglases (10) in einem Grundbereich (20) von dem ersten Rückflächenbereich (30) des ersten Linsenelements (18) ausgebildet ist und in einem Achromatbereich (22) von der Rückfläche (36) des zumindest einen zweiten Linsenelements (24) ausgebildet ist, wobei der erste Rückflächenbereich (30) des ersten Linsenelements (18) an zumindest einem ersten Übergangspunkt (40) zwischen dem Grundbereich (20) und dem Achromatbereich (22) in einer ersten Querschnittsebene (25) des Brillenglases (10) eine erste Tangente (54) aufweist, wobei die Rückfläche (36) des zumindest einen zweiten Elements (24) an dem zumindest einen ersten Übergangspunkt (40) in der ersten Querschnittsebene (25) eine zweite Tangente (56) aufweist, **dadurch gekennzeichnet, dass** in der ersten Querschnittsebene (25) die erste Tangente (54) und die zweite Tangente (56) einander unter einem Knickwinkel (58) schneiden, wobei ein Betrag des Knickwinkels (58) kleiner als 90° ist.

13. Brillenglas (10) nach Anspruch 12, **dadurch gekennzeichnet, dass** das Brillenglas (10) in der ersten Querschnittsebene (25) zwei Übergangspunkte (40) aufweist, wobei die jeweilige erste Tangente (54) des ersten Rückflächenbereichs (30) und die jeweilige zweite Tangente (56) der Rückfläche (36) des zumindest einen zweiten Linsenelements (24) an jedem der zwei Übergangspunkte (40) einander schneiden.

14. Brillenglas (10) nach Anspruch 12 oder 13, **dadurch gekennzeichnet, dass** die jeweilige erste Tangente (54) und die jeweilige zweite Tangente (56) einander in jeder Querschnittsebene (25) des Brillenglases (10) schneiden.

15. Brillenglas (10) nach einem der Ansprüche 12 bis 14, **dadurch gekennzeichnet, dass** das erste Linsenelement (18) in dem Grundbereich (20) und in dem Achromatbereich (22) angeordnet ist, wobei eine Vorderfläche des Brillenglases (10) aus einer Vorderfläche (16) des ersten Linsenelements (18) ausgebildet ist, wobei in dem Achromatbereich (22) ein zweiter Rückflächenbereich (32) des ersten Linsenelements (18) und eine Vorderfläche (34) des zumindest einen zweiten Linsenelements (24) aneinander anliegen, und wobei die wobei die Vorderfläche und die Rückfläche (36) des zumindest einen zweiten Linsenelements (24) an dem zumindest einen ersten Übergangspunkt (40) in der zumindest einen ersten Querschnittsebene (25) zusammenlaufen und zwischen sich einen Keilrandwinkel (62) ausbilden.

16. Brillenglas (10) nach einem der Ansprüche 12 bis 15, **dadurch gekennzeichnet, dass** sich der Achromatbereich (22) in der ersten Querschnittsebene (25) von dem zumindest einen ersten Übergangspunkt (40) aus bis zu einem Rand (12) des Brillenglases (10) erstreckt.

17. Brille (130) mit einer Fassung (131) und einem ersten und einem zweiten Brillenglas (10, 10'), **dadurch gekennzeichnet, dass** das erste und/oder das zweite Brillenglas (10, 10') ein Brillenglas nach einem der Ansprüche 12 bis 16 ist, wobei die Querschnittsebene (25) oder jede Querschnittsebene (25, 47) des jeweiligen Brillenglases (10, 10') einen Mittelpunkt (140) nach Kastensystem des jeweiligen Brillenglases (10, 10') enthält und normal zu einer Fassungsebene (142) der Brille (130) verläuft, wobei die Fassungsebene (142) die vertikalen Mittellinien (136) des Kastens des ersten und des zweiten Brillenglases (10, 10') enthält.

**Claims**

1. Computer-implemented method (100) for configuring a spectacle lens (10) for a user (80), the spectacle lens (10) comprising a first lenticular element (18) and at least one second lenticular element (24), the first lenticular element (18) having a front surface (16) and a back surface (28) that comprises a first back surface region (30) and a second back surface region (32), the at least one second lenticular element (24) comprising a front surface (34) and a back surface (36), the second back surface region (32) of the first lenticular element (18) and the front surface (34) of the second lenticular element (24) being contiguous, a front surface (14) of the spectacle lens (10) being formed by the front surface (16) of the first lenticular element (18) and a back surface (26) of the spectacle lens (10) being formed in a base region (20) by the first back surface region (30) of the first lenticular element (18) and in an achromatic region (22) by the back surface (36) of the at least one second lenticular element (24), **characterized by** the following steps:

   - first establishment (104) of a first material of the first lenticular element (18) and of a second material of the at least one second lenticular element (24),
   - ascertainment (106) of at least one first transition point (40) between the base region (20) and the achromatic region (22) on the back surface (26) of the spectacle lens (10), a first cross-sectional plane (25) of the spectacle lens (10) extending through the at least one first transition point (40),
   - first determination (108) of a wedge edge angle (62) between the back surface (36) of the at least one second lenticular element (24) and the front surface (34) of the at least one second lenticular element (24) at the at least one first transition point (40) in the first cross-sectional plane (25) and determination of a kink angle (58) between a tangent (54) of the first back surface region (30) in the first cross-sectional plane (25) at the at least one first transition point (40) and a tangent (56) of the back surface (36) of the at least one second lenticular element (24) in the first cross-sectional plane (25) at the at least one first transition point (40), in such a way that a prismatic effect of the spectacle lens (10) in the base region (20) at the at least one first transition point (40) corresponds for the user (80) to a prismatic effect of the spectacle lens (10) in the achromatic region (22) at the at least one first transition point (40),
   - second establishment (110) of a fourth radius of curvature (64) of the back surface (36) of the at least one second lenticular element (24) in the first cross-sectional plane (25) at the transition point (40),
   - second determination (112) of a third radius of curvature (66) of the front surface (34) of the at least one second lenticular element (24) of the at least one second back surface region (32) of the first lenticular element (18) in the first cross-sectional plane (25) at the transition point (40), in such a way that a spherical power and an astigmatic power of the spectacle lens (10) in the base region (20) at the transition point (40) correspond for a user (80) of the spectacle lens (10) to a spherical power and an astigmatic power of the spectacle lens (10) in the achromatic region (22) at the transition point (40).

2. Computer-implemented method according to Claim 1, **characterized in that** the front surface (16) of the first lenticular element (18) is spherical and the first establishment step (104) comprises establishment of a first radius (70) of the front surface (16) of the first lenticular element (18).

3. Computer-implemented method according to Claim 1 or 2, **characterized in that** the first back surface region (30) of the first lenticular element (18) is spherical in the base region (20), and the first establishment step (104) comprises establishment of a second radius (68) of the first back surface region (30).

**4.** Computer-implemented method according to one of Claims 1 to 3, **characterized in that** in the step of the first determination (108) of the kink angle (58), the kink angle (58) is determined as a function of the first material, the at least one second material, a predetermined variation of the transverse chromatic aberration for the user (80) of the spectacle lens (10) at the transition point (40), the prismatic effect of the first lenticular element (18) in the first cross-sectional plane (25) in the base region (20) at the transition point (40), an inclination angle (96) of the front surface (16) of the first lenticular element (18) relative to a normal plane (92) of the first cross-sectional plane (25) at a crossing point (93) through the front surface (16) of the first lenticular element (18) of a principal ray (86) coming from an eye rotation point (82) of the user (80) through the at least one first transition point (40), and an inclination angle (98) of the first back surface region (30) relative to the normal plane (92) at the at least one first transition point (40).

**5.** Computer-implemented method according to one of Claims 1 to 4, **characterized in that** at least the steps of the first determination (108) of the wedge edge angle (62) and the kink angle (58) and of the at least one second determination (112) of the third radius of curvature (66) are carried out in a multiplicity of different cross-sectional planes (25, 47), and for at least one transition point (40) in each cross-sectional plane (25, 47) of the multiplicity of cross-sectional planes (25, 47).

**6.** Computer-implemented method according to one of Claims 1 to 5, **characterized in that** the spectacle lens (10) is rotationally symmetrical with respect to an optical axis (38) of the spectacle lens (10), and the steps of the first determination (108) of the wedge edge angle (62) and the kink angle (58) and of the determination (112) of the third radius of curvature (66) are carried out in only one cross-sectional plane (25).

**7.** Computer-implemented method according to one of Claims 1 to 6, **characterized in that** the cross-sectional plane (25) comprises the respective at least one first transition point (40), an eye rotation point (82) of the user and a zero visual point (88) on the back surface (26) of the spectacle lens (10).

**8.** Computer-implemented method according to one of Claims 1 to 7, **characterized in that** a centre of curvature (37, 38) of the front surface (34) of the at least one second lenticular element (24) and/or of the back surface (36) of the at least one second lenticular element (24) in the first cross-sectional plane (25) lies outside a symmetry axis (38, 42) of the front surface (34) of the at least one second lenticular element (24) or respectively of the back surface (36) of the at least one second lenticular element (24).

**9.** Computer-implemented method according to one of Claims 1 to 8, **characterized in that** the at least one first transition point (40) is established by ascertaining a distribution of a transverse chromatic aberration for the user (80) on the back surface (28) of the first lenticular element (18), and the at least one first transition point (40) is set at a point on the back surface (28) of the first lenticular element (18) at which the transverse chromatic aberration is less than or equal to a predetermined transverse chromatic aberration limit value.

**10.** Method (122) for producing a spectacle lens (10), comprising the steps:

- configuration (100) of the spectacle lens (10) by a method for configuring a spectacle lens (10) for a user (80), the spectacle lens (10) comprising a first lenticular element (18) and at least one second lenticular element (24), the first lenticular element (18) having a front surface (16) and a back surface (28) that comprises a first back surface region (30) and a second back surface region (32), the at least one second lenticular element (24) comprising a front surface (34) and a back surface (36), the second back surface region (32) of the first lenticular element (18) and the front surface (34) of the second lenticular element (24) being contiguous, a front surface (14) of the spectacle lens (10) being formed by the front surface (16) of the first lenticular element (18) and a back surface (26) of the spectacle lens (10) being formed in a base region (20) by the first back surface region (30) of the first lenticular element (18) and in an achromatic region (22) by the back surface (36) of the at least one second lenticular element (24), comprising the following steps:

• first establishment (104) of a first material of the first lenticular element (18) and of a second material of the at least one second lenticular element (24),
• ascertainment (106) of at least one first transition point (40) between the base region (20) and the achromatic region (22) on the back surface (26) of the spectacle lens (10), a first cross-sectional plane (25) of the spectacle lens (10) extending through the at least one first transition point (40),
• first determination (108) of a wedge edge angle (62) between the back surface (36) of the at least one second lenticular element (24) and the front surface (34) of the at least one second lenticular element (24) at the at least one first transition point (40) in the first cross-sectional plane (25) and determination of a kink angle (58) between a tangent (54) of the first back surface region (30) in the first cross-sectional plane (25) at the at least one first transition point (40) and a tangent (56) of the back surface (36) of the at least one second lenticular element (24) in the first cross-sectional plane (25) at the at least one first transition point (40), in such a way that a prismatic effect of the spectacle lens (10) in the base region (20) at the at least one first transition point (40) corresponds for the user (80) to a prismatic effect of the spectacle lens (10) in the achromatic region (22) at the at least one first transition point (40),

• second establishment (110) of a fourth radius of curvature (64) of the back surface (36) of the at least one second lenticular element (24) in the first cross-sectional plane (25) at the transition point (40),

• second determination (112) of a third radius of curvature (66) of the front surface (34) of the at least one second lenticular element (24) of the at least one second back surface region (32) of the first lenticular element (18) in the first cross-sectional plane (25) at the transition point (40), in such a way that a spherical power and an astigmatic power of the spectacle lens (10) in the base region (20) at the transition point (40) correspond for a user (80) of the spectacle lens (10) to a spherical power and an astigmatic power of the spectacle lens (10) in the achromatic region (22) at the transition point (40), and

- manufacture (124) of the first lenticular element (18),
- manufacture (126) of the at least one second lenticular element (24), and
- connection (128) of the first lenticular element (18) and the at least one second lenticular element (24).

11. Computer program product having program code which is configured in order to carry out a method for configuring a spectacle lens (10) for a user (80), the spectacle lens (10) comprising a first lenticular element (18) and at least one second lenticular element (24), the first lenticular element (18) having a front surface (16) and a back surface (28) that comprises a first back surface region (30) and a second back surface region (32), the at least one second lenticular element (24) comprising a front surface (34) and a back surface (36), the second back surface region (32) of the first lenticular element (18) and the front surface (34) of the second lenticular element (24) being contiguous, a front surface (14) of the spectacle lens (10) being formed by the front surface (16) of the first lenticular element (18) and a back surface (26) of the spectacle lens (10) being formed in a base region (20) by the first back surface region (30) of the first lenticular element (18) and in an achromatic region (22) by the back surface (36) of the at least one second lenticular element (24), comprising the following steps:

- first establishment (104) of a first material of the first lenticular element (18) and of a second material of the at least one second lenticular element (24),
- ascertainment (106) of at least one first transition point (40) between the base region (20) and the achromatic region (22) on the back surface (26) of the spectacle lens (10), a first cross-sectional plane (25) of the spectacle lens (10) extending through the at least one first transition point (40),
- first determination (108) of a wedge edge angle (62) between the back surface (36) of the at least one second lenticular element (24) and the front surface (34) of the at least one second lenticular element (24) at the at least one first transition point (40) in the first cross-sectional plane (25) and determination of a kink angle (58) between a tangent (54) of the first back surface region (30) in the first cross-sectional plane (25) at the at least one first transition point (40) and a tangent (56) of the back surface (36) of the at least one second lenticular element (24) in the first cross-sectional plane (25) at the at least one first transition point (40), in such a way that a prismatic effect of the spectacle lens (10) in the base region (20) at the at least one first transition point (40) corresponds for the user (80) to a prismatic effect of the spectacle lens (10) in the achromatic region (22) at the at least one first transition point (40),
- second establishment (110) of a fourth radius of curvature (64) of the back surface (36) of the at least one second lenticular element (24) in the first cross-sectional plane (25) at the transition point (40),
- second determination (112) of a third radius of curvature (66) of the front surface (34) of the at least one second lenticular element (24) of the at least one second back surface region (32) of the first lenticular element (18) in the first cross-sectional plane (25) at the transition point (40), in such a way that a spherical power and an astigmatic power of the spectacle lens (10) in the base region (20) at the transition point (40) correspond for a user (80) of the spectacle lens (10) to a spherical power and an astigmatic power of the spectacle lens (10) in the achromatic region (22) at the transition point (40);

when the computer program product is run on a data-processing device.

12. Spectacle lens (10) comprising a first lenticular element (18) and a second lenticular element (24), the first lenticular element (18) being formed from a first material and the second lenticular element (24) being formed from a second material, the first material and the second material interacting at least partially achromatically, the first lenticular element (18) having a front surface (16) and a back surface (28) that comprises a first back surface region (30) and a second back surface region (32), the at least one second lenticular element (24) comprising a front surface (34) and a back surface (36), the second back surface region (32) of the first lenticular element (18) and the front surface (34) of the second lenticular element (24) being contiguous, a front surface (14) of the spectacle lens (10) being formed by the front surface (16) of the first lenticular element (18) and a back surface (26) of the spectacle lens (10) being formed in a base region (20) by the first back surface region (30) of the first lenticular element (18) and in an achromatic region (22) by the back surface (36) of the at least one second lenticular element (24), the first back surface region (30) of the first lenticular element (18) having a first tangent (54) at at least one first transition point (40) between the base region (20) and the achromatic region (22) in a first cross-sectional plane (25) of the spectacle lens (10), the back surface (36) of the at least one second element (24) having a second tangent (56) at the at least one first transition point (40) in the first cross-sectional plane (25), **characterized in that** the first tangent (54) and the second tangent (56) intersect one another at a kink angle (58) in the first cross-sectional plane (25), the magnitude of the kink angle (58) being less than 90°.

13. Spectacle lens (10) according to Claim 12, **characterized in that** the spectacle lens (10) has two transition points (40) in the first cross-sectional plane (25), the respective first tangent (54) of the first back surface region (30) and the respective second tangent (56) of the back surface (36) of the at least one second lenticular element (24) interjecting one another at each of the two transition points (40).

14. Spectacle lens (10) according to Claim 12 or 13, **characterized in that** the respective first tangent (54) and the respective second tangent (56) intersect one another in each cross-sectional plane (25) of the spectacle lens (10).

15. Spectacle lens (10) according to one of Claims 12 to 14, **characterized in that** the first lenticular element (18) is arranged in the base region (20) and in the achromatic region (22), a front surface of the spectacle lens (10) being formed from a front surface (16) of the first lenticular element (18), a second back surface region (32) of the first lenticular element (18) and a front surface (34) of the at least one second lenticular element (24) being contiguous in the achromatic region (22), and the front surface and the back surface (36) of the at least one second lenticular element (24) converging on the at least one first transition point (40) in the at least one first cross-sectional plane (25) and forming a wedge edge angle (62) between them.

16. Spectacle lens according to one of Claims 12 to 15, **characterized in that** the achromatic region (22) extends in the first cross-sectional plane (25) from the at least one first transition point (40) to an edge (12) of the spectacle lens (10).

17. Spectacles (130) having a frame (131) and a first and a second spectacle lens (10, 10'), **characterized in that** the first and/or the second spectacle lens (10, 10') is a spectacle lens according to one of Claims 12 to 16, the cross-sectional plane (25) or each cross-sectional plane (25, 47) of the respective spectacle lens (10, 10') containing a boxed centre (140) of the respective spectacle lens (10, 10') and extending as a normal to a plane of the spectacle front (142) of the spectacles (130), the plane of the spectacle front (142) containing the vertical centrelines (136) of the box of the first and second spectacle lenses (10, 10').

**Revendications**

1. Procédé mis en oeuvre sur ordinateur (100) pour le dimensionnement d'un verre de lunette (10) pour un utilisateur (80), dans lequel le verre de lunette (10) comprend un premier élément de lentille (18) et au moins un deuxième élément de lentille (24), dans lequel le premier élément de lentille (18) comprend une surface avant (16) et une surface arrière (28) comprenant une première région de surface arrière (30) et une deuxième région de surface arrière (32), dans lequel l'au moins un deuxième élément de lentille (24) comprend une surface avant (34) et une surface arrière (36), dans lequel la deuxième région de surface arrière (32) du premier élément de lentille (18) et la surface avant (34) du deuxième élément de lentille (24) sont adjacentes l'une à l'autre, dans lequel une surface avant (14) du verre de lunette (10) est formée par la surface avant (16) du premier élément de lentille (18) et une surface arrière (26) du verre de lunette (10), dans une région de base (20), est formée par la première région de surface arrière (30) du premier élément de lentille (18) et dans une région achromatique (22), est formée par la surface arrière (36) de l'au moins un deuxième élément de lentille (24), **caractérisé par** les étapes suivantes :

- définir en premier lieu (104) un premier matériau du premier élément de lentille (18) et un deuxième matériau de l'au moins un deuxième élément de lentille (24),

- déterminer (106) au moins un premier point de transition (40) entre la région de base (20) et la région achromatique (22) sur la surface arrière (26) du verre de lunette (10), dans lequel un premier plan transversal (25) du verre de lunette (10) passe par l'au moins un premier point de transition (40),

- déterminer en premier lieu (108) un angle de contact en coin (62) entre la surface arrière (36) de l'au moins un deuxième élément de lentille (24) et la surface avant (34) de l'au moins un deuxième élément de lentille (24) en l'au moins un premier point de transition (40) dans le premier plan transversal (25) et déterminer un angle de pliage (58) entre une tangente (54) de la première région de surface arrière (30) dans le premier plan transversal (25) en l'au moins un premier point de transition (40) et une tangente (56) de la surface arrière (36) de l'au moins un deuxième élément de lentille (24) dans le premier plan transversal (25) en l'au moins un premier point de transition (40) de manière à ce que, pour l'utilisateur (80), un effet prismatique du verre de lunette (10) dans la région de base (20) en l'au moins un premier point de transition (40) corresponde à un effet prismatique du verre de lunette (10) dans la région achromatique (22) en l'au moins un premier point de transition (40),

- définir en deuxième lieu (110) un quatrième rayon de courbure (64) de la surface arrière (36) de l'au moins un deuxième élément de lentille (24) dans le premier plan transversal (25) au point de transition (40),

- déterminer en deuxième lieu (112) un troisième rayon de courbure (66) de la surface avant (34) de l'au moins un deuxième élément de lentille (24) de l'au moins une deuxième région de surface arrière (32) du premier élément de lentille (18) dans le premier plan transversal (25) au point de transition (40) de manière à ce que, pour un utilisateur (80) du verre de lunette (10), un effet sphérique et un effet astigmatique du verre de lunette (10) dans la région de base (20) au point de transition (40) correspondent à un effet sphérique et à un effet astigmatique du verre de lunette (10) dans la région achromatique (22) au point de transition (40).

2. Procédé mis en oeuvre sur ordinateur selon la revendication 1, **caractérisé en ce que** la surface avant (16) du premier élément de lentille (18) est sphérique et l'étape consistant consiste à définir en premier lieu (104) à définir un premier rayon (70) de la surface avant (16) du premier élément de lentille (18).

3. Procédé mis en oeuvre sur ordinateur selon la revendication 1 ou 2, **caractérisé en ce que** la première région de surface arrière (30) du premier élément de lentille (18) dans la région de base (20) est sphérique et l'étape de définition en premier lieu (104) consiste à définir un deuxième rayon (68) de la première région de surface arrière (30).

4. Procédé mis en oeuvre sur ordinateur selon l'une quelconque des revendications 1 à 3, **caractérisé en ce que**, lors de l'étape consistant à déterminer en premier lieu (108) l'angle de pliage (58), l'angle de pliage (58) est déterminé en fonction du premier matériau, de l'au moins un deuxième matériau, d'une modification prédéterminée de l'aberration chromatique pour l'utilisateur (80) du verre de lunette (10) au point de transition (40), de l'effet prismatique du premier élément de lentille (18) dans le premier plan transversal (25) dans la région de base (20) au point de transition (40), de l'angle d'inclinaison (96) de la surface avant (16) du premier élément de lentille (18) par rapport à un plan normal (92) au premier plan transversal (25) en un point de passage (93) à travers la surface avant (16) du premier élément de lentille (18) d'un rayon principal (86) partant d'un centre de rotation de l'oeil (82) de l'utilisateur (80) et passant par l'au moins un premier point de transition (40), et de l'angle d'inclinaison (98) de la première région de surface arrière (30) par rapport au plan normal (92) en l'au moins un premier point de transition (40).

5. Procédé mis en oeuvre sur ordinateur selon l'une quelconque des revendications 1 à 4, **caractérisé en ce qu'**au moins les étapes consistant à déterminer en premier lieu (108) l'angle de contact en coin (62) et l'angle de pliage (58) et à déterminer en deuxième lieu (112) le troisième rayon de courbure (66) sont effectuées dans une pluralité de plans transversaux différents (25,47) et dans chaque plan transversal (25,47) de la pluralité de plans transversaux (25,47) pour au moins un point de transition (40).

6. Procédé mis en oeuvre sur ordinateur selon l'une quelconque des revendications 1 à 5, **caractérisé en ce que** le verre de lunette (10) est symétrique de rotation par rapport à un axe optique (38) du verre de lunette (10) et les étapes consistant à déterminer en premier lieu (108) l'angle de contact en coin (62) et l'angle de pliage (58) et à déterminer (112) le troisième rayon de courbure (66) ne sont effectuées que dans un plan transversal (25).

7. Procédé mis en oeuvre sur ordinateur selon l'une quelconque des revendications 1 à 6, **caractérisé en ce que** le plan transversal (25) comprend l'au moins un premier point de transition (40) respectif, un centre de rotation de l'oeil (82) de l'utilisateur et un point de perspective nulle (88) sur la surface arrière (26) du verre de lunette (10).

8. Procédé mis en oeuvre sur ordinateur selon l'une quelconque des revendications 1 à 7, **caractérisé en ce qu'**un centre de courbure (37, 38) se situe dans le premier plan transversal (25) de la surface avant (34) de l'au moins un

EP 2 645 154 B1

deuxième élément de lentille (24) et/ou de la surface arrière (36) de l'au moins un deuxième élément de lentille (24) en dehors d'un axe de symétrie (38, 42) de la surface avant (34) de l'au moins un deuxième élément de lentille (24) ou de la surface arrière (36) de l'au moins un deuxième élément de lentille (24).

9.  Procédé mis en oeuvre sur ordinateur selon l'une quelconque des revendications 1 à 8, **caractérisé en ce que** l'au moins un premier point de transition (40) est défini en déterminant une répartition d'une aberration chromatique pour l'utilisateur (80) sur la surface arrière (28) du premier élément de lentille (18) et l'au moins un premier point de transition (40) est défini en un point sur la surface arrière (28) du premier élément de lentille (18), où l'aberration chromatique est inférieure ou égale à une valeur limite d'aberration chromatique prédéterminée.

10.  Procédé (122) de fabrication d'un verre de lunette (10), comportant les étapes consistant à :

- dimensionner (100) le verre de lunette (10) conformément à un procédé pour le dimensionnement d'un verre de lunette (10) pour un utilisateur (80), dans lequel le verre de lunette (10) comprend un premier élément de lentille (18) et au moins un deuxième élément de lentille (24), dans lequel le premier élément de lentille (18) comprend une surface avant (16) et une surface arrière (28) comprenant une première région de surface arrière (30) et une deuxième région de surface arrière (32), dans lequel l'au moins un deuxième élément de lentille (24) comprend une surface avant (34) et une surface arrière (36), dans lequel la deuxième région de surface arrière (32) du premier élément de lentille (18) et la surface avant (34) du deuxième élément de lentille (24) sont adjacentes l'une à l'autre, dans lequel une surface avant (14) du verre de lunette (10) est formée par la surface avant (16) du premier élément de lentille (18) et une surface arrière (26) du verre de lunette (10), dans une région de base (20), est formée par la première région de surface arrière (30) du premier élément de lentille (18) et, dans une région achromatique (22), est formée par la surface arrière (36) de l'au moins un deuxième élément de lentille (24), comportant les étapes consistant à :

• définir en premier lieu (104) un premier matériau du premier élément de lentille (18) et un deuxième matériau de l'au moins un deuxième élément de lentille (24),
• déterminer (106) au moins un premier point de transition (40) entre la région de base (20) et la région achromatique (22) sur la surface arrière (26) du verre de lunette (10), dans lequel un premier plan transversal (25) du verre de lunette (10) passe par l'au moins un premier point de transition (40),
• déterminer en premier lieu (108) un angle de contact en coin (62) entre la surface arrière (36) de l'au moins un deuxième élément de lentille (24) et la surface avant (34) de l'au moins un deuxième élément de lentille (24) en l'au moins un premier point de transition (40) dans le premier plan transversal (25) et déterminer un angle de pliage (58) entre une tangente (54) de la première région de surface arrière (30) dans le premier plan transversal (25) en l'au moins un premier point de transition (40) et une tangente (56) de la surface arrière (36) de l'au moins un deuxième élément de lentille (24) dans le premier plan transversal (25) en l'au moins un premier point de transition (40) de manière à ce que, pour l'utilisateur (80), un effet prismatique du verre de lunette (10) dans la région de base (20) en l'au moins un premier point de transition (40) corresponde à un effet prismatique du verre de lunette (10) dans la région achromatique (22) en l'au moins un premier point de transition (40),
• définir en deuxième lieu (110) un quatrième rayon de courbure (64) de la surface arrière (36) de l'au moins un deuxième élément de lentille (24) dans le premier plan transversal (25) au point de transition (40),
• déterminer en deuxième lieu (112) un troisième rayon de courbure (66) de la surface avant (34) de l'au moins un deuxième élément de lentille (24) de l'au moins une deuxième région de surface arrière (32) du premier élément de lentille (18) dans le premier plan transversal (25) au point de transition (40) de manière à ce que, pour un utilisateur (80) du verre de lunette (10), un effet sphérique et un effet astigmatique du verre de lunette (10) dans la région de base (20) au point de transition (40) correspondent à un effet sphérique et à un effet astigmatique du verre de lunette (10) dans la région achromatique (22) au point de transition (40), et

- réaliser (124) le premier élément de lentille (18),
- réaliser (126) l'au moins un deuxième élément de lentille (24), et
- relier (128) le premier élément de lentille (18) à l'au moins un deuxième élément de lentille (24).

11.  Produit de programme informatique comportant un code de programme qui est conçu pour pour mettre en oeuvre un procédé pour le dimensionnement d'un verre de lunette (10) pour un utilisateur (80), dans lequel le verre de lunette (10) comprend un premier élément de lentille (18) et au moins un deuxième élément de lentille (24), dans lequel le premier élément de lentille (18) comprend une surface avant (16) et une surface arrière (28) comprenant

35

une première région de surface arrière (30) et une deuxième région de surface arrière (32), dans lequel l'au moins un deuxième élément de lentille (24) comprend une surface avant (34) et une surface arrière (36), dans lequel la deuxième région de surface arrière (32) du premier élément de lentille (18) et la surface avant (34) du deuxième élément de lentille (24) sont adjacentes l'une à l'autre, dans lequel une surface avant (14) du verre de lunette (10) est formée par la surface avant (16) du premier élément de lentille (18) et une surface arrière (26) du verre de lunette (10), dans une région de base (20), est formée par la première région de surface arrière (30) du premier élément de lentille (18) et, dans une région achromatique (22), est formée par la surface arrière (36) de l'au moins un deuxième élément de lentille (24), comportant les étapes consistant à :

- définir en premier lieu (104) un premier matériau du premier élément de lentille (18) et un deuxième matériau de l'au moins un deuxième élément de lentille (24),
- déterminer (106) au moins un premier point de transition (40) entre la région de base (20) et la région achromatique (22) sur la surface arrière (26) du verre de lunette (10), dans lequel un premier plan transversal (25) du verre de lunette (10) passe par l'au moins un premier point de transition (40),
- déterminer en premier lieu (108) un angle de contact en coin (62) entre la surface arrière (36) de l'au moins un deuxième élément de lentille (24) et la surface avant (34) de l'au moins un deuxième élément de lentille (24) en l'au moins un premier point de transition (40) dans le premier plan transversal (25) et déterminer un angle de pliage (58) entre une tangente (54) de la première région de surface arrière (30) dans le premier plan transversal (25) en l'au moins un premier point de transition (40) et une tangente (56) de la surface arrière (36) de l'au moins un deuxième élément de lentille (24) dans le premier plan transversal (25) en l'au moins un premier point de transition (40) de manière à ce que, pour l'utilisateur (80), un effet prismatique du verre de lunette (10) dans la région de base (20) en l'au moins un premier point de transition (40) corresponde à un effet prismatique du verre de lunette (10) dans la région achromatique (22) en l'au moins un premier point de transition (40),
- définir en deuxième lieu (110) un quatrième rayon de courbure (64) de la surface arrière (36) de l'au moins un deuxième élément de lentille (24) dans le premier plan transversal (25) au point de transition (40),
- déterminer en deuxième lieu (112) un troisième rayon de courbure (66) de la surface avant (34) de l'au moins un deuxième élément de lentille (24) de l'au moins une deuxième région de surface arrière (32) du premier élément de lentille (18) dans le premier plan transversal (25) au point de transition (40) de manière à ce que, pour un utilisateur (80) du verre de lunette (10), un effet sphérique et un effet astigmatique du verre de lunette (10) dans la région de base (20) au point de transition (40) correspondent à un effet sphérique et à un effet astigmatique du verre de lunette (10) dans la région achromatique (22) au point de transition (40);

lorsque le produit de programme informatique est exécuté sur un dispositif de traitement de données.

**12.** Verre de lunette (10) comportant un premier élément de lentille (18) et un deuxième élément de lentille (24), dans lequel le premier élément de lentille (18) est formé à partir d'un premier matériau et le deuxième élément de lentille (24) est formé à partir d'un deuxième matériau, dans lequel le premier matériau et le deuxième matériau coopèrent au moins partiellement de manière achromatique, dans lequel le premier élément de lentille (18) comprend une surface avant (16) et une surface arrière (28) comprenant une première région de surface arrière (30) et une deuxième région de surface arrière (32), dans lequel l'au moins un deuxième élément de lentille (24) comprend une surface avant (34) et une surface arrière (36), dans lequel la deuxième région de surface arrière (32) du premier élément de lentille (18) et la surface avant (34) du deuxième élément de lentille (24) sont adjacentes l'une à l'autre, dans lequel une surface avant (14) du verre de lunette (10) est formée par la surface avant (16) du premier élément de lentille (18) et une surface arrière (26) du verre de lunette (10), dans une région de base (20), est formée par la première région de surface arrière (30) du premier élément de lentille (18) et, dans une région achromatique (22), est formée par la surface arrière (36) de l'au moins un deuxième élément de lentille (24), dans lequel la première région de surface arrière (30) du premier élément de lentille (18) comprend une première tangente (54) en au moins un premier point de transition (40) entre la région de base (20) et la région achromatique (22) dans un premier plan transversal (25) du verre de lunette (10), dans lequel la surface arrière (36) de l'au moins un deuxième élément (24) comprend une deuxième tangente (56) en l'au moins un premier point de transition (40) dans le premier plan transversal (25), **caractérisé en ce que** la première tangente (54) et la deuxième tangente (56) se coupent l'une l'autre en formant un angle de pliage (58) dans le premier plan transversal (25), dans lequel une valeur de l'angle de pliage (58) est inférieure à 90°.

**13.** Verre de lunette (10) selon la revendication 12, **caractérisé en ce que** le verre de lunette (10) comprend deux points de transition (40) dans le premier plan transversal (25), dans lequel la première tangente respective (54) de la première région de surface arrière (30) et la deuxième tangente respective (56) de la surface arrière (36) de l'au moins un deuxième élément de lentille (24) se coupent l'une l'autre aux deux points de transition (40).

**14.** Verre de lunette (10) selon la revendication 12 ou 13, **caractérisé en ce que** la première tangente respective (54) et la deuxième tangente respective (56) se coupent l'une l'autre dans chaque plan transversal (25) du verre de lunette (10).

**15.** Verre de lunette (10) selon l'une quelconque des revendications 12 à 14, **caractérisé en ce que** le premier élément de lentille (18) est disposé dans la région de base (20) et dans la région achromatique (22), dans lequel une surface avant du verre de lunette (10) est formée d'une surface avant (16) du premier élément de lentille (18), dans lequel une deuxième région de surface arrière (32) du premier élément de lentille (18) et une surface avant (34) de l'au moins un deuxième élément de lentille (24) sont adjacentes l'une à l'autre dans la région achromatique (22), et dans lequel la surface avant et la surface arrière (36) de l'au moins un deuxième élément de lentille (24) se rejoignent en l'au moins un premier point de transition (40) dans l'au moins un premier plan transversal (25) et forment entre elles un angle de contact en coin(62).

**16.** Verre de lunette (10) selon l'une quelconque des revendications 12 à 15, **caractérisé en ce que** la région achromatique (22) s'étend dans le premier plan transversal (25) de l'au moins un premier point de transition (40) jusqu'à un bord (12) du verre de lunette (10).

**17.** Paire de lunettes (130) comportant une monture (131) et des premier et deuxième verres de lunettes (10, 10'), **caractérisé en ce que** le premier et/ou le deuxième verre(s) de lunettes (10, 10') est/sont un/des verre(s) de lunettes selon l'une quelconque des revendications 12 à 16, dans lequel le plan transversal (25) ou chaque plan transversal (25, 47) du verre de lunette respectif (10, 10') contient un centre (140) conforme au système de boîtier du verre de lunette respectif (10, 10') et est normal par rapport à un plan de monture (142) de la paire de lunettes (130), dans lequel le plan de monture (142) contient les lignes verticales (136) du boîtier des premier et deuxième verres de lunettes (10,10').

Fig.1

Fig.2

Fig.3

Fig.4

Fig.5

Fig.6

Fig.7

Fig.8

Fig.9

Fig.10

Fig.11a

Fig.11b

Fig.11c

Fig.11d

Fig.11e

Fig.11f

Fig.12a

40

Fig.12b

Fig.12c

Fig.12d

Fig.12e

Fig.12f

Fig.13a

Fig.13b

Fig.13c

40

Fig.13d

Gesamtprisma [cm/m]

Höhe des Durchstoßpunkts auf der Rückseite [mm]

Fig.13e

Fig.13f

Fig.14a

Fig.14b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 487546 A

**In der Beschreibung aufgeführte Nicht-Patentliteratur**

- Optik und Technik der Brille. **BLENDOWSKE.** Optische Fachveröffentlichung GmbH. 2005

- **W. N. CHARMAN.** Hybrid diffractive-refractive achromatic spectacle lenses. *Ophthal. Physiol. Opt.,* 1994, vol. 14, 389-392